(19) Europäisches Patentamt
European Patent Office
Office européen des brevets

(11) EP 2 002 451 B1

(12) **EUROPEAN PATENT SPECIFICATION**

(45) Date of publication and mention of the grant of the patent:
**26.03.2014 Bulletin 2014/13**

(21) Application number: **07741047.0**

(22) Date of filing: **29.03.2007**

(51) Int Cl.:
***H01B 13/00*** *(2006.01)* ***B29C 41/28*** *(2006.01)*
***C08G 75/20*** *(2006.01)* ***C08J 5/22*** *(2006.01)*
***H01B 1/06*** *(2006.01)* ***H01M 8/02*** *(2006.01)*
***H01M 8/10*** *(2006.01)*

(86) International application number:
**PCT/JP2007/057611**

(87) International publication number:
**WO 2007/114480 (11.10.2007 Gazette 2007/41)**

(54) **METHOD AND APPARATUS FOR PRODUCING SOLID ELECTROLYTE MEMBRANE**

VERFAHREN UND VORRICHTUNG ZUR HERSTELLUNG EINER FESTELEKTROLYTMEMBRAN

PROCÉDÉ ET DISPOSITIF PERMETTANT LA PRODUCTION D'UNE MEMBRANE D'ÉLECTROLYTE SOLIDE

(84) Designated Contracting States:
**DE**

(30) Priority: **30.03.2006 JP 2006092678**
**30.03.2006 JP 2006092679**
**30.03.2006 JP 2006092682**
**30.03.2006 JP 2006092680**

(43) Date of publication of application:
**17.12.2008 Bulletin 2008/51**

(73) Proprietor: **Fujifilm Corporation**
**Minato-ku**
**Tokyo 106-8620 (JP)**

(72) Inventors:
- **MIYACHI, Hiroshi**
**Minami-ashigara-shi, Kanagawa;250-0193 (JP)**
- **TAKEDA, Ryo**
**Minami-ashigara-shi, Kanagawa; 250-0193 (JP)**

(74) Representative: **Grünecker, Kinkeldey,**
**Stockmair & Schwanhäusser**
**Leopoldstrasse 4**
**80802 München (DE)**

(56) References cited:
**WO-A1-2007/007824**
**JP-A- 2003 282 096**
**JP-A- 2004 143 388**
**JP-A- 2005 041 956**
**JP-A- 2005 041 956**
**JP-A- 2005 239 833**
**JP-A- 2005 310 643**
**JP-A- 2007 018 844**

- **DATABASE WPI Week 200581 Thomson Scientific, London, GB; AN 2005-790015 XP002645574, -& JP 2005 310643 A (HONDA MOTOR CO LTD) 4 November 2005 (2005-11-04)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a method and an apparatus for producing a solid electrolyte membrane, in particular, the present invention relates to a method and an apparatus for a solid electrolyte membrane having excellent proton conductivity.

### Background Art

A fuel cell is actively studied as a next-generation way of generating electricity which can help solving the environmental pollution problems and energy problems. The fuel cell has layered cells (also referred to as membrane electrode assembly (MEA)), and the cells are electrically connected in series. The MEA includes an anode and a cathode which are connected through an external circuit, and a solid electrolyte membrane interposed between the anode and the cathode. A major example of a process to generate electromotive force in the MEA is as follows. When hydrogen-containing substances are supplied to the cathode, the hydrogen atoms become protons in the cathode. The protons pass through the solid electrolyte membrane and are bound with oxygen in the anode. Thereby, the electromotive force is generated between the anode and the cathode of the MEA. Such solid electrolyte which generates the protons and conducts them are called a proton conductive material.

As the proton conductive material, many organic polymers are proposed. As compared to inorganic materials, the organic polymers are lighter and have lower and wider range of work temperature, which is temperature expressing high proton conductivity. Due to such features, the organic polymers are expected to be applied in fuel cells for house hold use, automobile use and the like.

As a membrane forming method, there are a melt extrusion method and a solution casting method as well known. In the former method, the membrane is produced without using a solvent. However, a polymer is denatured due to heating, and impurities in the polymer material remain in the membrane. On the other hand, the latter method requires a large sized facility including a producing apparatus of the solution (dope), a solvent recovery device and the like. However, the latter method requires lower heating temperature compared to the former method, and enables to remove the impurities in the polymer material during a process producing the solution. Furthermore, in the latter method, a membrane with superior flatness and smoothness is produced compared to the membrane produced by the former method.

In the solution casting method, as known, a dope containing a polymer and an organic solvent as raw materials is cast onto a support to form a casting membrane, and the casting membrane is peeled from the support as a wet membrane containing the solvent, and thereafter the wet membrane is dried by a drying device to be a membrane. When a solid electrolyte membrane containing the organic solvent is used for a fuel cell, the organic solvent may flow inside the fuel cell, and it will lower power density and durability of the fuel cell. In addition, the organic solvent is often a basic organic compound that has a large polarity and easily works with protons. When a membrane containing the basic organic compound is used as the solid electrolyte membrane, the basic organic compound may inhibit protons from passing through the solid electrolyte membrane, and therefore the proton conductivity of the solid electrolyte membrane is lowered. As a result, the fuel cell using such solid electrolyte membrane cannot exert enough electromotive force. Accordingly, it is necessary to completely remove the organic solvent from the wet membrane in the drying process when the solution casting method is applied. However, many polymers promising as the solid electrolyte dissolve only in compounds having a relatively high boiling point, due to their rigid chemical structure. Therefore, it usually takes more than 20 hours to completely dry the casting membrane or the wet membrane. As a result, time for drying the casting membrane makes up a large share of total time for producing the solid electrolyte membrane. Therefore, the total producing time of the solid electrolyte membrane becomes extremely long. Such long drying time may cause various problems in a continuous line production. For example, a membrane transportation passage is required to be very long. In addition, it takes time to investigate the cause or to respond when any problems occur in the line.

In order to shorten the drying time, the casting membrane or the wet membrane may be dried at high temperatures, or hot gas may be flown in the vicinity of the casting membrane or the wet membrane. According to such methods alone, however, the wet membrane will have drying unevenness on its surface or inside thereof, and therefore the quality and the appearance of the obtained solid electrolyte membrane often become uneven. Occurrence of pinholes, which are localized holes, is an example of the unevenness of the quality and the appearance of the membrane.

Instead of the above methods, drying degree of the casting membrane during a casting membrane drying process may be lowered in order to shorten the drying time. According to this method, however, the casting membrane cannot obtain enough self-supporting property, and therefore the casting membrane cannot be easily peeled off. Even if the casting membrane is peeled off as the wet membrane, the wet membrane will be deformed by its own weight, and will not be transported to the following process. When the solid electrolyte membrane is produced in an on-line method

in which each process is continuously performed, the casting membrane should be peeled off efficiently. In addition, the casting membrane needs to obtain enough self-supporting property in the casting membrane drying process to stand up under its own weight when peeled off as the wet membrane.

In order to produce an organic polymer membrane having excellent quality and heat resistance, for example, Japanese Patent Laid-Open Publication No. 2005-232240 suggests a producing method in which a dope including an acid group-containing polymer is cast, and the casting membrane is dried in temperatures of 110°C to 130°C for 45 min to 60 min and peeled. Japanese Patent Laid-Open Publication No. 2005-235466 suggests a method in which a dope including an acid group-containing polymer is formed into a gel-like membrane by the solution casting method, and the membrane is rinsed in water and dried to be the organic polymer membrane. In order to produce an organic polymer membrane having high proton conductivity, and excellent stability against heat and workability, for example, Japanese Patent Laid-Open Publication No. 2005-248128 suggests a method in which a membrane formed by the solution casting method is immersed in a water-soluble organic compound solution whose boiling point is not less than 100°C to reach equilibrium swelling, and then the membrane is dried.

In order to produce an organic polymer membrane having high proton conductivity and excellent mechanical strength, Japanese Patent Laid-Open Publication No. 2005-310643 suggests a method in which a dope including an ion conducting component is formed into a membrane by the casting method, and the membrane is immersed in a solvent to remove a water-soluble compound and dried. Moreover, Japanese Patent Laid-Open Publication Nos. 2004-079378, 2005-146018 and 2005-239833 propose an organic polymer membrane having high proton conductivity formed from a dope containing predetermined polyarylene by the solution casting method.

In order to produce an organic polymer membrane having high proton conductivity, Japanese Patent Laid-Open Publication No. 2005-268144 suggests a method for forming a membrane from a dope including a polymer having sulfonic acid group. Japanese Patent Laid-Open Publication No. 2005-268145 suggests a method in which a membrane is formed from a dope including a polymer, and thereafter the membrane is sulfonated by performing proton substitution.

The producing methods disclosed in Japanese Patent Laid-Open Publication Nos. 2005-232240, 2005-235466, 2005-248128, 2005-310643, 2004-079378, 2005-146018 and 2005-239833 are for small-scale productions and not for large scale manufactures. Japanese Patent Laid-Open Publication Nos. 2004-079378, 2005-146018 and 2005-239833 cite that the methods enable to produce various kinds of organic polymer membranes by the solution casting method. However, concrete methods are not disclosed. Moreover, Japanese Patent Laid-Open Publication Nos. 2005-268144 and 2005-268145 do not disclose or suggest any concrete methods of large scale manufactures or continuous productions of the membrane.

The method disclosed in Japanese Patent Laid-Open Publication No. 2004-079378 has a problem in that micropores are formed on the membrane by immersing the membrane in the water. As a result, the uniform membrane cannot be obtained. A method for solving the above problem is not disclosed. Furthermore, the above reference cites that various kinds of solid electrolyte membranes can be produced by the solution casting method. However, concrete disclosure is not given. The methods disclosed in Japanese Patent Laid-Open Publication Nos. 2005-232240, 2005-235466 and 2005-146018 do not give any solutions for difficulty of removing the organic solvent having high boiling point from the membrane by drying. Therefore, the methods according to these references take extremely long time for drying the membrane, and it results in decreasing the productivity.

In the methods disclosed in Japanese Patent Laid-Open Publication Nos. 2005-268144 and 2005-268145, the polymer which is a precursor of the solid electrolyte is used to form a precursor membrane, and acid processing is performed to the precursor membrane to be a solid electrolyte membrane. According to these methods, proton dissociation during the membrane production is prevented, and thereby solid electrolyte membranes having high proton conductivity can be produced. However, these references do not particularly disclose the drying.

JP 2005-041956 relates to a coagulation forming process and manufacturing apparatus for porous membranes. WO 2007/007824 describes a solid electrolyte membrane with excellent proton conductivity and a method and apparatus producing the same.

Accordingly, it can be said that a method for mass-producing a solid electrolyte membrane having a small amount of residual solvent and high proton conductivity at short times has not yet established.

An object of the present invention is to provide a method and an apparatus for producing a solid electrolyte membrane with high and uniform proton conductivity which can be mass-produced continuously by performing a membrane drying process efficiently at short times.

The present invention provides the subject matter as defined in claims 1 to 30.

Disclosure of invention

A method for producing a solid electrolyte membrane of the present invention is characterized in that the method comprises the steps of forming a casting membrane by casting a dope containing a solid electrolyte and a solvent, selected from an aromatic hydrocarbon, halogenated hydrocarbon, alcohol, ketone, ester, ether and compounds containing nitrogen, onto a support, wherein said solid electrolyte includes a precursor of said solid electrolyte which is a proton acceptor; peeling said casting membrane from said support as a wet membrane; contacting at least one of said casting membrane and said wet membrane with a contact liquid, selected from purified water or an aqueous solution of the solvent; drying said wet membrane to evaporate said contact liquid from said wet membrane; contacting one surface of said wet membrane including said precursor with a proton solution which is a proton donor, having a proton concentration of not less than 0.05 mol/liter; and washing and drying said wet membrane after the contact with said proton solution.

It is preferable that the solvent is a mixture of a good solvent compound which is a good solvent of the solid electrolyte and a poor solvent compound which is a poor solvent of the solid electrolyte, and the contact liquid is soluble to the good solvent compound and the poor solvent compound.

It is preferable that the method of the present invention further includes an evaporating step. In the evaporating step, part of the solvent is evaporated from the casting membrane before the liquid contacting step. The casting membrane at a time of starting the liquid contacting step preferably contains the good solvent compound and the poor solvent compound.

It is preferable that weight ratio of the poor solvent compound to the solid electrolyte in the casting membrane at the time of starting the liquid contacting step is not less than 2% and less than 100%. The contact liquid is preferably either aqueous solution containing a compound having a lower boiling point than the good solvent compound or water.

It is preferable that time for contacting the casting membrane with the contact liquid is determined in accordance with at least one of hardness of the casting membrane and weight of the good solvent compound in the casting membrane both of which change during the liquid contacting step.

It is preferable that the casting membrane forming step, the liquid contacting step, the peeling step and the drying step are performed as a continuous process. When the evaporating step is performed, the casting membrane forming step, the evaporating step, the liquid contacting step, the peeling step and the drying step are preferably performed as a continuous process.

It is preferable that the contact liquid contains a poor solvent compound which is a poor solvent of the solid electrolyte. The contact liquid is preferably either aqueous solution containing a good solvent compound which is a good solvent of the solid electrolyte or water.

It is preferable that elastic modulus of the wet membrane during the peeling process is not less than $6 \times 10^5$ Pa.

The wet membrane is contacted with a liquid soluble to the solvent, and this liquid is either aqueous solution containing the solvent or water. It is preferable that time for contacting the wet membrane with the liquid is not more than 10 minutes. Moreover, it is preferable that part of the solvent is evaporated from the casting membrane before the contact with the contact liquid.

The solid electrolyte includes a precursor of the solid electrolyte which is a proton acceptor. The wet membrane is contacted with a proton solution which is a proton donor, and the wet membrane is washed and dried after the contact with the proton solution.

The solvent is preferably a mixture of a good solvent compound which is a good solvent of the solid electrolyte and a poor solvent compound which is a poor solvent of the solid electrolyte, and the contact liquid is purified water.

It is preferable that the casting membrane after the contact with the purified water contains less good solvent compound as compared to before the contact. It is preferable that the purified water is contacted with the casting membrane at least by spraying the purified water or by coating the purified water onto the casting membrane.

At least one of the casting membrane after the contact with the purified water and the wet membrane is preferably contacted with a liquid which is soluble to both of the good solvent compound and the poor solvent compound. The liquid is preferably either a mixture of water and the good solvent compound or a mixture of water and the poor solvent compound. It is preferable that a sum of time for contacting the casting membrane with the purified water and time for contacting at least one of the casting membrane and the wet membrane with the liquid is not more than 10 minutes.

The method of the present invention further includes a proton substitution step and a washing and drying step. In the proton substitution step, one surface of the wet membrane including the precursor is contacted with the proton solution having proton concentration of not less than 0.05 mol/liter. In the washing and drying step, the wet membrane after the contact with the proton solution is washed and dried.

It is preferable that the other surface of the wet membrane is contacted with a low-concentration proton solution having the proton concentration lower than the proton solution. The difference of the proton concentration between the proton solution and the low-concentration proton solution is not less than 0.05 mol/liter. Formula weight of anion contained in the proton solution is preferably not less than 40 and not more than 1000. The low-concentration proton solution is preferably a liquid containing anion having formula weight of not less than 40 and not more than 1000 or water.

It is preferable that temperature of the wet membrane at a time of the contact with the proton solution or the low-concentration proton solution is not less than 30°C and not more than glass-transition temperature of the precursor. It is also preferable that temperature of at least one of the proton solution and the low-concentration proton solution is not less than 30°C and not more than glass-transition temperature of the precursor. Furthermore, the proton substitution step and the washing and drying step are preferably performed successively.

It is preferable that the good solvent compound contains dimethylsulfoxide, and the poor solvent compound contains alcohol having one to five carbons. The solid electrolyte is preferably a hydrocarbon polymer. The hydrocarbon polymer is preferably an aromatic polymer having a sulfonic acid group. Moreover, it is preferable that the aromatic polymer is a copolymer formed of structural units represented by general formulae (I), (II) and (III) shown in chemical formula 1.

[Chemical formula 1]

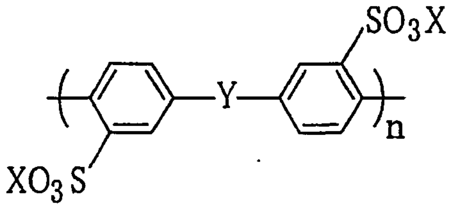
··· ( I )

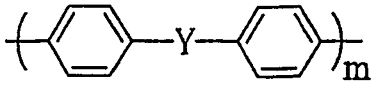
··· ( II )

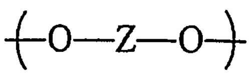
··· ( III )

(X is cation species, Y is $SO_2$, Z has a structure represented in (I) or (II) in a chemical formula 2, n and m satisfy 0.1 ≤ n/(m+n) S 0.5)

[Chemical formula 2]

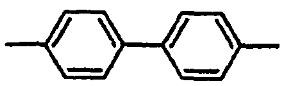
··· ( I )

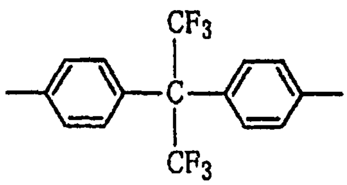
··· ( II )

An apparatus for producing a solid electrolyte membrane of the present invention includes a casting device, a peeling device, a contact liquid contacting device and a drying device. The casting device casts a dope containing a solid electrolyte and a solvent onto a support to form a casting membrane. The peeling device peels the casting membrane from the support as a wet membrane. The contact liquid contacting device contacts at least one of the casting membrane and the wet membrane with a contact liquid. The contact liquid contains a liquid soluble to the solvent or a liquid which is a poor solvent of the solid electrolyte. The drying device dries the wet membrane.

The apparatus of the present invention further includes a proton solution contacting device, a washing device and an after-wash drying device. The proton solution contacting device contacts one surface of the wet membrane including a polymer which is a precursor of the solid electrolyte with a proton solution containing acid which is a proton donor, said proton solution having a proton concentration of not less than 0.05 mol/liter. The washing device washes the wet membrane after the contact with the proton solution. The after-wash drying device dries the wet membrane after the washing.

The apparatus of the present invention further includes a temperature control device for controlling temperature of the proton solution or temperature of the one surface of the wet membrane. The proton solution contacting device preferably includes a low-concentration proton solution contacting device for contacting the other surface of the wet

membrane with a low-concentration proton solution having proton concentration lower than the proton solution having a proton concentration of not less than 0.05 mol/liter. The temperature control device preferably includes another temperature control device for controlling temperature of the low-concentration proton solution or temperature of the other surface of the wet membrane.

A solid electrolyte membrane of the present invention is produced by the above-described method of the present invention.

A membrane electrode assembly of the present invention includes the above-described solid electrolyte membrane, an anode electrode and a cathode electrode. The anode electrode is adhered to one side of the solid electrolyte membrane for generating protons from a hydrogen-containing substance supplied from outside. The cathode electrode is adhered to the other side of the solid electrolyte membrane for synthesizing water from the protons passed through the solid electrolyte membrane and a gas supplied from the outside.

A fuel cell of the present invention includes the above-described membrane electrode assembly and current collectors. The current collectors are attached to the electrodes of the membrane electrode assembly for transmitting electrons between the anode electrode and outside and between the cathode electrode and the outside.

According to the present invention, the solid electrolyte membrane having high and uniform proton conductivity is mass-produced continuously. When the membrane electrode assembly using the solid electrolyte membrane of the present invention is used in the fuel cell, the fuel cell exerts excellent electromotive force.

Brief Description of Drawings

Fig. 1 is a schematic view illustrating a dope producing apparatus;
Fig. 2 is an explanatory view illustrating a first producing process of a solid electrolyte membrane;
Fig. 3 is a schematic view illustrating a first membrane producing apparatus;
Fig. 4 is a schematic view illustrating a second proton substitution chamber;
Fig. 5 is a schematic view illustrating a third proton substitution chamber;
Fig. 6 is a schematic view illustrating a proton substitution device;
Fig. 7 is an explanatory view illustrating a second producing process of the solid electrolyte membrane;
Fig. 8 is a schematic view illustrating a second membrane producing apparatus;
Fig. 9 is a schematic view illustrating a third membrane producing apparatus;
Fig. 10 is a section view of membrane electrode assembly;
and
Fig. 11 is an exploded section view of a fuel cell.

Best Mode for Carrying Out the Invention

A first embodiment of the present invention is described below in detail. First, a solid electrolyte membrane of the present invention is described. Thereafter, a producing method of the solid electrolyte membrane is described.

[Material]

In the present invention, a polymer having a proton donating group or a proton accepting group is used as a solid electrolyte which is a dope material. The polymer having the proton donating group is not particularly limited. Any known polymer used as the proton conductive material having acid residue is preferably used, for instance, polymer compounds formed of addition polymerization having sulfonic acid in side chains, poly (meth) acrylate having side chains of phosphoric acid groups, sulfonated polyether ether ketone which is a sulfonated compound of polyether ether ketone, sulfonated polybenzimidazole, sulfonated polysulfone which is a sulfonated compound of polysulfone, sulfonated compound of heat-resistant aromatic polymer and so forth. As the addition polymerization polymer having sulfonic acid in side chains, there are perfluorosulfonic acid such as typically Nafion (registered trademark), sulfonated polystyrene, sulfonated polyacrylonitrile-styrene, sulfonated polyacrylonitrile butadiene-styrene and the like. As the sulfonated compound of heat-resistant aromatic polymer, there are sulfonated polyimide.

As preferable examples of the perfluorosulfonic acid, the substances disclosed in, for instance, Japanese Patent Laid-Open Publication Nos. 4-366137, 6-231779 and 6-342665 are used. Especially, the substance shown in chemical formula 3 below is preferable. In the chemical formula 3, m is in the range of 100 to 10000, preferably in the range of 200 to 5000, and more preferably in the range of 500 to 2000. In addition, n is in the range of 0.5 to 100, and especially preferably in the range of 5 to 13.5. Furthermore, x is approximately equal to m, and y is approximately equal to n.

[Chemical formula 3]

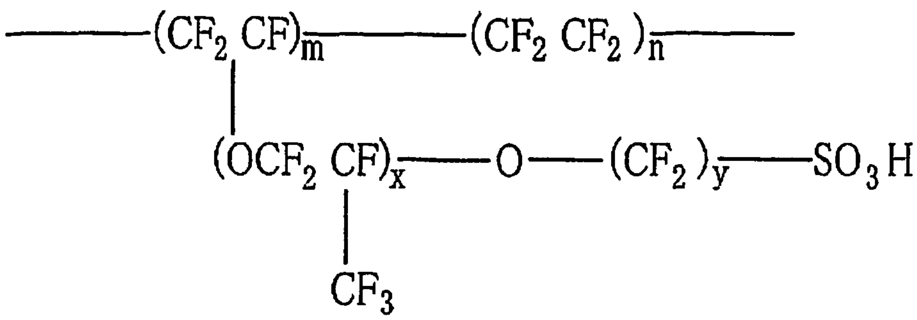

Preferable examples of sulfonated polystyrene, sulfonated polyacrylonitrile-styrene and sulfonated polyacrylonitrile butadiene-styrene are disclosed in Japanese Patent Laid-Open Publication Nos. 5-174856 and 6-111834, and the substance shown below in chemical formula 4.

[Chemical formula 4]

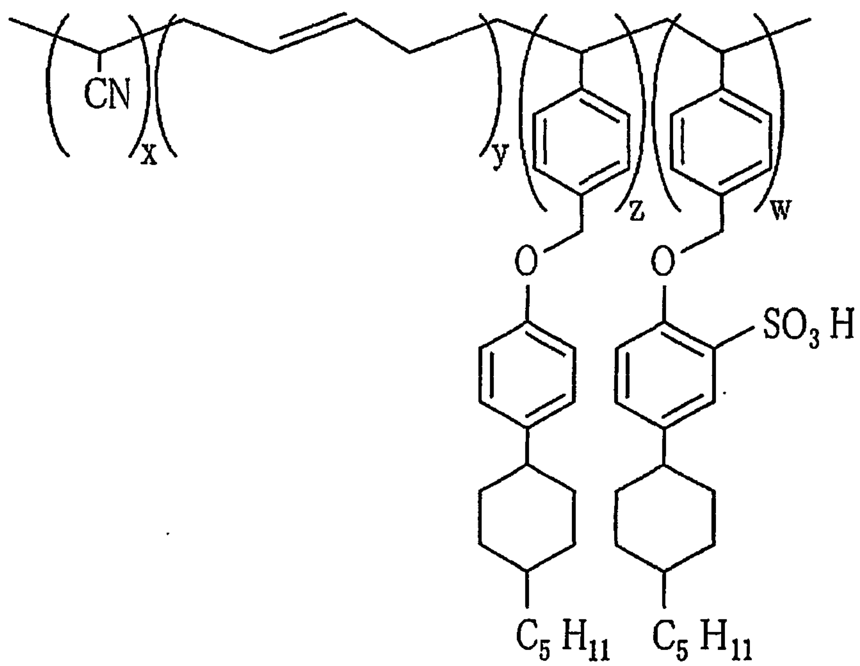

Preferable examples of the sulfonated compound of heat-resistant aromatic polymer are disclosed in, for instance, Japanese Patent Laid-Open Publication Nos. 6-49302, 2004-10677, 2004-345997, 2005-15541, 2002-110174, 2003-100317, 2003-55457, 9-245818, 2003-257451 and 2002-105200, and PCT Publication No. WO/97/42253 (corresponding to Japanese Patent Publication of translated version No. 2000-510511). Among the above, the substances shown in the above chemical formula 1, and those shown in chemical formula 5 and chemical formula 6 below are especially preferable.

[Chemical formula 5]

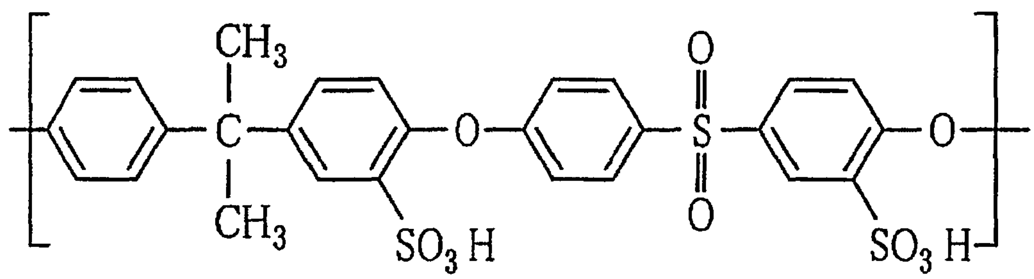

[Chemical formula 6]

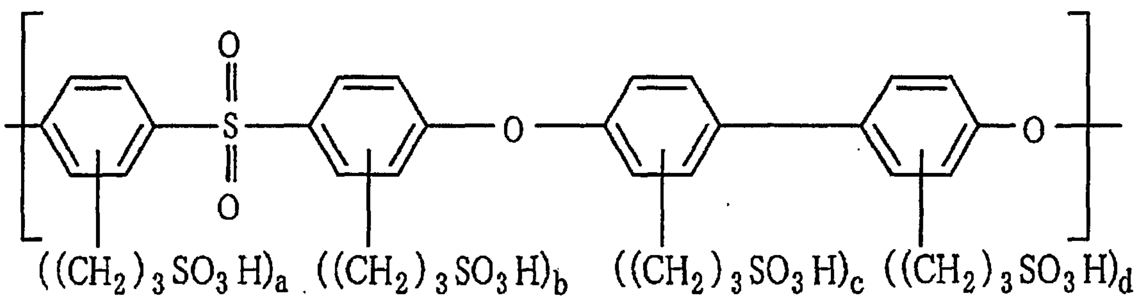

Particularly, in a membrane formed of the substance shown in the chemical formula 1, a membrane expansion coefficient by water absorption is compatible with the proton conductivity. In the case where $n / (m+n) < 0.1$, the amount of the sulfonic acid groups may be too low for forming a path for transporting the protons, that is, the proton channel. As a result, the obtained membrane may not exert the sufficient proton conductivity for a practical use. In the case where $n / (m+n) > 0.5$, the water absorption of the membrane becomes excessively high which results in high membrane expansion coefficient by water absorption. As a result, the membrane is easily degraded.

Even if the membrane is produced with substituting the cation species other than the hydrogen atom H for X in the chemical formula 1, the produced membrane works as the solid electrolyte. Accordingly, the solid electrolyte membrane can be produced from the substance in which X in the chemical formula 1 is the cation species other than H. The solid electrolyte of the present invention includes a case where X in the chemical formula 1 is the cation species other than H. That is, in the solid electrolyte membrane of the present invention, X in the chemical formula 1 can be H or the cation species other than H, when it is not particularly restricted. Same applies to the polymers mentioned before. However, the proton conductivity of the membrane increases as the percentage of the substitution of the hydrogen atom H for X (hereinafter, proton substitution rate) increases. For that reason, it is especially preferable that X is the hydrogen atom H. The cation species is an atom or an atomic group which generates cation (s) at the time of ionization. The ion generated from the cation species may have a valence of one or more. As the cation, proton, alkali-metal cation, alkali earth metal cation and ammonium cation are preferable, and proton, calcium ion, barium ion, quaternary ammonium ion, lithium ion, sodium ion, potassium ion are more preferable.

The sulfonated reaction in the process for obtaining the above compounds is performed through various synthesis methods disclosed in known references. As sulfonating agents, sulfuric acid (concentrated sulfuric acid), fuming sulfuric acid, sulfur trioxide in a gas or liquid, sulfur trioxide complex, amidosulfuric acid, chlorosulfonic acid and the like are used. As the solvent, hydrocarbons (benzene, toluene, nitrobenzene, chlorobenzene, dioxetan), halogenated alkyls (dichloromethane, trichloromethane, dichloroethane, tetrachloromethane) are used. Reaction temperature is determined in the range of -20°C to 200°C according to activity of the sulfonating agent. In addition, it is also possible to use other

methods. For instance, mercapto group, disulfide group and sulfinic acid group are previously introduced to a monomer to synthesize the sulfonated compound by oxidation with an oxidizer. As the oxidizer, hydrogen peroxide, nitric acid, bromine water, hypochlorite, hypobromite, potassium permanganate, or chromic acid are used. As the solvent, water, acetic acid, or propionic acid are used. The reaction temperature in the above method is determined in the range of room temperature (for instance, 25°C) to 200°C depending on the activity of the oxidizer. In another method, halogenoalkyl group is previously introduced to the monomer to synthesize the sulfonated compound by substitution of sulfite, or hydrogen sulfite. As the solvent, water, alcohol, amide, sulfoxide, or sulfone are used. The reaction temperature is determined in the range of room temperature (for instance 25°C) to 200°C. It is also possible to use a mixture of two or more solvents as the solvent for the above sulfonation reaction.

Furthermore, it is also possible to use alkyl sulfonating agent in the reaction process to produce the sulfonated compounds. One of the common methods is Friedel-Crafts Reaction (see Journal of Applied Polymer Science, Vol. 36, 1753-1767, 1988) using sulfone and $AlCl_3$. When the alkyl sulfonating agent is used to carry out the Friedel-Crafts Reaction, the following substances are usable as the solvent: hydrocarbon (benzene, toluene, nitrobenzene, acetophenon, chlorobenzene, trichlorobenzene ), alkyl halide (dichloromethane, trichloromethane, dichloroethane, tetrachloromethane, trichloroethane, tetrachloroethane). The reaction temperature is determined in the range of room temperature to 200°C. It is also possible to use the mixture of two or more solvents.

To produce the solid electrolyte membrane having the structure of the chemical formula 1, a dope containing a polymer whose X in the chemical formula 1 is cation species other than the hydrogen atom H (hereinafter referred to as a precursor) is prepared. The dope is cast onto a support and then peeled off as a membrane containing the precursor (hereinafter referred to as a precursor membrane). It is preferable to produce the solid electrolyte membrane constituted of the polymer having the structure shown in the chemical formula 1 by substituting the hydrogen atom H for the cation species other than H in X (hereinafter referred to as proton substitution). That is, the polymer in which X in the chemical formula 1 is the cation species other than H is a proton accepting polymer. Note that polymers having the proton accepting group such as $-SO_3Na$ among the above mentioned solid electrolyte are also used as the precursor in the present invention.

It is preferable to use the solid electrolyte membrane having the following properties. The proton conductivity is preferably not less than 0.005 S/cm and more preferably not less than 0.01 S/cm at the temperature of, for instance, 25°C, and the relative humidity of, for instance, 70%. Furthermore, the proton conductivity after immersing the membrane in 64 wt.% aqueous methanol solution for one day at the temperature of 18 °C is preferably not less than 0.003 S/cm, and more preferably not less than 0.008 S/cm. In particular, it is preferable that a percentage of reduction in the proton conductivity of the membrane after the immersion compared to that before the immersion is not more than 20%. Methanol diffusivity is preferably not more than $4 \times 10^{-7}$ $cm^2$/sec, and especially preferably not more than $2 \times 10^{-7}$ $cm^2$/sec.

As the strength of the membrane, elastic modulus is preferably not less than 10 MPa, and more preferably not less than 20 MPa. Measuring methods of the elastic modulus are disclosed in a paragraph [0138] of Japanese Patent Laid-Open Publication No. 2005-104148. The above preferable values are obtained by using a tensile testing device produced by Toyo Baldwin Co. Ltd. If other measuring method and/or other tensile testing device are used, correlation between the obtained value and the reference value obtained by using the above tensile testing device should be previously calculated.

As the durability, between before and after a test with time in which the membrane is immersed in 64 wt. % aqueous methanol solution at a constant temperature, a percentage of a change in each of weight, ion exchange capacity and methanol diffusivity is preferably not more than 20%, and more preferably not more than 15%. Further, in a test with time in hydrogen peroxide, the percentage of the change in each of the weight, the ion exchange capacity and the methanol diffusivity is preferably not more than 20%, and more preferably not more than 10%. The volume swelling ratio of the membrane in 64 wt.% aqueous methanol solution at the constant temperature is preferably not more than 10%, and more preferably not more than 5%.

The membrane with stable water absorption ratio and stable moisture content is preferable. It is preferable that the membrane has extremely low solubility in the alcohols, water, or mixture of alcohol and water to the extent that it is practically negligible. It is also preferable that the decrease of the membrane weight and changes in shapes and conditions of the membrane when the membrane is immersed in the above liquid is extremely small to the extent that it is practically negligible.

The proton conductive property of the solid electrolyte membrane is represented by an index which is a ratio of the proton conductivity to the methanol transmission coefficient. The higher the index in a certain direction, the higher the proton conductive property becomes in such direction. In the thickness direction of the solid electrolyte membrane, the proton conductivity increases proportional to the thickness while the methanol permeability increases inversely proportional thereto. Accordingly, the proton conductive property of the solid electrolyte membrane is controlled by changing the thickness. In the solid electrolyte membrane used for the fuel cells, since the anode is provided on one side of the solid electrolyte membrane and the cathode is provided on the other side thereof, it is preferable that the index in the membrane thickness direction is larger than that in other directions. The thickness of the solid electrolyte

membrane is preferably in the range of 10 $\mu$m to 300 $\mu$m. If, for instance, both the proton conductivity and the methanol diffusion coefficient are high in the solid electrolyte, it is especially preferable to produce the membrane with a thickness of 50 $\mu$m to 200 $\mu$m. If, for instance, both the proton conductivity and the methanol diffusion coefficient are low in the solid electrolyte, it is especially preferable to produce the membrane with a thickness of 20 $\mu$m to 100 $\mu$m.

Heat resistant temperature is preferably not less than 200°C, more preferably not less than 250°C and especially preferably not less than 300°C. The heat resistant temperature means the temperature at which a decrease in the membrane weight reaches 5% when the heat is increased at the measure of 1°C/min. The decrease in the membrane weight does not include an amount of moisture and the like evaporated from the membrane.

When the solid electrolyte is formed in the membrane form and used for the fuel cell, the maximum power density thereof is preferably not less than 10 mW/$cm^2$.

By using the above-mentioned solid electrolyte, a solution suitable for the membrane production is produced, and accordingly, the solid electrolyte membrane suitable for producing the fuel cell is produced. The solution suitable for the membrane production is, for instance, a solution whose viscosity is relatively low, and from which foreign matters are easily removed through filtration. The obtained solution is referred to as a dope in the following descriptions.

[Solvent]

As the organic solvent for the dope, an organic compound in which the polymer, that is, the solid electrolyte is dissolved is used. For instance, aromatic hydrocarbon (for instance, benzene, toluene, halogenated hydrocarbon (for instance, dichloromethane, chlorobenzene), alcohol (for instance, methanol, ethanol, n-propanol, n-butanol, diethylene glycol), ketone (for instance, acetone, methyl ethyl ketone), ester (for instance, methyl acetate, ethyl acetate, propyl acetate), ether (for instance, tetrahydrofuran, ethylene glycol monomethyl ether ), and compounds containing nitrogen (N-methylpyrrolidone (NMP), N,N-dimethylformamide (DMF), N,N'-dimethylacetamide (DMAc) and the like), dimethyl surfoxide (DMSO).

As the organic solvent of the dope, it is also possible to use a mixture in which plural substances are mixed. When the mixture is used as the solvent, it is preferable to mix a compound which is the good solvent of the solid electrolyte (hereinafter referred to as good solvent compound) and a compound which is the poor solvent of the solid electrolyte (hereinafter referred to as poor solvent compound). When the dope containing, for example, the precursor having the structure shown in the chemical formula 1 is used to form the solid electrolyte membrane, a mixture of compounds which are a good solvent and a poor solvent of the precursor contained in the dope is preferably used as the organic solvent. A liquid compound and the solid electrolyte or the precursor are mixed such that the solid electrolyte or the precursor constitutes 5 wt.% of the whole weight. Whether the liquid compound used is the poor solvent compound or the good solvent compound of the solid electrolyte or the precursor is determined by the amount of the insoluble residues. The good solvent compound of the solid electrolyte in which the solid electrolyte is dissolved has a relatively high boiling point compared to the commonly used compounds. On the other hand, the poor solvent compound has a relatively low boiling point compared to the commonly used compounds. Accordingly, by mixing the poor solvent compound to the good solvent compound, the boiling point of the mixture in which the solid electrolyte is dissolved is lowered. As a result, efficiency and effect in removing the solvent during the membrane production process is improved. In particular, the drying efficiency of the casting membrane is significantly improved.

In the mixture of the good solvent compound and the poor solvent compound, their component ratio is not particularly limited as long the polymer is dissolved in the mixture.

As the good solvent compound, DMF, DMAc, DMSO and NMP are preferable. Among the above, DMSO is especially preferable in terms of safety and relatively low boiling point. As the poor solvent compound, lower alcohol having 1 to 5 carbons, methyl acetate and acetone are preferable. Among the above, the lower alcohol having 1 to 3 carbons are more preferable. If the DMSO is used as the good solvent compound, methyl alcohol is especially preferable in terms of excellent solubility in the DMSO.

To improve various membrane properties of the solid electrolyte membrane, additives are added to the dope. As the additives, antioxidant agents, fibers, fine particles, water absorbing agents, plasticizers, solubilizers are used. A ratio of the additives is preferably in the range of 1 wt.% to 30 wt.% when the whole solid component in the dope is 100 wt.%. The additives and its mixing ratio should not adversely affect the proton conductivity. Hereinafter, the additives will be concretely described.

As the antioxidant agents, for instance, (hindered) phenol-type compounds, monovalent or divalent sulfur-type compounds, trivalent phosphorus-type compounds, benzophenone-type compounds, benzotriazole-type compounds, hindered amine-type compounds, cyanoacrylate-type compounds, salicylate-type compounds, oxalic acid anilide-type compounds are preferably used. In particular, compounds disclosed in Japanese Patent Laid-Open Publication Nos. 8-53614, 10-101873, 11-114430 and 2003-151346 are preferably used.

As the fibers, for instance, perfluorocarbon fibers, cellulose fibers, glass fibers and polyethylene fibers are preferably used. In specific, the fibers disclosed in Japanese Patent Laid-Open Publication Nos. 10-312815,

2000-231938, 2001-307545, 2003-317748, 2004-63430 and 2004-107461 are used.

As the fine particles, for instance, titanium oxide and zirconium oxide are preferably used. In specific, the fine particles disclosed in Japanese Patent Laid-Open Publication Nos. 2003-178777 and 2004-217931 are preferably used.

As the water absorbers, that is, the hydrophilic substances, for instance, cross-linked polyacrylate salt, starch-acrylate salt, poval (polyvinyl alcohol), polyacrylonitrile, carboxymethyl cellulose, polyvinyl pyrrolidone, polyglycol dialkyl ether, polyglycol dialkyl ester, synthetic zeolite, titania gel, zirconia gel, and yttria gel are preferably used. In specific, the water absorbers disclosed in Japanese Patent Laid-Open Publication Nos. 7-135003, 8-20716 and 9-251857 are preferably used.

As the plasticizers, for instance, phosphoric acid ester-type compound, chlorinated paraffin, alkyl naphthalene-type compound, sulfone alkylamide-type compound, oligo ether group, and aromatic nitrile group are preferably used. In specific, the plasticizers disclosed in Japanese Patent Laid-Open Publication Nos. 2003-288916 and 2003-317539 are preferably used.

As the solubilizers, substances whose boiling points or sublimation points are not less than 250°C are preferable, and those not less than 300°C are more preferable.

The dope may contain various kinds of polymers for the purpose of (1) enhancing the mechanical strength of the solid electrolyte membrane, and (2) increasing the acid concentration in the solid electrolyte membrane.

A polymer whose molecular weight is approximately in the range of 10000 to 1000000 and soluble to the solid electrolyte is suitable for the purpose of (1). For instance, perfluoropolymer, polystyrene, polyethyleneglycol, polyoxetane, polyether ketone, polyether sulfone, and the polymers containing two or more structural repeating units of the above polymers are preferable. It is preferable to add the above substances to the dope in the range of 1 wt.% to 30 wt.% to the whole weight of the solid electrolyte membrane. It is also possible to improve the solubility of the above polymer in the solid electrolyte by adding the solubilizer. As the solubilizer, the substance with the boiling point or the sublimation point of not less than 250°C is preferable, and that not less than 300°C is more preferable.

A polymer having proton acid segment is preferable for the purpose of (2). As such polymer, for instance, perfluorosulfonic acid polymer such as Nafion (registered trademark), sulfonated polyether ether ketone having a phosphoric acid group in the side chain, sulfonated heat-resistant aromatic polymer compounds such as sulfonated poly ether sulfone, sulfonated polysulfone, sulfonated polybenzimidazole are used. Furthermore, it is preferable to add the above substances to the dope in the range of 1 wt.% to 30 wt.% to the whole weight of the solid electrolyte membrane.

When the obtained solid electrolyte membrane is used for the fuel cell, it is possible to add an active metal catalyst to the dope for promoting redox reaction of the anode fuel and the cathode fuel. Since the fuel permeated into the solid electrolyte from one of the electrodes is consumed therein without reaching the other electrode, the crossover phenomenon is prevented. Active metal catalyst is not particularly limited as long as it functions as the catalyst for the electrodes. However, platinum or platinum based alloy is especially suitable.

Hereinafter, a dope used for producing a membrane of the present invention is explained. Fig. 1 illustrates a dope producing apparatus 10 of the present invention. A dope producing method using the precursor of the solid electrolyte as the polymer is explained as an example. This dope producing method can be applied when the solid electrolyte is used as the polymer.

The dope producing apparatus 10 is constituted of a solvent tank 11, a hopper 12, an additive tank 15, a mixing tank 17, a heating device 18, a temperature controlling device 21, a first filtration device 22, a flash device 26, and a second filtration device 27. The solvent tank 11 stores an organic solvent 11a. The hopper 12 supplies a precursor 12a of the solid electrolyte. The additive tank 15 stores the additive. The mixing tank 17 mixes the organic solvent 11a, the precursor 12a and the additive to form a liquid mixture 16. The heating device 18 heats the liquid mixture 16. The temperature controlling device 21 controls the temperature of the heated liquid mixture 16. Thereafter, the first filtration device 22 filters the liquid mixture 16 to be a dope 24. After the filtration, the flash device 26 controls the concentration of the dope 24. Then the second filtration device 27 filters the dope 24. The dope producing apparatus 10 further includes a recovery device 28 and a refining device 29. The recovery device 28 recovers the solvent vaporized in the flash device 26. The refining device 29 refines the recovered solvent. The dope producing apparatus 10 is connected to a membrane producing apparatus 33 via a stock tank 32. Valves 36 to 38 for controlling a liquid feeding amount, and pumps 41 and 42 for feeding the liquid are provided in the dope producing apparatus 10. The positions and the number of the valves and the pumps are properly changed.

The dope 24 is produced in the following method when the dope producing apparatus 10 is used. First, the valve 37 is opened to feed the organic solvent 11a from the solvent tank 11 to the mixing tank 17. Next, the precursor 12a in the hopper 12 is fed to the mixing tank 17. The precursor 12a may be continuously fed to the mixing tank 17 through a supplying device which continuously measures and supplies the precursor 12a, or intermittently fed to the mixing tank 17 through a supplying device which measures and supplies the precursor 12a by a predetermined amount. Furthermore, the valve 36 is adjusted to feed a necessary amount of additive solution from the additive tank 15 to the mixing tank 17.

Other than feeding the additive in the form of solution, for instance, in the case the additive is liquid at room

temperature, the additive can be fed to the mixing tank 17 in the liquid form. Furthermore, in the case the additive is solid, it is possible to use a hopper and the like to feed the additive to the mixing tank 17. To add several additives, it is possible to dissolve several additives in a solution and put the solution in the additive tank 15. It is also possible to use plural additive tanks. Each of the additive tanks is filled with the solution containing a different additive. Each solution may be separately fed to the mixing tank 17 through a pipe independent from each other.

In the above description, the organic solvent 11a, the precursor 12a and the additive are put into the mixing tank 17 in this order; however, the order is not limited to the above. For instance, a preferable amount of the organic solvent 11a is fed to the mixing tank 17 after feeding the precursor 12a to the mixing tank 17. Furthermore, it is not necessary to mix the additive in the mixing tank 17 together with the precursor 12a and the organic solvent 11a. The additive may be mixed to the mixture of the precursor 12a and the organic solvent 11a by using an inline-mixing method in a later process.

A jacket 46, a first stirrer 48 rotated by a motor 47, and a second stirrer 52 rotated by a motor 51 are provided to the mixing tank 17. The jacket 46 wraps around the mixing tank 17 to supply a heat transfer medium in a space between the mixing tank 17 and the jacket 46. The temperature inside the mixing tank 17 is controlled by the heat transfer medium flowing in the space between the tank 17 and the jacket 46. A preferable temperature range inside the mixing tank 17 is from -10°C to 55°C. The liquid mixture 16, in which the precursor 12a is swelled in the organic solvent 11a, is obtained by properly selecting and rotating the first and second stirrers 48 and 52. It is preferable that the first stirrer 48 has an anchor blade, and the second stirrer 52 has an eccentric stirrer of a dissolver type.

Next, the liquid mixture 16 is transported to the heating device 18 through the pump 41. It is preferable that the heating device 18 is a pipe (not shown), through which the liquid mixture 16 passes, with a jacket (not shown). The heat transfer medium passes through a space between the pipe and the jacket. Furthermore, the heating device 18 preferably has a pressurizing section (not shown) to apply pressure to the liquid mixture 16. Thereby, the solid component in the liquid mixture 16 is dissolved effectively and efficiently while the liquid mixture 16 is heated and/or pressurized. Hereinafter, the method for dissolving the solid component in the organic solvent 11a by heating is referred to as a heat-dissolution method. In the heat-dissolution method, the liquid mixture 16 is preferably heated to reach the temperature in the range of 60°C to 250°C.

Instead of the heat-dissolution method, a cooling-dissolution method may be used for dissolving the solid component in the organic solvent 11a. In the cooling-dissolution method, the liquid mixture 16 is preferably cooled in the range of -100°C to -10°C. It becomes possible to sufficiently dissolve the precursor 12a in the organic solvent 11a by properly selecting one of the heat-dissolution method and the cooling-dissolution method.

The temperature of the liquid mixture 16 is adjusted by the temperature controlling device 21 to reach approximately room temperature. Thereafter, the liquid mixture 16 is filtered through the first filtration device 22 to remove the foreign matters such as the impurities and the agglomeration to be the dope 24. An average pore diameter of the filter of the first filtration device 22 is preferably 10 $\mu$m or less. When the pore diameter of the filter is too small, the dope filtration may take too long, therefore the average pore diameter is appropriately changed in consideration of the total producing time of the solid electrolyte membrane, and the like.

After the filtration, the dope 24 is transported to the stock tank 32 through the valve 38 and temporarily stored, and then used for producing the membrane.

However, the above-described method, in which the solid component is swelled and then dissolved into the solvent to make the solution, requires a longer time as the concentration of the precursor 12a in the solution increases, which reduces the production efficiency. In such case, it is preferable to prepare a dope with a lower concentration of the precursor 12a, and then to carry out a concentration process to obtain the intended concentration. For instance, the dope 24 filtered through the first filtration device 22 is transported to the flash device 26 through the valve 38, and a part of the organic solvent 11a contained in the dope 24 is evaporated to concentrate the dope 24. The concentrated dope 24 is transported from the flash device 26 to the second filtration device 27 through the pump 42. At the filtration, the temperature of the dope 24 is preferably from 0°C to 200°C. The impurities of the dope 24 are removed through the second filtration device 27. Thereafter, the dope 24 is transported to and temporarily stored in the stock tank 32, and then used for the membrane production. Note that foams may be formed in the concentrated dope 24. It is preferable to perform processing to remove the foams prior to transporting the concentrated dope 24 to the second filtration device 27. It is possible to apply known methods such as an ultrasonic irradiation method in which the ultrasound is irradiated to the dope 24 for removing the foams.

Furthermore, the solvent vapor generated by the flash evaporation in the flash device 26 is condensed to liquid and recovered by the recovery device 28 having a condenser (not shown). The recovered solvent is refined as the solvent to be used for the dope production in the refining device 29 and reused. Such recovery and refining are advantageous to reduce production cost and also prevent adverse effects on human health and environment by virtue of the closed system.

When impurities such as coarse particles or foreign matters are contained in the dope 24, the solid electrolyte membrane produced from such dope 24 will decrease the proton conductivity, or the membrane itself is degraded. It is

therefore preferable to filtrate the dope 24 by using the filtration device at least once during the process of producing the dope 24. Note that the positions and the number of the filtration device in the dope producing apparatus 10, and the number of the filtration of the dope are not especially limited, but may be decided as necessary.

By using the above method, the dope 24 whose concentration of the precursor 12a is in the range of not less than 5 wt.% and not more than 50 wt.% to the total weight of the dope 24 is produced. The concentration of the precursor 12a is more preferably in the range of not less than 10 wt.% and not more than 40 wt.% to the total weight of the dope 24. Furthermore, the concentration of the additive is preferably in the range of not less than 1 wt.% and not more than 30 wt.% when the whole solid component contained in the dope 24 is considered to be 100 wt.%. Whether the solid component is dissolved in the organic solvent 11a or not is visually identified by emitting light from a fluorescent lamp to the filtrated dope 24.

[Solid Electrolyte Membrane Producing Process]

Hereinafter, the method for producing the solid electrolyte membrane of the present invention is explained. Fig. 2 illustrates a flow chart of a process 60 for producing the solid electrolyte membrane of the present invention. Note that only an outline of the flow chart is explained here, and each process will be described in detail with referring to other figures.

The solid electrolyte membrane producing process 60 has 2 flows. One is a first flow shown by an arrow line (a) and the other is a second flow shown by an arrow line (b). The first flow shows a case where the polymer component of the dope is the precursor having the cation species other than the hydrogen atom H. The second flow shows a case where the polymer component of the dope is the solid electrolyte or the precursor, which does not require the proton substitution because, for example, the precursor has enough proton conductivity as the solid electrolyte.

The solid electrolyte membrane producing process 60 has a casting membrane forming process 63 for forming a casting membrane 61 from the dope 24 (see Fig. 1), a casting membrane drying process 65 for drying the casting membrane 61, and a liquid contacting process 66 for contacting the casting membrane 61 with a contact liquid soluble in the organic solvent of the dope.

The first flow has a peeling process 68 to peel the casting membrane 61 from a support as a wet precursor membrane 67, a liquid removing process 71 for roughly removing the contact liquid used in the liquid contacting process 66 from surfaces of the wet precursor membrane 67, a first drying process 72 for drying the wet precursor membrane 67, a proton substitution process 73 for contacting the wet precursor membrane 67 with a proton solution containing acid as a proton donor, a washing process 76 for washing the wet precursor membrane 67 with water and the like, and a second drying process 78 for drying the wet precursor membrane 67 to be a solid electrolyte membrane 77. In the proton substitution process 73, the acid as the proton donor, and the precursor contained in the wet precursor membrane 67 are reacted, thereby the hydrogen atom is substituted for the cation species contained in the precursor. In this way, a wet membrane containing the contact liquid, the solvent and the solid electrolyte is obtained (hereinafter, this wet membrane is referred to as undried solid electrolyte membrane). In the second drying process 78, the remaining solvent in the undried solid electrolyte membrane is sufficiently removed together with the contact liquid, and thus the solid electrolyte membrane 77 is obtained.

In the second flow, on the other hand, the casting membrane 61 is peeled from the support as a wet solid electrolyte membrane 79 in the peeling process 68. After going through the liquid removing process 71 and the first drying process 72 in the same manner as the first flow, the wet solid electrolyte membrane 79 becomes the solid electrolyte membrane 77 by the second drying process 78.

[Solid Electrolyte Membrane Producing Apparatus]

Fig. 3 shows the membrane producing apparatus 33 which performs the first flow. The membrane producing apparatus 33 is one example of the present invention and does not limit the present invention.

The membrane producing apparatus 33 is connected to the dope producing apparatus 10 via the stock tank 32. The stock tank 32, in which the prepared dope 24 is stored, is provided with a stirrer rotated by a motor. The stirrer rotates constantly, and thereby precipitation and agglomeration of the solids in the dope 24 are prevented. The dope 24 is kept uniform by the rotation of the stirrer. It is possible to add various additives to the dope 24 while the dope 24 is being stirred.

The membrane producing apparatus 33 is provided with a casting chamber 80, a transporting chamber 82, a liquid bath 83, a tenter device 85, a proton substitution chamber 86, a drying chamber 87, a moisture controlling chamber 88, and a winding device 90. In the casting chamber 80, the dope 24 is cast onto the support to form the casting membrane 61. The transporting chamber 82 includes the casting chamber 80. In the transporting chamber 82, the casting membrane 61 is dried by casting membrane drying devices 81 provided in the proximity of a transportation passage of the casting membrane 61. In the liquid bath 83, the liquid contacting process 66 (see Fig. 2) is performed to either the casting membrane 61 or the wet precursor membrane 67 which is the casting membrane 61 after being peeled from the support.

In the tenter device 85, the first drying process 72 (see Fig. 2) is performed. In the proton substitution chamber 86, the proton substitution process 73 (see Fig. 2) and the washing process 76 (see Fig. 2) are performed. In the drying chamber 87, the second drying process 78 (see Fig. 2) is performed. The moisture controlling chamber 88 has humidity adjusting function. The winding device 90 winds the solid electrolyte membrane 77 into a roll form.

The casting chamber 80 is provided with a casting die 93 for casting the dope 24, and a belt 94 as the support of the dope 24. The belt 94 provided below the casting die 93 is bridged across rollers 97 and 98, and is continuously transported in the casting chamber 80, the transporting chamber 82, and the liquid bath 83 by the driving and rotating of at least one of the rollers 97 and 98.

A precipitation hardened stainless steel is preferable for the material of the casting die 93. The material preferably has a coefficient of thermal expansion at most $2 \times 10^{-5}$ ($°C^{-1}$). Moreover, the material with almost equivalent anti-corrosion properties as SUS316 in corrosion examination in electrolyte solution can also be used. Furthermore, the material having the anti-corrosion properties which do not form pitting (holes) on the gas-liquid interface after having been soaked in a liquid mixture of dichloromethane, methanol and water for three months is preferable. It is preferable to manufacture the casting die 93 by grinding the material which passed more than a month after casting. Thereby, the dope 24 flows inside the casting die 93 uniformly. Accordingly, streaks and the like in the casting membrane 61 are prevented, as will be described later. It is preferable that the finish precision of a contacting surface of the casting die 93 to the dope 24 is 1 $\mu$m or less of the surface roughness and the straightness is 1 $\mu$m/m or less in any direction. Clearance of a slit of the casting die 93 is automatically controlled in the range of 0.5 mm to 3.5 mm. A portion of lip ends of the casting die 93 contacting the dope is processed so as to have a constant chamfered radius R at 50 $\mu$m or less throughout the width of the casting die 93. Preferably, the casting die 93 is of a coat-hanger type.

A width of the casting die 93 is not limited. However, the width of the casting die 93 is preferably in the range between 1.1 times and 2.0 times larger than a width of the solid electrolyte membrane 77 as an end product. Furthermore, it is preferable to install a temperature controlling device to the casting die 93 for maintaining a predetermined temperature of the dope 24 being cast. Furthermore, the casting die 93 is preferably provided with bolts (heat bolts) at predetermined intervals in the width direction of the casting die 93, and an automatic thickness control mechanism which adjusts clearance of the slit by using the heat bolts. It is preferable to set a profile according to the flow volume of the pump 95 based on a previously set program. To accurately control the amount of the dope 24 to be transported, the pump 95 is preferably a high-precision gear pump. Furthermore, in the membrane producing apparatus 33, it is also possible to carry out a feedback control over the automatic thickness control mechanism based on an adjustment program according to a profile of a thickness gauge, for instance, an infrared thickness gauge (not shown). The casting die 93 whose slit opening of the lip ends is adjustable within the range of $\pm$ 50 $\mu$m is preferably used so as to maintain a difference in the thickness between two arbitrary positions on the solid electrolyte membrane 77 not more than 1 $\mu$m except for the side edges of the solid electrolyte membrane 77 as the end product.

It is more preferable that the lip ends of the casting die 93 are provided with a hardened layer. Methods for forming the hardened layer are not particularly limited. For instance, there are methods such as ceramic coating, hard chrome plating, and nitriding treatment. If the ceramic is used as the hardened layer, the ceramic which is grindable but not friable, with a lower porosity and the good corrosion resistance, and no affinity and no adherence to the dope 24 is preferable. For instance, as the ceramic, tungsten carbide (WC), $Al_2O_3$, TiN, $Cr_2O_3$ and the like can be used, and especially WC is preferable. A WC coating is performed in a thermal spraying method.

The dope 24 discharged to the lip ends of the casting die 93 is partially dried and becomes solid. In order to prevent such solidification of the dope 24, a solvent supplying device (not shown) for supplying the solvent to the lip ends is preferably disposed in the proximity of the lip ends. The solvent is preferably supplied in a peripheral area of a three-phase contact line on which the lip ends contact with a casting bead and the outside air. It is preferable to supply the solvent in the range of 0.1 mL/min to 1.0 mL/min to each of the bead edges so as to prevent the foreign matters such as impurities precipitated from the dope 24 or those outside the dope 24 from being mixed in the casting membrane 61. It is preferable to use a pump with a pulsation of 5% or less for supplying the solvent.

The width of the belt 94 is not particularly limited. However, the width is preferably in the range of 1.1 times to 2.0 times larger than the casting width of the dope 24. Furthermore, the length of the belt 94 is preferably 20 m to 200 m. The thickness of the belt 94 is preferably 0. 5 mm to 2.5 mm. Furthermore, the belt 94 is preferably polished such that the surface roughness is 0.05 $\mu$m or less.

Material of the belt 94 is not particularly limited, but may be, for example, an inorganic material such as stainless material or a plastic film made from organic material. The material of the plastic film is preferably nonwoven plastic fabric made of polyethylene terephthalate (PET) film, polybutylene terephthalate (PBT) film, nylon 6 film, nylon 6,6 film, polypropylene film, polycarbonate film, polyimide film and the like. The belt 94 of a long length is preferable. It is preferable that the belt 94 has chemical stability against the solvent used. It is also preferable that the belt 94 is heat-resistant to endure the temperature during the membrane production. It is necessary that the used plastic film is insoluble to the solvent in the dope 24. In this embodiment, the PET film is used as the belt 94.

A passage (not shown) for the heat transfer medium is formed in each of the rollers 97 and 98. The temperatures

of the rollers 97 and 98 are kept at predetermined values by passing the heat transfer media kept at the predetermined temperatures through the passages. Owing to this, surface temperature of the belt 94 is kept at the predetermined temperature. The surface temperature of the belt 94 is properly set according to the type of the solvent, the type of the solid component, the concentration of the dope 24 and so forth.

Instead of the rollers 97 and 98, and the belt 94, it is also possible to use a casting drum (not shown) as the support. In this case, it is preferable that the casting drum rotates with a high precision such that the variation in the rotation speed is 0.2% or less. It is preferable that an average surface roughness of the casting drum is 0.01 $\mu$m or less. It is preferable that the surface of the casting drum is hard chrome-plated which offers sufficient resistance and hardness. It is preferable to minimize the surface defect of the casting drum, the belt 94, and the rollers 97 and 98. Concretely, the number of pinholes whose diameter is 30 $\mu$m or more is preferably zero. The number of pinholes whose diameter is not less than 10 $\mu$m and less than 30 $\mu$m is preferably 1 or less per 1 $m^2$. The number of pinholes whose diameter is less than 10 $\mu$m is preferably 2 or less per 1 $m^2$.

A decompression chamber (not shown) is provided in an upstream area from the casting bead. The casting bead is a ribbon-shaped portion of the dope 24 formed between the casting die 93 and the belt 94. The expression "the upstream area from the casting bead" indicates an area upstream from the casting bead in the moving direction of the belt 94. The decompression chamber keeps a pressure at the upstream area from the casting bead lower than a pressure at a downstream area from the casting bead.

The casting membrane drying devices 81 blow air to the proximity of the casting membrane 61 to evaporate the organic solvent contained in the casting membrane 61. In order to prevent the air from damaging the surface of the casting membrane 61, an air shielding plate may be provided to the casting membrane drying devices 81.

In the casting chamber 80, a temperature controlling device (not shown) is provided to keep the temperature inside the casting chamber 80 at the predetermined value. The transporting chamber 82 may be divided into plural sections in the transporting direction of the casting membrane 61, and the temperature of each section may be independently controlled by a temperature controller (not shown) provided in each section. For this configuration, the casting membrane 61 can be gradually dried, and shape variation such as wrinkles and slacks of the casting membrane 61 due to a rapid evaporation of the solvent can be prevented. The temperature of the atmosphere in the transporting chamber 82 is preferably not less than 30°C and not more than 60°C, and the temperature of the atmosphere in the casting chamber 80 is preferably not less than -10°C and not more than 57°C. The casting chamber 80 and the transporting chamber 82 are each provided with a condenser (not shown) for recovering the solvent vapor from the casting membrane 61 and a recovery device (not shown) for recovering the condensed and liquefied organic solvent.

A filtration device 96 is provided as well as the pump 95 between the stock tank 32 and the casting die 93. The dope 24 is filtered through the filtration device 96 so as to remove foreign matters whose particle size is larger than a predetermined size and those in gel-form. In order to remove the foreign matters, the diameter of the filter used in the filtration device 96 is preferably 10 $\mu$m or less.

The liquid bath 83 provided downstream from the transporting chamber 82 stores a contact liquid 100 to which the casting membrane 61 is contacted. A peel roller 101 is provided in the liquid bath 83 so that the casting membrane 61 is peeled off from the belt 94 in the contact liquid 100. The liquid bath 83 may be provided with a liquid circulation and purification device (not shown). The liquid circulation and purification device recovers the contact liquid 100 from the liquid bath 83. After the purification of the contact liquid 100, the liquid circulation and purification device sends the contact liquid 100 back to the liquid bath 83. The contact liquid 100 is substituted for the solvent in the casting membrane 61 (hereinafter referred to as solvent substitution), and turns the casting membrane 61 into gel-form. In this specification, get-form means a state that the casting membrane becomes hard. At this time, the solvent and the contact liquid 100 are sustained in molecular chains of the precursor and lose their fluidity. In this way, the casting membrane 61 obtains a self-supporting property by the gelation.

[Contact Liquid]

A liquid soluble to the solvent is used as the contact liquid 100. With the use of such contact liquid 100, the solvent contained in the casting membrane 61 is effectively and efficiently substituted, and thereby accelerating the speed of the gelation. Owing to this, time required for the liquid contacting process 66 can be shortened and the length of the transportation passage in the liquid bath 83 can be shortened. It is also preferable that the contact liquid 100 has a lower boiling point than the good solvent compound of the dope 24. When the boiling point of the contact liquid 100 is lower than the good solvent compound, the first and second drying steps 72 and 78 are performed effectively and efficiently.

When the solvent of the dope 24 is a mixture, a liquid soluble to the solvent component which satisfies at least one of the following conditions is preferable as the contact liquid 100: (1) the solvent component has the highest boiling point in the mixture, (2) the solvent component has the highest affinity with the precursor in the mixture, and (3) the solvent component has the highest proportion in the mixture. When the dope 24 is a mixture of the good solvent compound

and the poor solvent compound, a liquid soluble to both of the good and poor solvent compounds is preferably used as the contact liquid 100. When DMSO and methyl alcohol are used as the solvent components, water is preferably used as the contact liquid 100.

It is preferable that the water used as the contact liquid 100 does not include impurities. The contact liquid 100 including impurities is not preferable because the impurities may remain in the produced solid electrolyte membrane, and it lingers time for gelating the polymer as compared to water not including the impurities.

Purified water is especially preferable as the contact liquid 100. Instead of the purified water, a solution in which the organic compound is dissolved in the purified water may be used. That is, aqueous solution of the solvent component of the dope, and above all, aqueous solution of the compound which is the good solvent of the precursor is preferable.

Any one of the good solvent compound and the poor solvent compound in the dope 24, and a compound of other solvents may be the organic compound. As the aqueous solution of the organic compound, the organic compound is preferably soluble to the good and poor solvent compounds in the dope 24, and preferably has a boiling point lower than the organic solvent of the dope 24.

Aqueous DMSO solution is preferably used as the aqueous solution of the organic compound, that is, the contact liquid 100. When the aqueous DMSO solution is used as the contact liquid 100, solvent extraction speed in the solvent substitution can be controlled by adjusting the DMSO concentration. In order to facilitate the drying in the drying processes 72 and 78, the contact liquid 100 having the boiling point as low as possible is preferable.

Since the aqueous DMSO solution is an azeotrope, the boiling point of the contact liquid 100 is adjusted by lowering the concentration of DMSO having a high boiling point. Specifically, weight percentage K of the water to DMSO is preferably not less than 1% and not more than 50% in order to enhance the evaporation of the aqueous DMSO solution. The weight percentage K is calculated from the following formula: $100 \times w1/(w1 + w2)$ where w1 is the weight of the water in the aqueous DMSO solution, and w2 is the weight of DMSO in the same. The contact liquid 100 may be an aqueous solution of two or more kinds of the organic solvent. The above mentioned contact liquid 100 may be used in a case where the polymer is the compound having the structure shown in the chemical formula 1. Above all, the aqueous DMSO solution which can control the solvent extraction speed is especially preferable.

The purified water in the present invention should have at least 1 MΩ or more of a specific electric resistance, and especially has less than 1 ppm of metal ion such as sodium ion, potassium ion, magnesium ion, calcium ion and the like, and less than 0.1 ppm of anion such as chlorine ion $Cl^-$, nitrate ion $NO_3^-$ and the like. The purified water can be easily obtained by a reverse osmosis membrane, ion-exchange resin, distillation, or combination of these.

A pair of air showers 103 is provided between the liquid bath 83 and the tenter device 85 such that each air outlet is faced to each surface of the wet precursor membrane 67. The liquid removing process 71 is performed by the air showers 103.

The tenter device 85 has a drying device 104 for feeding dry air in the proximity of the wet precursor membrane 67, and plural clips 85a connected to a chain (not shown). The clips 85a move along with the movement of the chain. The clips 85a hold side edges of the wet precursor membrane 67 at an entrance of the tenter device 85 and release the side edges at an exit of the tenter device 85.

An edge slitting device 108 is provided on the transportation passage downstream from the tenter device 85. The edge slitting device 108 continuously cuts off both side edges of the wet precursor membrane 67. The edge slitting device 108 is connected to a crusher 108a which shreds the cut edges of the wet precursor membrane 67 into chips.

[Proton Substitution Chamber]

The proton substitution chamber 86 is provided with a coating applicator 111 for applying a liquid containing acid (hereinafter referred to as proton solution) 110 to the wet precursor membrane 67, and plural washing baths 113. The wet precursor membrane 67 is guided to the coating applicator 111 and then into the washing baths 113 by rollers. In order to simplify the drawing, only two washing baths 113 are illustrated, however more than two of the washing baths 113 may be provided.

[Coating Applicator]

The coating applicator 111 has a configuration similar to the casting die 93. The coating applicator 111 casts the proton solution 110 fed from a tank 118 for coating one surface of the wet precursor membrane 67. The tank 118 is provided with a temperature controlling section (not shown) for the proton solution 110. The temperature of the proton solution 110 is kept at a predetermined value by this temperature controlling section.

A slot die is preferably used as the coating applicator 111. The method for contacting the proton solution 110 and the wet precursor membrane 67 is not limited to the coating. Another contacting method is described in a fourth embodiment in detail. The proton solution 110 is same as the one used in the second embodiment, and therefore the detailed description thereof is given in the second embodiment.

[Washing Bath]

The washing baths 113 store a washing liquid 121. The washing liquid 121 is preferably water. The washing baths 113 are each provided with a temperature controlling section (not shown). Each temperature controlling section independently keeps the temperature of the washing liquid 121 in each washing bath 113.

The transportation passage between the coating applicator 111 and the first one of the washing baths 113 may be provided with a heater so that the wet precursor membrane 67 or the undried solid electrolyte membrane on which the proton solution 110 is coated is heated.

In the drying chamber 87, plural rollers 127, an absorbing device 128 and a drying device (not shown) are provided. The rollers 127 support and transport the undried solid electrolyte membrane containing the washing liquid 121. The absorbing device 128 recovers the solvent vapor in the drying chamber 87. The drying device supplies dry air into the drying chamber 87. The moisture controlling chamber 88 is provided with the rollers 127 same as those provided in the drying chamber 87, a temperature controlling device (not shown), and a humidification controlling device (not shown). A neutralization device such as a neutralization bar (not shown) may be provided downstream from the moisture controlling chamber 88 so as to adjust the charged voltage of the solid electrolyte membrane 77 within a predetermined range (for instance from -3 kV to +3 kV). Moreover, a knurling roller pair (not shown) which embosses the both side edges of the solid electrolyte membrane 77 may be provided downstream from the moisture controlling chamber 88. In the winding device 90, a winding roll 130 and a press roller 131 are provided. The winding roll 130 winds up the solid electrolyte membrane 77. The press roller 131 controls a tension of the solid electrolyte membrane 77 at the time of winding.

Hereinafter, an example of the method for producing the solid electrolyte membrane 77 using the membrane producing apparatus 33 is described.

The dope 24 stored in the stock tank 32 is sent to the filtration device 96 by the pump 95 and filtered therethrough so as to remove the foreign matters whose particle size is larger than the predetermined size and those in gel-form.

The dope 24 after the filtration is sent to the casting die 93 and cast from the casting die 93 onto the running belt 94 to form the casting membrane 61. The relative positions of the rollers 97 and 98, and the rotation speed of at least one of the rollers 97 and 98 having the drive power are adjusted so as to adjust the tension of the belt 94 in the range of $10^3$ N/m to $10^6$ N/m. Moreover, a relative speed difference between the belt 94 and the rollers 97 and 98 are adjusted to be 0.01 m/min or less. The casting amount of the dope 24 at the time of casting is determined in consideration of the concentration of the dope 24 and desired thickness of the membrane as the end product.

Preferably, speed fluctuation of the belt 94 is 0.5% or less, and meandering thereof caused in a width direction while the belt 94 makes one rotation is 1.5 mm or less. In order to control the meandering, it is more preferable to provide a detector (not shown) and a position controller (not shown) to perform feedback control of the position of the belt 94. The detector detects the positions of both sides of the belt 94. The position controller adjusts the position of the belt 94 according to a measurement value of the detector. With respect to a portion of the belt 94 located directly below the casting die 93, it is preferable that vertical positional fluctuation caused in association with the rotation of the rollers 97 and 98 is adjusted to be 200 $\mu$m or less. Furthermore, it is preferable that the temperature in the casting chamber 80 is adjusted to be not less than -10°C and not more than 57°C by the temperature controlling device. The solvent vapor in the casting chamber 80 is collected by the recovery device (not shown) and is recycled and reused as the solvent for preparing the dope. This configuration is advantageous in terms of reducing the production cost, and so forth.

The casting bead is stabilized owing to the decompression of the decompression chamber (not shown). Preferably, the upstream area from the casting bead is uniformly decompressed within the range of -2500 Pa to -10 Pa relative to the downstream area from the casting bead. Moreover, it is preferable that a jacket (not shown) is attached to the decompression chamber to maintain the inside temperature at a predetermined value. Furthermore, it is preferable to attach a suction unit (not shown) to an edge of the casting die 93 and suction both sides of the bead in order to control and stabilize the shape of the casting bead. A preferable range of air volume aspirated in the edge portion is 1 L/min to 100 L/min.

The belt 94 is moved by the driving of the rollers 97 and 98. The running belt 94 transports the casting membrane 61 from the casting chamber 80 to the transporting chamber 82. The dry air blown from the casting membrane drying devices 81 enhances the drying of the casting membrane 61. The condenser in the transporting chamber 82 condenses and recovers the solvent vapor contained in the atmosphere inside the transporting chamber 82.

Since the good solvent compound normally has a high boiling point, the good solvent compound tends to remain in the casting membrane 61. To prevent the deformation of the casting membrane 61, the good solvent compound is not actively evaporated during the drying process in the transporting chamber 82. When the poor solvent compound is used as the solvent component of the dope 24, it is preferable that the poor solvent compound is not completely evaporated during this process. By leaving the poor solvent compound remained in the casting membrane 61 until the liquid contacting process 66 (see Fig. 2), which is the following process, molecular networks of the precursor are easily formed. Owing to this, the speed of the solvent substitution between the contact liquid 100 mentioned later and the good solvent

compound in the casting membrane 61 becomes fast. It is preferable to set up the condition of the transporting chamber 82, especially the condition of the casting membrane drying devices 81, such that weight percentage of the poor solvent compound to that of the precursor becomes not less than 2% and less than 100%, and more preferably not less than 2% and not more than 70%. Thus, the drying in the transporting chamber 82 is proceeded to the extent that the casting membrane 61 is not deformed when being contacted to the contact liquid 100 in the liquid contacting process 66. In the present invention, the solvent removal from the casting membrane 61 is mainly performed in the following liquid contacting process 66.

The temperatures of the dry air from the casting membrane drying devices 81 are set lower than the temperatures of the dry air used in the first drying process 72 and the second drying process 78 performed later. The dry air from the casting membrane drying devices 81 is preferably less than 100°C, more preferably not less than 20°C and not more than 70°C, and most preferably about 45°C. If the casting membrane 61 absorbs the moisture in the air, it may cause separation of the layers and the casting membrane 61 may be gelated in this state. As a result, a percentage of voids of the obtained solid electrolyte membrane may increase. In view of this, it is preferable that the humidity in the proximity of the casting membrane 61 is kept as low as possible. It is especially preferable that the just-formed casting membrane 61 is transported under low humidity conditions. Accordingly, the humidity of the dry air from the casting membrane drying devices 81 is preferably less than 50%RH, more preferably less than 20%RH, and most preferably less than 10%RH.

It is preferable that relations between the drying condition of the casting membrane 61 and the evaporation degree of the good and poor solvent compounds of the casting membrane 61 is obtained prior to the membrane production. For example, a transporting speed of the casting membrane 61, temperature and humidity, flow amount, rate and direction of the dry air supplied from the casting membrane drying devices 81, and the like are designated as factors of the drying condition. The relations between these factors and the solvent amount and component in the casting membrane 61 are obtained with time. Based on the obtained relations, the drying condition of the casting membrane 61 in the transporting chamber 82 is determined.

The casting membrane 61 with the belt 94 is transported to and immersed in the contact liquid 100 in the liquid bath 83. The casting membrane 61 is then peeled from the belt 94 by the peel roller 101 as the wet precursor membrane 67. The casting membrane 61 is not necessarily peeled in the contact liquid 100 like the present embodiment, but may be peeled where the casting membrane 61 obtains the self-supporting property. For example, the casting membrane 61 may be peeled upstream or downstream from the liquid bath 83, or between the liquid baths 83 when plural baths 83 are tandemly arranged. Note that the peeling process 68 (see Fig. 2) is preferably performed as soon as the casting membrane 61 possess the self-supporting property in order to perform the substitution of the contact liquid 100 for the organic solvent in the casting membrane 61 on both surfaces of the casting membrane 61. Owing to this, the solvent substitution can be efficiently performed. Instead of the liquid contacting process 66, the self-supporting property of the casting membrane 61 can be developed in the casting membrane drying process 65 by applying the dry air to the casting membrane 61. The casting membrane 61 with the self-supporting property is then peeled and subjected to each of the steps 73, 76 and 78.

The wet precursor membrane 67 is transported to the pair of air showers 103 by guide rollers. Since the belt 94 from which the casting membrane 61 is peeled is moved endlessly by the driving of the rollers 97 and 98, the belt 94 is fed to the casting chamber 80 again.

The temperature of the contact liquid 100 is preferably not less than 10°C and not more than 80°C, and more preferably not less than 20 °C and not more than 50 °C. When the temperature of the contact liquid 100 is higher than 80°C, the casting membrane 61 or the wet precursor membrane 67 may be rapidly gelated and a membrane base is deformed. As a result, wrinkles may be formed on the membrane. When the temperature of the contact liquid 100 is lower than 10°C, the solvent substitution between the contact liquid 100 and the organic solvent contained in the casting membrane 61 may not be performed efficiently.

The time for immersing the casting membrane 61 into the contact liquid 100 is approximately not less than 30 sec and not more than 10 min, more preferably not less than 1 min and not more than 5 min, and most preferably not less than 2 min and not more than 5 min. Owing to this, the substitution between the contact liquid 100 and the solvent contained in the casting membrane 61 is sufficiently performed, and thereby the self-supporting property of the casting membrane 61 is exerted.

When the time taken for the solvent substation is more than 10 minutes, the amount of the contact liquid 100 contained in the casting membrane 61 or the wet precursor membrane 67 increases. As a result, the following adverse effects may occur, which are not preferable:

(1) The swelling ratio of the casting membrane 61 or the wet precursor membrane 67 becomes large.
(2) The thickness variation of the casting membrane 61 or the wet precursor membrane 67 becomes large.
(3) The drying time of the membrane may become long. When the time taken for the solvent substation is less than 30 seconds, on the other hand, the solvent is not sufficiently substituted, and therefore the membrane is not sufficiently

turned into gel-form. It is therefore difficult to peel the membrane from the support, to continuously produce the membrane, or to shorten the drying time of the membrane.

The solvent substitution with the use of the contact liquid 100 may be performed to the wet precursor membrane 67 and the undried solid electrolyte membrane, besides the casting membrane 61. At this time, a sum of the time taken for the solvent substitution in each process should be in the range described above. The time taken for the immersion is determined in accordance with at least one of the change in hardness of the casting membrane 61 and the change in weight of the solvent, especially the good solvent compound in the casting membrane 61. Therefore, the immersion time is not necessarily limited to the above range. The hardness of the casting membrane 61 is obtained from the elastic modulus of the casting membrane 61. The measuring method of the elastic modulus is same as that described above.

The method of contacting the casting membrane 61 and the contact liquid 100 is not limited to the immersion. For example, the contact liquid 100 may be sprayed or coated onto the casting membrane 61. The contact liquid 100 may be evaporated and brought into contact with the casting membrane 61 as the vapor. It is also possible to combine these methods and the immersion method.

The liquid contacting process 66 (see Fig. 2) may be performed more than once. For example, the liquid baths 83 are tandemly arranged, and the casting membrane 61 and the wet precursor membrane 67, which is peeled from the belt 94, are sequentially transported into the liquid baths 83. When the liquid contacting process 66 is performed more than once, the contact liquid may be different from bath to bath. Thereby, the drying of the wet precursor membrane 67 in the first drying process 72 (see Fig. 2) and the drying of the undried solid electrolyte membrane in the second drying process 78 (see Fig. 2) can be performed effectively and efficiently.

The wet precursor membrane 67 is transported in a predetermined direction by the guide rollers. On the other hand, the belt 94 from which the casting membrane 61 is peeled off is guided to the casting chamber 80 again by the driving of at least one of the rollers 97 and 98.

If the contact liquid 100 remains on the surfaces of the wet precursor membrane 67, the drying unevenness may occur on the wet precursor membrane 67 in the first drying process 72 and on the undried solid electrolyte membrane in the second drying process 78. To prevent the occurrence of the drying unevenness, the contact liquid 100 is roughly removed from the wet precursor membrane 67 by the pair of air showers 103. Besides using the air showers 103, the liquid removing process 71 is also performed by wiping the wet precursor membrane 67.

After the liquid removing process 71, the wet precursor membrane 67 is fed to the tenter device 85. In the tenter device 85, the wet precursor membrane 67 is held at its both side edges by the clips 85a, and is transported downstream. The drying device 104 applies the dry air having a predetermined temperature in the proximity of the transported wet precursor membrane 67, thereby improving the drying efficiency of the wet precursor membrane 67. Instead of the clips 85a, it is also possible to put pins through the both side edges of the wet precursor membrane 67 for holding the wet precursor membrane 67. The temperature of the dry air from the drying device 104 is preferably set in accordance with the boiling point of the contact liquid 100. The temperature inside the tenter device 85 is preferably about not less than 50°C and not more than 150°C, and more preferably not less than 80°C and not more than 140°C. The tenter device 85 may be divided into plural areas in the direction of the transportation passage, and the temperature condition may be changed in each area. A remaining solvent amount of the wet precursor membrane 67 is preferably not more than 10 wt.% on a dry basis at a time when the wet precursor membrane 67 is transported out of the tenter device 85.

In the tenter device 85, it is possible to stretch the wet precursor membrane 67 in its width direction. It is also possible to stretch the wet precursor membrane 67 in its transporting direction by adjusting the tension applied to the wet precursor membrane 67 before fed into the tenter device 85. The wet precursor membrane 67 is preferably stretched in at least one of the transporting direction and the width direction by 100.5% to 300% with respect to the size of the wet precursor membrane 67 before the stretching. Owing to this, molecular arrangement in the polymer contained in the wet precursor membrane 67 is adjusted.

The wet precursor membrane 67 is fed to the edge slitting device 108. Both side edges of the wet precursor membrane 67, which had been held by the clips 85a, are cut off by the edge slitting device 108. The cut edges are sent to the crusher 108a by a cutter blower (not shown) and shredded into chips by the crusher 108a. Since the chips are recycled as the polymer material for preparing the dope, the materials are efficiently utilized, and therefore the production cost is reduced. The slitting process for the membrane side edges may be omitted. However, it is preferable to perform the slitting process after the membrane is peeled from the belt 94 as the wet precursor membrane 67 and before the membrane is wound as the solid electrolyte membrane 77. That is, the edge slitting process is preferably performed between the peeling process and the winding process.

The proton solution 110 is coated by the coating applicator 111 onto one surface of the wet precursor membrane 67 whose side edges are cut off. The coated wet precursor membrane 67 may be heated by a heater (not shown). Thereafter, the proton substitution is performed to the wet precursor membrane 67 effectively and efficiently, and the wet precursor membrane 67 becomes the undried solid electrolyte membrane, which contains the solid electrolyte.

The rate of the proton substitution is preferably high as much as possible, that is, the rate is most preferably

100%. In this embodiment, however, the proton substitution rate is not necessary 100%. In view of the productivity, when not less than 80%, and more preferably not less than 90% of the cation species is substituted by the hydrogen atoms, it is considered that the obtained membrane sufficiently functions as the solid electrolyte membrane.' The rate of the proton substitution is merely one of factors to determine the proton conductivity, therefore the membrane having the proton substitution rate out of the above range may function enough as the solid electrolyte membrane. The details are described later.

The method for contacting the proton solution 110 and the wet precursor membrane 67 is not limited to the coating. For example, the proton solution 110 may be sprayed onto the wet precursor membrane 67. It is also possible that the wet precursor membrane 67 is immersed in the proton solution 110.

Next, the undried solid electrolyte membrane is transported into the washing baths 113, and washed by immersing it in the washing liquid 121. Owing to this, the proton solution 110 attached on the surface of the undried solid electrolyte membrane or the excess proton solution 110 contained in the undried solid electrolyte membrane can be washed off. Thereby, the reduction of the proton conductivity due to the acid remaining in the produced solid electrolyte membrane can be prevented.

The washing process 76 is not limited to twice. As long as the excess acid is removed sufficiently, the washing process may be performed once or more than twice. The temperature of the washing liquid 121 is preferably kept not less than 30°C, which improves effect in removing the acid. The washing liquid 121 is preferably water, and especially preferably purified water. The purified water in the present invention should have at least 1 MΩ or more of the specific electric resistance, and especially has less than 1 ppm of metal ion such as sodium ion, potassium ion, magnesium ion, calcium ion and the like, and less than 0.1 ppm of anion such as chlorine ion $Cl^-$, nitrate ion $NO_3^-$ and the like. The purified water can be easily obtained by the reverse osmosis membrane, ion-exchange resin, distillation, or combination of these.

The washing method in the washing process 76 is not limited to the immersion. For example, the washing liquid 121 may be sprayed, atomized or coated onto the undried solid electrolyte membrane. The coating and spraying methods are preferable since they are performed while the undried solid electrolyte membrane is continuously transported. The spraying method is especially preferable since the turbulent mixing effect between the washing liquid 121 and the proton solution 110 on the undried solid electrolyte membrane is obtained by jetting the washing liquid 121.

As the method for coating the washing liquid 121 to the membrane, for instance, a method using an extrusion coater or various coating heads such as a fountain coater or a frog mouth coater is used. As the method for spraying the washing liquid 121 onto the membrane, for instance, a method using a spray nozzle which is commonly used for humidification of air, painting, automatic washing of a tank and so forth is used. The coating methods disclosed in "All about coating", edited by Masayoshi Araki, published by Kako Gijutsu Kenkyukai (Converting Technical Institute), 1999, are also applicable to the present invention. Furthermore, in the case the spray nozzle is used, it becomes possible to spray the washing liquid 121 across the entire width of the membrane by arranging a plurality of conical or sector spray nozzles manufactured by Ikeuchi Co., Ltd. along the width direction of the undried solid electrolyte membrane.

The higher the velocity of spraying the washing liquid 121, the higher the turbulent mixing effect is obtained. However, such turbulent mixing effect may cause the reduction in the transportation stability of the undried solid electrolyte membrane. For that reason, it is preferable to spray the washing liquid 121 at a spraying velocity of 50 cm/sec to 1000 cm/sec, more preferably 100 cm/sec to 700 cm/sec, and most preferably 100 cm/sec to 500 cm/sec.

The amount of washing liquid 121 to be used in washing should be larger than the calculated amount based on a theoretical dilution ratio defined by an equation (1) below. The theoretical dilution ratio is defined on the assumption that the whole amount of the washing liquid 121 for washing contributes to dilution of the proton solution 110. Actually, since the whole amount of the washing liquid 121 does not contribute to form a mixture, a larger amount of the washing liquid 121 than that derived from the theoretical dilution ratio is used in practice. The amount of the washing liquid 121 varies depending upon the acid concentration of the proton solution 110 used and type of a solvent of the proton solution 110; however, the washing liquid 121 is used in an amount providing a dilution ratio of at least 100 to 1, 000 times, preferably 500 to 10,000 times, more preferably 1,000 to 100,000 times. Note that in the equation (1) below, volumes each of the washing liquid 121 and the proton solution 110 is a liquid amount contacting with the undried solid electrolyte membrane per a unit area.

$$\text{Theoretical dilution ratio} = (\text{amount of washing liquid 121 } [ml/m^2]) \div (\text{amount of proton solution 110 } [ml/m^2]) \quad \cdots \quad (1)$$

When a predetermined amount of the washing liquid 121 is used for washing, it is preferable to divide the predetermined amount of the washing liquid 121 into several portions to contact the undried solid electrolyte membrane with the washing liquid 121 several times rather than to use the whole amount of the washing liquid 121 at one time, that is, a so-called batch washing. The predetermined amount of the washing liquid 121 is divided and supplied to plural

washing devices disposed along the transportation passage. Appropriate distance is preferably provided between the adjacent washing devices so as to diffuse the proton solution 110 on the undried solid electrolyte membrane to promote dilution. Furthermore, it is preferable to incline the undried solid electrolyte membrane being transported such that the washing liquid 121 flows over the membrane surface so as to diffuse the washing liquid 121 and dilute the proton solution 110. The dilution efficiency is improved by providing a liquid remover which removes the washing liquid 121 on the undried solid electrolyte membrane between the washing devices. As the liquid remover, blades, an air knife, a rod and rolls, which are used for coating, are used.

It is advantageous to dispose the washing devices as many as possible along the transportation passage. However, in terms of installation space and cost, usually 2 to 10 washing devices are disposed, and preferably 2 to 5 washing devices are disposed along the transportation passage.

A thickness of a liquid film of the washing liquid 121 on the undried solid electrolyte membrane after the liquid removal is preferably small as mush as possible, but minimal thickness is limited depending on a type of the liquid remover used. When a solid object such as the blades, rod, rolls or the like are physically contacted to the undried solid electrolyte membrane, the solid object may leave scars on the surface of the undried solid electrolyte membrane or worn away even if the solid object is made of rubber, which is an elastic body with low hardness. It is therefore preferable to keep the finite liquid film as a lubrication fluid. Normally, the liquid film of not less than several $\mu$m, and preferably of not ness than 10 $\mu$m is remained as the lubrication fluid.

The air knife is preferable in order to reduce the liquid film thickness as low as possible. The air knife removes the remaining moisture content (liquid film) on the surface of the undried solid electrolyte membrane almost completely by adjusting flow volume and pressure of the air blown onto the undried solid electrolyte membrane. However, if the air flow volume is too large, flutter or tilt may occur in the undried solid electrolyte membrane which adversely affects the transporting stability. For that reason, the air flow volume is preferably in the range of 10 m/sec to 500 m/sec, more preferably 20 m/sec to 300 m/sec, and most preferably 30 m/sec to 200 m/sec. Note that the above air flow volume is not particularly limited. The air flow volume is properly determined depending on the moisture content (liquid film thickness) on the surface of the undried solid electrolyte membrane before the liquid removal, or the transporting speed of the undried solid electrolyte membrane.

To uniformly remove the moisture content (liquid film) on the surface of the undried solid electrolyte membrane, a variation range in the air flow velocity distribution in the width direction of the undried solid electrolyte membrane is preferably set at 10% or less, and more preferably 5% or less by adjusting the outlet of the air knife or the air supplying condition of the air knife. The closer the clearance between the surface of the undried solid electrolyte membrane and the outlet of the air knife, the more moisture content (liquid film) on the surface of the undried solid electrolyte membrane is removed. However, at the same time, the surface of the undried solid electrolyte membrane is more likely to be damaged by the outlet of the air knife. Accordingly, the air knife is installed such that the clearance between the surface of the undried solid electrolyte membrane and the outlet of the air knife is in the range of 10 $\mu$m to 10 cm, more preferably 100 $\mu$m to 5 cm, and most preferably 500 $\mu$m to 1 cm. It is preferable to install the air knife and a backup roll on opposite sides of the transportation passage of the undried solid electrolyte membrane. The backup roll supports the undried solid electrolyte membrane so as to stabilize the clearance setting and reduce the flutters, wrinkles and deformations of the undried solid electrolyte membrane.

The proton substitution process 73 and the washing process 76 prevent impurities such as inorganic salt and the like being mixed into the solid electrolyte membrane 77. These processes 73 and 76 also prevent the solid electrolyte membrane 77 from degrading. These processes 73 and 76 are not necessarily performed continuously from or to other processes. The undried solid electrolyte membrane after the washing process 76 preferably has not more than 1000 ppm of metal, and more preferably not more than 100 ppm of metal. As the metal, there are Na, K, Ca, Fe, Ni, Cr, and Zn. Contained amount of such metal is measured by, for example, commercially available atomic absorption photometer.

It is also preferable to provide a predrying chamber (not shown) between the proton substitution chamber 86 and the drying chamber 87 to predry the undried solid electrolyte membrane. Thereby, in the drying chamber 87, an abrupt increase of the membrane temperature is prevented so that drastic changes in shape and conditions of the undried solid electrolyte membrane are prevented.

The undried solid electrolyte membrane after the washing process 76 is transported to the drying chamber 87, and the second drying process 78 (see Fig. 2) is performed therein. In the drying chamber 87, the undried solid electrolyte membrane is dried by the dry air supplied from the drying device (not shown). At this time, the undried solid electrolyte membrane is transported while being bridged across the rollers 127. The temperature inside the drying chamber 87 is not particularly limited. However, it is preferable to determine the temperature according to the heat resistance (glass transition point Tg, heat deflection temperature under load, melting point Tm, continuous working temperature and the like) of the solid electrolyte, and the temperature is preferably not less than 50°C and not more than the Tg of the solid electrolyte. In this embodiment, the temperature inside the drying chamber 87 is preferably not less than 50°C and not more than 200°C, and more preferably not less than 120°C and not more than 185°C. In the second drying process 78, the undried solid electrolyte membrane is dried to the extent that the remaining solvent of the undried solid electrolyte

membrane is removed as much as possible. A desired amount of the remaining solvent is about less than 10 wt.% on a dry basis. The solvent vapor generated by drying the undried solid electrolyte membrane in the drying chamber 87 as well as the air in the atmosphere is adsorbed and recovered by the absorbing device 128. The air from which the solvent is removed is supplied to the drying chamber 87 as the dry air. The drying chamber 87 is preferably divided into plural sections in the transportation direction so as to change the temperature of the dry air in each section.

The solid electrolyte membrane 77 is transported to the moisture controlling chamber 88. In the moisture controlling chamber 88, the solid electrolyte membrane 77 is transported while being bridged across the rollers 127. The temperature controlling device (not shown) and the humidification controlling device (not shown) keep the desired temperature and humidity respectively in the moisture controlling chamber 88, and thereby controlling the drying degree of the solid electrolyte membrane 77. The temperature and humidity inside the moisture controlling chamber 88 are not particularly limited. However, the temperature is preferably not less than 20°C and not more than 30 °C, and the humidity is preferably not less than 40 RH% and not more than 70 RH%. Thereby, curling on the membrane surface and winding defects of the solid electrolyte membrane 77 are prevented. It is also preferable to provide a cooling chamber (not shown) between the drying chamber 87 and the moisture controlling chamber 88. In the cooling chamber, the solid electrolyte membrane 77 is cooled to approximately room temperature, and thereby preventing the deformation of the solid electrolyte membrane 77 due to the temperature alteration.

When knurling is provided to the solid electrolyte membrane 77, the height of each of projections and depressions of the knurling is preferably in the range of 1 $\mu$m to 200 $\mu$m.

The solid electrolyte membrane 77 is transported to the winding device 90 and wound by the winding roll 130. At this time, the press roller 131 applies tension to the solid electrolyte membrane 77. Owing to this, the solid electrolyte membrane 77 in a roll form is obtained while preventing the occurrence of the wrinkles and slacks on the solid electrolyte membrane 77. It is preferable to apply the tension of the desired value to the solid electrolyte membrane 77 by the press roller 131 during the winding of the solid electrolyte membrane 77. Thereby, the membrane product with excellent planarity is obtained. It is preferable to gradually change the tension applied to the solid electrolyte membrane 77 from the start to the end of the winding. Thereby, excessive tightening during the winding is prevented. A width of the solid electrolyte membrane 77 wound is preferably 100 mm or more. The present invention is also applicable to the production of thin membranes with the thickness of not less than 5 $\mu$m and not more than 300 $\mu$m.

The wet precursor membrane 67, the undried solid electrolyte membrane or the solid electrolyte membrane 77 is mostly supported or transported by the rollers during or between each process in the membrane producing apparatus. There are driven rollers and non-driven rollers. The non-driven rollers determine the transportation passage of the membrane and improve the transportation stability during the transportation of the membrane.

When the second flow shown in Fig. 2 is performed, the solid electrolyte membrane 77 is produced without using the proton substitution chamber 86. In the second flow, the proton substitution process 73 and the washing process 76 are not performed. Besides that, the production conditions are same as those in the first flow. In the second flow, the wet solid electrolyte membrane 79 containing the solid electrolyte is obtained when the casting membrane 61 is peeled from the belt 94 (see Fig. 3). The wet solid electrolyte membrane 79 is transported to the pair of air showers 103, the tenter device 85, the edge slitting device 108, and the drying chamber 87 in this order, and each process is performed to the wet solid electrolyte membrane 79 in each device. Thereby, the solid electrolyte membrane 77 is obtained. The solid electrolyte membrane 77 is transported to the moisture controlling chamber 88, and then to the winding device 90 to be wound into the roll form. Since each process is same as that performed in the first flow, a detailed description thereof is omitted.

In the first embodiment, the proton solution 110 is coated to one surface of the wet precursor membrane 67 in the proton substitution process 73. The proton substitution can be performed by spraying the proton solution 110 onto the wet precursor membrane 67, by immersing the wet precursor membrane 67 in the proton solution 110. The proton substitution can also be performed by contacting proton solutions with different proton concentrations to both surfaces of the wet precursor membrane 67. According to such methods, a solid electrolyte membrane having excellent proton conductivity can also be produced.

Hereinafter, the second embodiment of the present invention is described with referring to Fig. 4. In the second embodiment, the proton substitution chamber 86 is replaced by a proton substitution chamber 150, and the proton substitution process 73 (see Fig. 2) is performed therein. Note that the components identical to those of the first embodiment are denoted by the same reference numerals in Fig. 4, and descriptions thereof are omitted.

In the proton substitution chamber 150, a coating applicator 151, and a first liquid bath 152 and a second liquid bath 153, which are arranged downstream from the coating applicator 151, are provided.

The coating applicator 151 is a die coater of extrusion type. The coating applicator 151 has a bath 155, a feed opening 151a and a liquid outlet 151b. The bath 155 stores the proton solution 110. The feed opening 151a is connected to the bath 155. The liquid outlet 151b casts the proton solution 110 supplied through the feed opening 151a. The liquid outlet 151b has an opening extending along the width direction of the wet precursor membrane 67. When the proton solution 110 is supplied from the bath 155, the coating applicator 151 casts the proton solution 110 from the liquid outlet

151b and uniformly coats the proton solution 110 on a first surface 67a of the wet precursor membrane 67. Owing to this coating of the proton solution 110, a coating is formed on the first surface 67a of the wet precursor membrane 67.

A pipe 156 connecting the bath 155 and the coating applicator 151 is provided with a pump and a valve (both are not shown). By adjusting the pump and the valve, a desired amount of the proton solution 110 is coated on the first surface 67a of the wet precursor membrane 67. Moreover, the bath 155 is provided with a temperature controlling section 155a. The temperature of the proton solution 110 is kept at a desired value by the temperature controlling section 155a.

The amount of the proton solution 110 coated on the first surface 67a of the wet precursor membrane 67 is preferably not less than 2 $ml/m^2$ and not more than 100 $ml/m^2$, by such coating applicator 151. When the coating amount of the proton solution 110 is less than 2 $ml/m^2$, the proton substitution is not sufficiently performed in the wet precursor membrane 67. When the coating amount of the proton solution 110 is more than 100 $ml/m^2$, the wet precursor membrane 67 is not stably transported, which is not preferable.

The method for contacting the proton solution 110 and the wet precursor membrane 67 is not limited to the coating. The contacting method in the proton substitution process 73 preferably satisfies the following conditions: (1) the proton solution 110 is uniformly contacted to the wet precursor membrane 67, and (2) the amount of the proton solution 110 contacted to the first surface 67a is easily adjusted. As the contacting method, preferably used are extrusion coating, die coaters such as slide, roll coaters such as forward roll coater, reverse roll coater, gravure coater, rod coater on which a thin metal wire is wound around. These methods are described in "Modern Coating and Drying Technology" edited by Edward Cohen and Edgar B. Gutoff (published by VCH Publishers, Inc., 1992). The proton solution 110 used for the coating is washed off with water later. For environmental conservation, the coating amount should be minimized as much as possible. In view of this, the rod coater, the gravure coater and a blade coater, which can be stably operated even when a small amount of the proton solution 110 is used for the coating, are preferable among them. Instead of the above methods, it is also possible to immerse the wet precursor membrane 67 in the proton solution 110 in the present invention.

[Proton Solution]

The proton solution 110 is not limited to the acid aqueous solution as long as it gives protons to proton acceptors of the precursor. When the precursor has larger proton acceptability than anion acceptability at the time of ionization of the acid into the anion and the proton, the acid may be used as the proton solution 110.

As the acid contained in the proton solution 110, for example, sulfuric acid, phosphoric acid, nitric acid, hydrochloric acid, and organic sulfonic acid may be used. When the acid having formula weight of anion in the range of 40 to 1000 is used among the above acids, the anion which inhibits the proton substitution cannot easily enter the wet precursor membrane 67, and thereby the proton substitution is efficiently performed. Specifically, they are nitric acid, phosphoric acid, and sulfuric acid. Above all, sulfuric acid which has large formula weight of anion is preferably used.

The above acid dissolved in purified water, or the acid dissolved in a mixture liquid of an organic solvent and purified water may be used as the proton solution 110. In the present invention, purified water is used as water.

In the present invention, a single organic solvent or a mixture of two or more organic solvents can be used as long as the organic solvent do not dissolve or swell the wet precursor membrane 67. Those described in Shinpan Yozai Pokettobukku (The New Solvent Pocketbook) (published by Ohmsha, 1994) are the examples of the organic solvent used in the present invention. For example, alcohol group (methanol, ethanol, n-propanol, isopropanol, n-butanol, isobutanol, cyclohexanol, benzyl alcohol, fluorinated alcohol), ketone group (acetone, methyl ethyl ketone, methyl isobutyl ketone), ester group (methyl acetate, ethyl acetate, butyl acetate), polyalcohol group (ethylene glycol, diethylene glycol, propylene glycol, ethylene glycol diethyl ether), N,N-dimethylformamide, perfluorotributylamine, triethylamine, dimethylformamide, dimethylsulfoxide, and methyl cellosolve.

The concentration of the proton contained in the proton solution 110 (hereinafter referred to as proton concentration) is not less than 0.05 mol/liter. When the proton concentration of the proton solution 110 is less than 0.05 mol/liter, the proton substitution in the wet precursor membrane 67 is not sufficiently performed. Note that the proton concentration is a concept representing normality which has conventionally been used. The proton concentration of the proton solution 110 represents the concentration of the hydrogen atoms which are contained in the proton solution 110 and can be the protons.

The higher the temperature of the wet precursor membrane 67, to which the proton solution 110 has been contacted by coating and so on, at the time of the proton substitution, the more the proton substitution is promoted. Response rate of the proton substitution becomes highest especially near the glass transition temperature Tg of the precursor contained in the wet precursor membrane 67. By applying at least one of the following methods, the time required for the proton substitution in the proton substitution process 73 can be shortened: (1) to make the temperature of the wet precursor membrane 67 near the glass transition temperature Tg by heating, and (2) to contact the proton solution 110 kept at the predetermined temperature to the wet precursor membrane 67.

In the present invention, the temperature of the proton solution 110 is preferably equal to the glass transition

temperature Tg of the precursor contained in the wet precursor membrane 67. However, the Tg may be higher than the boiling point of the proton solution 110 depending on a kind of the proton solution 110 used. To stably perform the coating, the Tg should be less than the boiling point of the proton solution 110, preferably less than 90% of the boiling point (°C), and more preferably less than 80% of the boiling point (°C). In consideration of the environment where the membrane producing line is provided, the temperature of the proton solution 110 is preferably adjusted to be at room temperature or more, more preferably 30°C or more, and more preferably 80°C or more. The temperature of the wet precursor membrane 67 is also preferably adjusted to be at room temperature or more, more preferably 30°C or more, and more preferably 80°C or more.

[Measurement Method of Tg]

The glass transition temperature Tg of the polymer is obtained by differential thermal analysis (DTA) or differential scanning calorimetry (DSC). The glass transition temperature Tg is obtained from DTA curve or DSC curve. In order to obtain the glass transition temperature Tg from the DTA curve or the DSC curve, any one of an intermediate glass transition temperature (Tmg), an extrapolative glass transition start temperature (Tig) and an extrapolative glass transition end temperature (Teg) may be used. Details of the measuring methods of the glass transition temperature Tg by DTA or DSC are described in JIS K 7121.

In the proton substitution process 73, the remaining solvent amount of the wet precursor membrane 67 is preferably not less than 1 wt.% and not more than 100 wt.% on a dry basis in order to sufficiently perform the proton substitution. When the remaining solvent amount is less than 1 wt.% on a dry basis, the drying time becomes too long which is not preferable. When the remaining solvent amount is more than 100 wt.% on a dry basis, a percentage of voids of the membrane becomes too large which is not preferable. The remaining solvent amount on a dry basis is a value calculated from the following formula: $[(x1-y1)/y1]\times100$, where x1 is the weight of the membrane at the time of sampling, and y1 is the weight of the same after the drying.

In the proton substitution process 73, the proton substitution rate of the wet precursor membrane 67 is preferably not less than 80 mol%, and more preferably not less than 90 mol%. When the proton substitution is performed with such high rate, the solid electrolyte membrane 165 having excellent proton conductivity is produced.

An infrared heater (hereinafter referred to as heater) 158 is provided downstream from the coating applicator 151. The heater 158 heats from the coated surface side, and thereby the wet precursor membrane 67 is adjusted to be at the predetermined temperature.

To heat the wet precursor membrane 67, the heater 158 may preferably perform application of hot air to the wet precursor membrane 67, contact heat transfer by a heat roll, induction heating through the use of microwave, and radiant heating by the infrared heater. Since the infrared heater performs the heating without contacting the membrane and regardless of the air flow, influence of the heating on the coated surface can be minimized. Therefore, the infrared heater is especially preferable. As the infrared heater, various far infrared heaters of electric type, gas type, oil type, and steam type produced by Noritake Co., Ltd. may be used. Especially the oil heater and the steam heater which use the oil and the steam respectively as a heat medium are preferable in terms of explosion proof in the atmosphere where the organic solvent exists together. The temperature of the wet precursor membrane 67 is preferably not less than 80°C and not more than 120°C. Commercially available noncontact infrared thermometer is used for detecting the temperature of the wet precursor membrane 67. In order to control the temperature within the above range, a feedback control may be carried out to the heating device. Owing to this, the temperature of the wet precursor membrane 67 can be kept within the desired range.

In order to adjust the temperature of the wet precursor membrane 67 after the coating of the proton solution 110, the heater 158 is used, and/or the temperature of the proton solution 110 contacted to the wet precursor membrane 67 is adjusted.

The first liquid bath 152 and the second liquid bath 153 each stores the washing liquid 121. The first liquid bath 152 is provided with a temperature controlling section 152a, and the second liquid bath 153 is provided with a temperature controlling section 153a. Each of the temperature controlling sections 152a and 153a independently keeps the temperature of the washing liquid 121 in the first liquid bath 152 and the second liquid bath 153 at the predetermined temperature. Pairs of air knives 160 and 161 are provided downstream from the first and second liquid baths 152 and 153 on opposite sides of the transportation passage of the undried solid electrolyte membrane.

To wash the undried solid electrolyte membrane in the washing process 76 (see Fig. 2), it is possible to coat or spray the washing liquid 121 onto the undried solid electrolyte membrane, or to immerse the undried solid electrolyte membrane into the container of the washing liquid 121, in view of continuous transportation of the undried solid electrolyte membrane. Any one of the above method may be performed.

A brief overview of the proton substitution process 73 and the washing process 76 performed in the proton substitution chamber 150 is provided. The wet precursor membrane 67 whose side edges have been cut off is transported from the edge slitting device 108 to the proton substitution chamber 150. In the proton substitution chamber 150, the

coating applicator 151 coats the proton solution 110 containing the acid onto the first surface 67a of the wet precursor membrane 67. Thereafter, the heater 158 heats the first surface 67a of the wet precursor membrane 67, and thereby the temperature of the wet precursor membrane 67 is adjusted to be within the predetermined range. Owing to the heating of the heater 158, the proton substitution is sufficiently performed in the wet precursor membrane 67, and this wet precursor membrane 67 becomes the undried solid electrolyte membrane.

The undried solid electrolyte membrane in which the proton substitution has been sufficiently performed is then transported to the first liquid bath 152 and washed by immersing the undried solid electrolyte membrane in the washing liquid 121. The washed undried solid electrolyte membrane is transported out of the washing liquid 121. Next, the washing liquid 121 attached on the undried solid electrolyte membrane is removed by the pair of air knives 160. The undried solid electrolyte membrane is then transported to the second liquid bath 153 and washed by immersing the undried solid electrolyte membrane in the washing liquid 121. The undried solid electrolyte membrane is transported out of the washing liquid 121. The washing liquid 121 attached on the undried solid electrolyte membrane is removed by the pair of air knives 161. The temperature of the washing liquid 121 in the first liquid bath 152 and the second liquid bath 153 are each kept at not less than 30°C by the temperature controlling sections 152a and 153a, respectively. Owing to this, the removal efficiency of the acid attached on the undried solid electrolyte membrane is improved in the washing process 76. The undried solid electrolyte membrane is transported to the drying chamber 87 by the guide rollers. The undried solid electrolyte membrane is heated in the drying chamber 87 and becomes the solid electrolyte membrane 165.

In this embodiment, the solid electrolyte membrane 165 is produced by the membrane producing apparatus provided with the proton substitution chamber 150 instead of the proton substitution chamber 86 (Fig. 3) according to each process of the solid electrolyte membrane producing process 60 (Fig. 2). For this configuration, every process including the proton substitution process, which has conventionally been performed off-line, can be continuously performed on-line. Accordingly, the solid electrolyte membrane 165 having high proton conductivity can be mass-produced continuously.

In the proton substitution process 73 (Fig. 2), the coating applicator 151, which coats the proton solution 110 onto the first surface 67a of the wet precursor membrane 67, is used in the proton substitution chamber 150. In addition to this coating applicator 151, another coating applicator for coating a proton solution onto the opposite surface of the first surface 67a of the wet precursor membrane 67 may be used. Fig. 5 shows a proton substitution chamber 170 as a third embodiment of the present invention. The proton substitution chamber 170 has a configuration of the proton substitution chamber 150 provided with another coating applicator 171 of the rod coater type for coating a proton solution 210 onto the surface opposite to the first surface 67a. Note that the components identical to those of the first and second embodiments are denoted by the same reference numerals in Fig. 5, and descriptions thereof are omitted.

The coating applicator 171 is disposed upstream from the coating applicator 151. The coating applicator 171 includes a roller 172, a container 173, and guide rollers 174a and 174b. A heater 175 is disposed on the opposite side of the transportation passage of the wet precursor membrane 67 from the heater 158. The container 173 stores the proton solution 210. A temperature controlling section 173a is connected to the container 173 and keeps the temperature of the proton solution 210 within the predetermined range. The roller 172 has a cylindrical shape. The roller 172 is disposed in the container 173 such that a perimeter surface 172b of the roller 172 is partially immersed in the proton solution 210. A shaft 172a of the roller 172 is connected to a motor (not shown). Owing to the driving force of the motor, the roller 172 rotates about the shaft 172a in a predetermined direction at a predetermined speed. When the roller 172 rotates, the part of the perimeter surface 172b of the roller 172 immersed in the proton solution 210 gets out of the proton solution 210. A predetermined amount of the proton solution 210 attaches on this exposed part of the perimeter surface 172b of the roller 172. Along with the rotation of the roller 172, the proton solution 210 attached on the perimeter surface 172b is guided to the wet precursor membrane 67.

The guide roller 174a is disposed upstream from the roller 172, and the guide roller 174b is disposed downstream from the roller 172. The guide rollers 174a and 174b transport the wet precursor membrane 67, which has been sent from the edge slitting device 108 to the proton substitution chamber 170, in a predetermined direction.

A surface opposite to the first surface 67a (hereinafter referred to as second surface 67b) of the wet precursor membrane 67 transported by the guide rollers 174a and 174b is contacted to the part of the perimeter surface 172b of the roller 172 which carries the proton solution 210. By contacting the second surface 67b of the wet precursor membrane 67 and the perimeter surface 172b of the roller 172, the proton solution 210 carried on the perimeter surface 172b is coated onto the second surface 67b of the wet precursor membrane 67. In this way, a coating is formed on the second surface 67b of the wet precursor membrane 67.

The wet precursor membrane 67 whose second surface 67b has the coating formed thereon is transported to the coating applicator 151 by the guide rollers 174a and 174b. The coating applicator 151 coats the proton solution 110 onto the first surface 67a of the wet precursor membrane 67 to form the coating thereon.

The wet precursor membrane 67 whose first surface 67a has the coating of the proton solution 110 and second surface 67b has the coating of the proton solution 210 is transported to the heaters 158 and 175. The heater 158 heats the wet precursor membrane 67 from the first surface 67a side, and the heater 175 heats the same from the second

surface 67b side. The first surface 67a coated with the proton solution 110 and the second surface 67b coated with the proton solution 210 are each adjusted to be a desired temperature, and thereby the proton substitution is performed to the precursor contained in the wet precursor membrane 67. Thus, the precursor becomes the solid electrolyte. The undried solid electrolyte membrane obtained in this way goes through the washing process 76 (Fig. 2) and the second drying process 78 (Fig. 2) in the same manner as the former embodiments, and becomes a solid electrolyte membrane 180.

The heater 175 can heat the second surface 67b of the wet precursor membrane 67 at a desired temperature. The heater 175, like the heater 158, preferably keeps the temperature of the wet precursor membrane 67 at not less than 80°C and not more than 120°C. Note that the heaters used in the proton substitution chamber 86 may be used as the heaters 158 and 175.

The proton solution 110 is same as those used in the first and second embodiments. The proton solution 210 is not limited to the acid aqueous solution as long as it gives protons to proton acceptors of the precursor. As the proton solution 210, either of water, especially purified water, or a liquid containing the acid can be used. When the liquid containing the acid is used, proton concentration of the proton solution 210 is preferably lower than that of the proton solution 110, and the difference of the proton concentration between the proton solution 110 and the proton solution 210 is preferably not less than 0.05 mol/liter. Owing to this, the solid electrolyte membrane 180 with further excellent proton conductivity can be obtained. When the difference of the proton concentration is less than 0. 05 mol/liter, the solid electrolyte membrane 180 with further excellent proton conductivity cannot be obtained. As in the case of the proton solution 110, when the acid used for the proton solution 210 has formula weight of anion in the range of 40 to 1000, the proton substitution can be efficiently performed in the proton substitution process 73. Moreover, by adjusting the temperature of the proton solution 210 in the same range as the proton solution 110, the proton substitution rate is more improved.

Coating amount of the proton solution 210 on the second surface 67b by the coating applicator 171 is preferably not less than 2 ml/m$^2$ and not more than 100 ml/m$^2$. When the coating amount of the proton solution 210 is less than 2 ml/m$^2$, the proton substitution is not sufficiently performed in the wet precursor membrane 67, which is not preferable. When the coating amount of the proton solution 210 is more than 100 ml/m$^2$, the wet precursor membrane 67 is not stably transported, which is not preferable. Instead of the coating applicator 171, the coating applicator 151 (Fig. 4), or the known coating devices such as the rod coater and the gravure coater may be used. The coating applicators 151 and 171 are preferable in view of the facility in adjusting the coating amount of the proton solutions 110 and 210, and in view of that the solid electrolyte membrane producing process is performed on-line.

In the third embodiment, each process is performed in this order:

(1) coating of the proton solution 210 onto the second surface 67b of the wet precursor membrane 67,
(2) coating of the proton solution 110 onto the first surface 67a of the wet precursor membrane 67, and
(3) heating the wet precursor membrane 67 from the first surface 67a side and the second surface 67b side.

However, these processes may be performed in different order as long as the proton substitution is performed to the precursor by coating the proton solutions 110 and 210 each having the predetermined acid concentration onto the first surface 67a and the second surface 67b, respectively, and heating the wet precursor membrane 67 from the first surface 67a side and from the second surface 67b side at the predetermined temperature. For example, the proton solution 110 is coated onto the first surface 67a of the wet precursor membrane 67 and the first surface 67a is heated, and then the proton solution 210 is coated onto the second surface 67b of the wet precursor membrane 67 and the second surface 67b is heated, and the like.

The solid electrolyte membrane can be obtained by sequentially performing the proton substitution process 73, the washing process 76 and the second drying process 78 (Fig. 2) to the wet precursor membrane 67 dried and wound into a roll form, or to a wet precursor membrane fragment 189 cut out from the wet precursor membrane 67. The solid electrolyte membrane producing process is performed not only on-line but also off-line.

Hereinafter, a proton substitution device 190 as a fourth embodiment of the present invention is explained with referring to Fig. 6. The proton substitution device 190 performs the proton substitution off-line. The proton substitution device 190 is one example of the device performing the proton substitution to the wet precursor membrane 67 off-line, and the proton substitution device of the present invention is not limited to this. As shown in Fig. 6, the proton substitution device 190 includes a pipe 191, a mantle heater 193 and a securing ring 195. The mantle heater 193 has a container 193a and a temperature controlling section 193b. The container 193a contains the proton solution 110. The temperature controlling section 193b heats the container 193a, thereby keeping the temperature of the proton solution 100 within the predetermined range approximately constant.

The pipe 191 has first and second openings 191a and 191b at its opposite ends. At the first opening 191a side, an engagement groove is formed on a cylindrical periphery of the pipe 191. The securing ring 195 has a hollow part. A diameter of this hollow part at a first end 195a side of the securing ring 195 is formed approximately equal to an outer

diameter of the pipe 191. A securing portion 195c is formed on an inner peripheral wall of the securing ring 195 at a second end 195b side. A diameter of the hollow part at the second end 195b side of the securing ring 195, at which the securing portion 195c is formed, is approximately equal to an inner diameter of the pipe 191. At the first end 195a side, an engagement groove which is engaged to the engagement groove of the pipe 191 is formed on an inner peripheral wall of the securing ring 195. Thus, the first opening 191a side of the pipe 191 is fitted into the first end 195a side of the securing ring 195.

The wet precursor membrane fragment 189 which is cut out from the wet precursor membrane 67 is disposed between the first opening 191a of the pipe 191 and the first end 195a of the securing ring 195. When the pipe 191 is fitted to the securing ring 195, the securing portion 195c and an end surface 191c of the pipe 191 contact with each other through the wet precursor membrane fragment 189. Thereby, the wet precursor membrane fragment 189 is held such that it shields the first end 195a of the securing ring 195.

The pipe 191 is immersed in the proton solution 110 from the first opening 191a side. Thereafter, a predetermined amount of the proton solution 210 is poured in through the second opening 191b of the pipe 191. The temperature controlling section 193b of the mantle heater 193 heats the container 193a, and thereby the wet precursor membrane fragment 189 is heated at a desired temperature through the heating of the proton solution 110 and the proton solution 210. The proton substitution device 190 contacts the proton solution 110 to one surface of the wet precursor membrane fragment 189, and the proton solution 210 to the other surface of the same, and thereby the proton substitution is performed.

In the first embodiment, the liquid contacting process 66 (see Fig. 2) is performed by immersing the casting membrane 61 (see Fig. 3) in the contact liquid 100 contained in the liquid bath 83, and the peeling process 68 (see Fig. 2) is performed while the casting membrane 61 is in the contact liquid 100. Alternatively, the liquid contacting process 66 (see Fig. 2) is performed by coating the contact liquid 100 onto the casting membrane 61, and thereafter the peeling process 68 (see Fig. 2) is performed.

Next, a method and an apparatus for producing the solid electrolyte membrane as a fifth embodiment of the present invention are explained with referring to Figs. 7 and 8. In the fifth embodiment, the solvent substitution is performed after the peeling process. Note that the components identical to those of the first to fourth embodiments are denoted by the same reference numerals in Fig. 8, and descriptions thereof are omitted.

As shown in Fig. 7, a process 260 for producing the solid electrolyte membrane has a casting membrane forming process 263 for forming a casting membrane 261 from the dope 24 (see Fig. 1) containing the polymer as the precursor, a self-supporting property developing process 266 for developing a self-supporting property of the casting membrane 261 formed on a support, a peeling process 268 for peeling the casting membrane 261 from the support as a wet membrane (hereinafter referred to as wet precursor membrane) 267, a second liquid contacting process 270 for contacting the wet precursor membrane 267 and a substitution solvent, a liquid removing process 271 for removing the liquid as the substitution solvent attached on the wet precursor membrane 267 after the process 270, a first drying process 272 for drying the wet precursor membrane 267 after the process 271, a proton substitution process 276 for producing a wet solid electrolyte membrane 275 from the wet precursor membrane 267 by proton substitution, a washing process 277 for washing the wet solid electrolyte membrane 275, and a second drying process 278 for drying the wet solid electrolyte membrane 275 after the process 277 to produce a solid electrolyte membrane 279.

In the casting membrane forming process 263, the dope 24 (Fig. 1) is cast onto the support, and the casting membrane 261 is formed. The support is bridged across the drive rollers and runs endlessly. The casting membrane 261 is transported along the running of the support until the casting membrane 261 is peeled as the wet precursor membrane 267 in the peeling process 268.

Since the casting membrane 261 includes large amount of the organic solvent 11a (see Fig. 1) as well as the polymer which is the precursor of the solid electrolyte, the casting membrane 261 right after the formation does not possess the self-supporting property. In the self-supporting property developing process 266, the organic solvent 11a contained in the casting membrane 261 is partially removed, and each process for developing the self-supporting property of the casting membrane 261 is performed. The self-supporting property developing process 266 has a casting membrane drying process 266a and a first liquid contacting process 266b. The casting membrane drying process 266a may be omitted, but preferably performed so that the effect of the present invention is prominently expressed.

In the casting membrane drying process 266a, the casting membrane 261 on the support is dried by casting membrane drying devices. The casting membrane drying devices are arranged in the proximity of a transportation passage of the casting membrane 261. Owing to this drying, the organic solvent 11a contained in the casting membrane 261 is evaporated, and thereby the remaining amount of the organic solvent 11a in the wet precursor membrane 261 is decreased. In addition, the efficiency of the first liquid contacting process 266b is improved. A heater or a drying device which supplies dry air may be used as the casting membrane drying device.

In the first liquid contacting process 266b, the casting membrane 261 transported with the support is contacted to the poor solvent of the solid electrolyte. When the poor solvent (hereinafter referred to as contact poor solvent) is contacted, the organic solvent 11a in the casting membrane 261 is partially substituted by the contact poor solvent.

Owing to this, following two effects are obtained: (1) improvement of the self-supporting property of the casting membrane 261, and (2) improvement of the drying efficiency of the casting membrane 261. When the contact poor solvent is the poor solvent having a low boiling point, the good solvent in the casting membrane 261 is largely substituted by the contact poor solvent by the solvent substitution, and at the same time, the good solvent remaining in the casting membrane 261 comes to be easily dried due to azeotropy. Therefore, the effects of (1) and (2) can be expressed more prominently. Accordingly, the removal of the organic solvent 11a by drying devices is more facilitated. In this way, the remaining solvent amount in the casting membrane 261 is decreased. That is, the casting membrane 261 easily exerts the self-supporting property by the self-supporting property developing process 266.

In the peeling process 268, the casting membrane 261 having the self-supporting property is peeled from the support to be the wet precursor membrane 267. The wet precursor membrane 267 after the self-supporting property developing process 266 has the self-supporting property. The wet precursor membrane 267 having a predetermined range of the elastic modulus can be transported. The preferable range of the elastic modulus of the wet precursor membrane 267 in the peeling process 268 is referred to as "transportable range". The transportable range is preferably not less than $6\times10^5$ Pa. When the elastic modulus is less than $6\times10^5$ Pa, the wet precursor membrane 267 may be deformed by its own weight, which is not preferable.

In an on-line method, the respective processes in the solid electrolyte membrane producing process 260 are continuously performed. In this case, to obtain the wet precursor membrane 267 having the elastic modulus in the transportable range, parameters in the self-supporting property developing process 266 are optimized. As the parameters, there are the materials (the remaining solvent amount) constituting the wet precursor membrane 267, the temperature and concentration of the casting membrane 261 and so on. The optimum values of these parameters can be found through experimental results in the self-supporting property developing process 266. In addition, the elastic modulus of the wet precursor membrane 267 can be also found from variation in tension applied to rollers transporting the wet precursor membrane 267.

In an off-line method, the respective processes in the solid electrolyte membrane producing process 260 are performed by batch processing. In this case, the elastic modulus of the wet precursor membrane 267 can be measured by a tensile test with use of a tensile testing device, besides the above-described method. For example, the tensile test is performed by using an all-purpose tensile testing device produced by Toyo Baldwin Co. Ltd., (model No. STM T50BP), at the temperature of 23°C and the humidity of 70%RH atmosphere. A stress $\sigma1$ of the wet precursor membrane 267 is measured when the wet precursor membrane 267 is stretched with a tensile velocity of 10%/min and a strain $\varepsilon1^*$ of 0.5%. The elastic modulus of the wet precursor membrane 267 can be found by applying the measured stress $\sigma1$ and the strain $\varepsilon1$ into Hooke's law.

In the second liquid contacting process 270, the wet precursor membrane 267 is contacted to the liquid. A liquid which has high solubility in the organic solvent remained in the wet precursor membrane 267 is used as this liquid (hereinafter referred to as substitution solvent). By the contact between the substitution solvent and the wet precursor membrane 267, the remaining organic solvent in the wet precursor membrane 267 is substituted by the substitution solvent (hereinafter this process is referred to as solvent substitution). By the solvent substitution with use of the substitution solvent, the remaining solvent amount in the wet precursor membrane 267 is decreased. The solvent substitution is performed until the remaining solvent amount in the wet precursor membrane 267 reaches a predetermined value.

The second liquid contacting process 270 may be performed more than once. In this case, the substitution solvent for each process is preferably selected such that the boiling point of the solvent used for later process is lower than that of the solvent used for former process. Since the boiling point of the residual solvent in the wet precursor membrane 267 can be lowered by the several times of the second liquid contacting process 270, the drying process is facilitated after the second liquid contacting process 270.

In the liquid removing process 271, excess liquid on the wet precursor membrane 267 is removed by an air shower and the like. Owing to the liquid removing process 271, time required for drying the wet precursor membrane 267 in the first drying process 272 can be shortened.

In the first drying process 272, the wet precursor membrane 267 is dried by a drying device. Any type of the drying device can be used for drying the wet precursor membrane 267. In this embodiment, the tenter device is used. The tenter device has the drying device and the plurality of holders (for example, clips). The wet precursor membrane 267 is dried while the membrane is transported with the holders holding both side edges of the membrane. Further details about the tenter device will be described later.

In the proton substitution process 276, the wet precursor membrane 267 is contacted to the solution of acid (hereinafter referred to as proton solution). The proton solution is kept at a predetermined temperature. Owing to this contact, the proton substitution is performed to the precursor in the wet precursor membrane 267, and the wet precursor membrane 267 becomes the wet solid electrolyte membrane 275.

In the washing process 277, the proton solution attached on the surfaces of the wet solid electrolyte membrane 275 or the excess proton solution contained in the wet solid electrolyte membrane 275 is washed off by immersing the wet solid electrolyte membrane 275, to which the proton substitution has been performed, into the washing liquid. Owing

to the washing process 277, the polymer and so on constituting the wet solid electrolyte membrane 275 can be prevented from being contaminated by acid. In this embodiment, the washing process 277 is performed one time after the proton substitution process 276. However, for completely removing the excess acid attached on the wet solid electrolyte membrane 275, the washing process can be performed more than once.

In addition, by the proton substitution process 276 and the washing process 277, impurities such as inorganic salt can be also removed from the wet solid electrolyte membrane 275. Accordingly, the solid electrolyte membrane 279 produced from the wet solid electrolyte membrane 275 is prevented from deterioration.

In the second drying process 278, the wet solid electrolyte membrane 275 is sufficiently dried by the drying device. Accordingly, the solid electrolyte membrane 279 with superior proton conductivity can be obtained.

[Solid Electrolyte Membrane Producing Apparatus]

A membrane producing apparatus 300 used in the fifth embodiment of the present invention is shown in Fig. 8. The membrane producing apparatus 300 is designed for the solid electrolyte membrane producing process 260 (see Fig. 7). However, the configuration of the membrane producing apparatus 300 is one example. Hereinafter, the membrane producing apparatus 300 is described with following an example using the dope 24 including the polymer which is the precursor of the solid electrolyte.

The membrane producing apparatus 300 is provided with a casting chamber 310, a transporting chamber 311, the tenter device 85, a liquid bath 314, a water bath 315, the drying chamber 87, the moisture controlling chamber 88, and the winding device 90. In the casting chamber 310, the dope 24 is cast on the support to form the casting membrane 261. In the transporting chamber 311, the casting membrane 261 is dried by a drying device while it is transported along with the movement of the support. In the tenter device 85, the wet precursor membrane 267 which is obtained by peeling the casting membrane 261 from the support is further dried. In the liquid bath 314, proton substitution is applied to the wet precursor membrane 267, to produce the wet solid electrolyte membrane 275 from the wet precursor membrane 267. In the water bath 315, the wet solid electrolyte membrane 275 is washed. In the drying chamber 87, the wet solid electrolyte membrane 275 is dried to be the solid electrolyte membrane 279. In the moisture controlling chamber 88, amount of moisture in the solid electrolyte membrane 279 is controlled. In the winding device 90, the solid electrolyte membrane 279 with the controlled moisture is wound in a roll shape.

The membrane producing apparatus 300 is connected to the dope producing apparatus 10 through the stock tank 32. In the stock tank 32, a stirrer 302 rotated by a motor 301 is provided. The dope 24 prepared in the dope producing apparatus 10 is stocked in the stock tank 32. By the continuous rotation of the stirrer 302, precipitation and agglomeration of the solids in the dope 24 are prevented, and thereby maintaining the dope 24 uniform. Note that various additives may be mixed in the dope 24 while the stirring.

The casting chamber 310 is provided with the casting die 93 for casting the dope 24, and a belt 323 which is the support being transported.

Between the stock tank 32 and the casting die 93, the filtration device 96 is provided. The filtration device 96 filtrates the dope 24 to remove foreign matters having the particle size larger than the predetermined size and those in gel-form. To remove the foreign matters, the diameter of the filter of the filtration device 96 is preferably 10 $\mu$m or less.

The belt 323 provided below the casting die 93 is bridged across the rollers 97 and 98, and is continuously transported by the driving and rotation of at least one of the rollers 97 and 98. The belt 323 is endlessly transported around the casting chamber 310, the transporting chamber 311 and a tank described later.

The width of the belt 323 is preferably in the range of 1.1 times to 2.0 times larger than the casting width of the dope 24. Furthermore, the length of the belt 323 is preferably 20 m to 200 m. The thickness of the belt 323 is preferably 0.5 mm to 2.5 mm. Furthermore, the belt 323 is preferably polished such that the surface roughness is 0.05 $\mu$m or less.

Material of the belt 323 may be, for example, inorganic material such as stainless material or a plastic film of organic material may be used. The plastic film is preferably nonwoven plastic fabric made of polyethylene terephthalate (PET) film, polybutylene terephthalate (PBT) film, nylon 6 film, nylon 6, 6 film, polypropylene film, polycarbonate film, and polyimide film. The belt 323 of a long length is preferable. It is preferable that the belt 323 has chemical stability against the solvent used. It is also preferable that the belt 323 is heat-resistant to endure the temperature of the membrane production. Note that in this embodiment, the PET film is used as the belt 323.

The decompression chamber (not shown) is preferably provided in the upstream area from a casting bead. The casting bead is the ribbon-shaped portion of the dope 24 formed between the casting die 93 and the belt 323. The decompression chamber keeps a pressure at the upstream area from the casting bead lower than a pressure at the downstream area from the casting bead in the moving direction of the belt 323. In the proximity of the belt 323, an air blower (not shown) is provided for blowing air onto the casting membrane 261 to evaporate the solvent therein. It is preferable that an air shielding plate is provided for preventing the air which may damage the surface of the casting membrane 261 from blowing onto the casting membrane 261. In the casting chamber 310, a temperature controller and a condenser (both are not shown) are provided. The temperature controller keeps the temperature inside the casting

chamber 310 at a predetermined value. The condenser condenses vapor of the organic solvent. The condenser is preferably provided with a recovery device which recovers the condensed and liquefied organic solvent.

A drying device 328a is provided at downstream side from the casting die 93, near the transportation passage of the belt 323. The drying device 328a applies dry air to the casting membrane 261. Temperature and humidity of the dry air is controlled to satisfy the drying condition for the casting membrane 261. If the casting membrane 261 absorbs the moisture in the air, it may cause separation of the layers and solidification of the membrane. As a result, a percentage of voids of the obtained solid electrolyte membrane may increase. Because the casting membrane 261 right after the formation easily absorbs the moisture, it is preferable that the humidity of the dry air is low. Particularly, the humidity is less than 50%RH, and more preferably less than 20%RH. The temperature of the dry air is preferably less than 100°C, more preferably not less than 20°C and not more than 70°C, and most preferably about 45°C.

Inside the transporting chamber 311, drying devices 328b, 328c and 328d each of which feeds dry air whose temperature is controlled to a predetermined value, for drying the casting membrane 261 are provided. It is preferable that the transporting chamber 311 is divided into plural areas and each of the drying devices 328b to 328d is attached to the corresponding area, for independently controlling the temperature and humidity in each area. The number of areas in the transporting chamber 311 is not limited, but it is preferable that the drying temperature inside the transporting chamber 311 is controlled to be not less than 30°C and not more than 60°C. Since the casting membrane 261 transported by the belt 323 is gradually dried, variation in shape of the membrane 261 such as wrinkles or slacks caused from rapid evaporation of the solvent is prevented. In addition, in the transporting chamber 311, a condenser 329 for recovering vaporized solvent generated from drying the casting membrane 261 is provided. The condenser 329 preferably has a recovery device for recovering the condensed and liquefied organic solvent.

The drying device 328b is provided at upstream side in the transporting chamber 311 in the transporting direction of the belt 323. The drying device 328c is provided at downstream side from the drying device 328b, and the drying device 328d is provided at downstream side from the drying device 328c, in the transporting chamber 311. The drying devices 328b to 328d apply the respective dry air to the casting membrane 261. The blow direction of the dry air is approximately same as the moving direction of the casting membrane 261.

In the transporting chamber 311, a coating applicator 350 is provided between the drying device 328c and the drying device 328d, near the transportation passage of the belt 323. The coating applicator 350 has the same structure as the casting die 93, and is connected to a liquid bath 351. In the liquid bath 351, a contact poor solvent 352 is stored. The coating applicator 350 brings the contact poor solvent 352 stored in the liquid bath 351 into contact with the casting membrane 261 transported by the belt 323. Owing to the coating applicator 350, the solvent substitution is performed between the organic solvent 11a in the casting membrane 261 and the contact poor solvent 352.

The liquid bath 351 is connected to a temperature controlling section 351a. The temperature controlling section 351a keeps the temperature of the contact poor solvent 352 in a predetermined range. The temperature is preferably kept at not less than 10°C and not more than 70°C. When the temperature of the contact poor solvent 352 is less than 10°C, the gelation of the membrane cannot sufficiently be performed. When the temperature of the contact poor solvent 352 is more than 70°C, the membrane base is possibly deformed by rapid gelation.

In consideration of promotion of efficiency of the solid electrolyte membrane producing process 260, it is preferable that the contact poor solvent 352 is a compound having a property as the poor solvent to the polymer in the dope 24. More preferably, the compound has excellent solubility in the organic solvent 11a (see Fig.1).

Water, aqueous solution of the poor solvent compound to the polymer, or the like is preferably used as the contact poor solvent 352. The water as the contact poor solvent 352 is required not to include impurities. For example, purified water, distillated water and ion-exchanged water are preferably used. In this embodiment, the purified water is used as the contact poor solvent 352. In addition, aqueous DMSO solution can be used as the contact poor solvent 352. By using the aqueous DMSO solution as the contact poor solvent 352, solvent extraction speed in the solvent substitution can be controlled. In addition, a type of the aqueous DMSO solution having lower boiling point is preferably used. Concretely, it is preferable that weight percentage K of the water to DMSO is not less than 1% and not more than 50%. The weight percentage K is represented as the following formula: $100 \times w1/(w1 + w2)$. In the formula, w1 is the weight of the water included in the aqueous DMSO solution, and w2 is the weight of DMSO included in the aqueous DMSO solution. Note that as the contact poor solvent 352, an aqueous solution of two or more kinds of the organic solvent may be used. Even when the polymer is the compound shown as the chemical formula 1, the contact poor solvent 352 described above can be used. Particularly, the aqueous DMSO solution which can control the solvent extraction speed is especially preferable.

It is preferable that the coating amount of the contact poor solvent 352 on one surface of the wet precursor membrane 267 is controlled to be not less than 2 ml/$m^2$ and not more than 100 ml/$m^2$, with use of the coating applicator 350. When the coating amount of the contact poor solvent 352 is less than 2 ml/$m^2$, the solvent substitution is possibly performed insufficiently and the wet precursor membrane 267 may not obtain the sufficient self-supporting property, which is not preferable. When the coating amount of the contact poor solvent 352 is more than 100 ml/$m^2$, the wet precursor membrane 267 cannot be transported stably, which is not preferable. Any known coater such as the slot die,

rod coater and gravure coater may be used instead of the coating applicator 350. Note that in so-called online method, in which the contact poor solvent 352 is coated on the casting membrane 261 transported by the belt 323 for producing the solid electrolyte membrane, the coating applicator 350 or the slot die is suitable. Also, in consideration of the coating amount of the contact poor solvent 352 described above, the coating applicator 350 or the slot die is suitable.

A peel roller 333 is provided near the transportation passage of the belt 323 outside the transporting chamber 311. The peel roller 333 peels the casting membrane 261 having the self-supporting property from the belt 323, as the wet precursor membrane 267. The belt 323 from which the casting membrane 261 is peeled off is guided into the transporting chamber 311 by guide rollers.

In addition, a tank 335 is provided at downstream side from the peel roller 333. The tank 335 has guide rollers 335a and a temperature controlling section 335b. The temperature controlling section 335b keeps the temperature of a substitution solvent 334 in the tank 335 at a predetermined value. By contact between the wet precursor membrane 267 and the substitution solvent 334, the solvent substitution is performed between the organic solvent 11a remained in the wet precursor membrane 267 and the substitution solvent 334. In order to efficiently perform the solvent substitution, the temperature of the substitution solvent 334 is preferably kept at not less than 10°C and not more than 70°C. The guide rollers 335a transport the wet precursor membrane 267 out of the substitution solvent 334, after the wet precursor membrane 267 peeled from the belt 323 is immersed in the substitution solvent 334.

Preferably used as the substitution solvent 334 is a compound having high solubility in the organic solvent in the wet precursor membrane 267 and having a property as the poor solvent to the solid electrolyte. In addition, the used compound preferably can control the solvent extraction speed. For example, purified water, ion-exchanged water, aqueous solution of the organic solvent, and so on are preferably used. Owing to the second liquid contacting process 270 (see Fig. 7), the solvent substitution is performed in the wet precursor membrane 267, and amount of the remaining solvent in the wet precursor membrane 267 is decreased. In the wet precursor membrane 267 after the solvent substitution, the organic solvent 11a, the contact poor solvent 352, and the substitution solvent 334 still remain. Accordingly, it is preferable that liquid with low boiling point is used as the substitution solvent 334. Usage of the substitution solvent 334 with low boiling point lowers the boiling point of the residual solvent in the wet precursor membrane 267, and thereby the residual solvent can be easily removed at short times in the first drying process 272 described later. In this embodiment, the substitution solvent 334 is the purified water.

When the contact liquid 100 is used as the substitution solvent 334, equivalent effects as described above can be obtained.

In the second liquid contacting process 270, any method can be used to contact the wet precursor membrane 267 and the substitution solvent 334. For example, the substitution solvent 334 may be coated or sprayed onto the wet precursor membrane 267. Also, the wet precursor membrane 267 may be immersed in the substitution solvent 334. Time for contacting the wet precursor membrane 267 and the substitution solvent 334 is preferably not more than 10 minutes in the second liquid contacting process 270. When the contact time is more than 10 minutes, thickness fluctuation of the dried solid electrolyte membrane 279 becomes large by expansion of moisture in the wet precursor membrane 267. At the time of the second liquid contacting process 270, the remaining solvent in the wet precursor membrane 267 has been decreased owing to the formerly performed self-supporting property developing process 266. Therefore, generation of pores is prevented at the contact between the wet precursor membrane 267 and the substitution solvent 334 in the second liquid contacting process 270. Thus, the solid electrolyte membrane 279 with few defects can be obtained.

At a position downstream side from the tank 335 and upstream side from the tenter device 85, the pair of air showers 103 which has air outlets toward both surfaces of the wet precursor membrane 267 is provided. In the tenter device 85, a drying device (not shown) for feeding dry air and the clips 85a running accompany with the movement of the chain (not shown) are provided. The edge slitting device 108 for slitting both side edges of the wet precursor membrane 267 is provided at a position downstream from the tenter device 85. The edge slitting device 108 is provided with the crusher 108a for crushing the side edges cut off from the wet precursor membrane 267 into chips.

The liquid bath 314 is provided downstream from the edge slitting device 108. In the liquid bath 314, the proton solution 110 is stored. The liquid bath 314 has a temperature controlling section 314a and guide rollers 314b. The temperature controlling section 314a keeps the temperature of the proton solution 110 in the liquid bath 314 at a predetermined value. The guide rollers 314b transport the wet precursor membrane 267 out of the proton solution 110, after the wet precursor membrane 267 is immersed in the proton solution 110. The wet precursor membrane 267 immersed in the proton solution 110, which is kept at the predetermined temperature, becomes the wet solid electrolyte membrane 275 by the proton substitution.

The water bath 315 is provided downstream from the liquid bath 314. In the water bath 315, the washing liquid 121 is stored. The water bath 315 has a temperature controlling section 315a and guide rollers 315b. The temperature controlling section 315a keeps the temperature of the washing liquid 121 in the water bath 315 at a predetermined value. The guide rollers 315b transport the wet solid electrolyte membrane 275 out of the washing liquid 121, after the wet solid electrolyte membrane 275 is immersed in the washing liquid 121. In order to efficiently wash off the acid, the temperature

of the washing liquid 121 is preferably at not less than 30°C and not more than the boiling point of the washing liquid 121.

Other conditions of the washing process 277 is same as those of the washing process 77.

The drying chamber 87 is provided downstream from the water bath 315. The drying chamber 87 is provided with the rollers 127, the absorbing device 128 for recovering the evaporated solvent in the drying chamber 87, and the drying device (not shown) for feeding the dry air are provided. In the moisture controlling chamber 88 located downstream from the drying chamber 87, the rollers 127 same as those in the drying chamber 87, and the temperature controller and the moisture controller (both are not shown) are provided. At a position downstream side from the moisture controlling chamber 88, preferably provided the neutralization device (not shown) such as the neutralization bar, for controlling the charged voltage of the solid electrolyte membrane 279 within a predetermined range (for instance from -3 kV to +3 kV). In addition, it is preferable that the knurling roller pair (not shown) is provided for embossing the both side edges of the solid electrolyte membrane 279. In the winding device 90, the winding roll 130 and the press roller 131 are provided. The winding roll 130 winds up the solid electrolyte membrane 279. The press roller 131 controls the tension of the membrane 279 at the time of winding.

Next, an example of the method for producing the solid electrolyte membrane 279 with use of the membrane producing apparatus 300 is described.

The dope 24 stored in the stock tank 32 is fed into the filtration device 96 by the pump 95. In the filtration device 96, impurities which cause reduction of properties, especially the proton conductivity, of the solid electrolyte membrane 279 are removed from the dope 24.

The filtrated dope 24 is sent to the casting die 93 and cast from the casting die 93 onto the belt 323 while forming the casting bead. At this time, the relative positions of the rollers 97 and 98, and the rotation speed of at least one of the rollers 97 and 98 are adjusted so as to control the tension of the belt 323 in the range of $10^3$ N/m to $10^6$ N/m. Moreover, a relative speed difference between the belt 323 and the rollers 97 and 98 are adjusted to be 0.01 m/min or less. At the time of casting the dope, the casting amount of the dope 24 is determined in consideration of the concentration of the dope 24 and the required thickness of the membrane as the end product.

Preferably, speed fluctuation of the belt 323 is 0.5% or less, and meandering thereof caused in a width direction while the belt 323 makes one rotation is 1.5 mm or less. In order to control the meandering, it is more preferable to provide the detector (not shown) and the position controller (not shown) to perform feedback control of the position of the belt 323. The detector detects the positions of both sides of the belt 323. The position controller adjusts the position of the belt 323 according to a measurement value of the detector. With respect to a portion of the belt 323 located directly below the casting die 93, it is preferable that vertical positional fluctuation caused in association with the rotation of the rollers 97 and 98 is adjusted to be 200 $\mu$m or less. Furthermore, it is preferable that the temperature in the casting chamber 310 is adjusted to be not less than -10°C and not more than 57°C by the temperature controlling device (not shown). Preferably the solvent vapor in the casting chamber 310 is collected by the recovery device (not shown) and is recycled and reused as the solvent for preparing the dope. This configuration is advantageous in terms of reducing the production cost, and so forth.

In order to stabilize the casting bead, it is preferable that the upstream area from the casting bead in the transporting direction of the belt 323 is decompressed by the decompression chamber to achieve a predetermined pressure value. Preferably, the upstream area from the casting bead is decompressed within the range of -2500 Pa to -10 Pa relative to the downstream area from the casting bead. Moreover, it is preferable that the jacket (not shown) is attached to the decompression chamber to maintain the inside temperature at a predetermined value. Furthermore, it is preferable to attach the suction unit (not shown) to the edge of the casting die 93 and suction both sides of the bead in order to keep a desired shape of the casting bead. A preferable range of air volume aspirated in the edge portion is 1 L/min to 100 L/min.

The casting membrane 261 on the belt 323 is moved by driving the rollers 97 and 98 which endlessly move the belt 323. In the casting chamber 310 and the transporting chamber 311, the organic solvent contained in the casting membrane 261 is evaporated by the dry air fed from the drying devices 328a to 328d. The drying device 328a applies the dry air having the temperature of 45°C and the humidity of 10%RH to the casting membrane 261 being transported. The condenser 329 condenses and recovers the solvent vapor in the transporting chamber 311.

In this way, the self-supporting property is given to the casting membrane 261 by the solvent substitution with use of the contact poor solvent 352 and the drying process with use of the drying device 328a to 328d. Accordingly, the elastic modulus of the casting membrane 261 reaches a degree that the casting membrane 261 can be peeled from the belt 323.

The peel roller 333 peels the casting membrane 261 as the wet precursor membrane 267 from the belt 323. The belt 323 from which the casting membrane 261 is peeled off is fed into the casting chamber 311 again, since the belt 323 is moved endlessly by the driving of the rollers 97 and 98. The guide rollers 335a guide the wet precursor membrane 267 into the substitution solvent 334. Thereby, the wet precursor membrane 267 is contacted to the substitution solvent 334. The substitution solvent 334 is dissolved in the organic solvent remained in the wet precursor membrane 267, and thereby the solvent substitution is performed between the substitution solvent 334 and the remaining organic

solvent in the wet precursor membrane 267.

By the guide rollers 335a, the wet precursor membrane 267 is fed out from the tank 335. The air showers 103 blow air to the surfaces of the wet precursor membrane 267 to remove moisture attached thereon. The wet precursor membrane 267 is fed into the tenter device 85. In the tenter device 85, the clips 85a hold the both side edges of the wet precursor membrane 267 and move along with the movement of the chain. While the wet precursor membrane 267 is being transported, the dry air whose temperature is controlled to the predetermined value is applied to the wet precursor membrane 267, to promote the drying of the wet precursor membrane 267. Note that pins can be used instead of the clips 85a. The pins penetrate the both side edges of the wet precursor membrane 267 to hold it. It is preferable that the temperature of the dry air is controlled such that inside temperature of the tenter device 85 becomes not less than 80°C and not more than 150°C. In this embodiment, the inside temperature of the tenter device 85 is controlled to be approximately 120°C. It is preferable that inside the tenter device 85 is divided into four areas, and drying condition in each area is independently controlled. Owing to the drying in the tenter device 85, the amount of the remaining solvent in the wet precursor membrane 267 reaches approximately 10 wt.% on a dry basis. The remaining solvent on a dry basis is calculated by the following formula: $[(x1-y1)/y1]\times 100$, where x1 is the weight of the membrane at the time of sampling, and y1 is the weight of the same after the drying.

In the tenter device 85, the wet precursor membrane 267 can be stretched in the width direction. By controlling the tension in the transporting direction applied to the wet precursor membrane 267 before fed into the tenter device 85, the wet precursor membrane 267 can also be stretched in the transporting direction. In case that the wet precursor membrane 267 is stretched, the membrane 267 is preferably stretched in at least one of the transporting direction and the width direction by 100.5% to 300% with respect to the size of the wet precursor membrane 267 before the stretching. Owing to this, molecular orientation in the wet precursor membrane 267 can be controlled.

The wet precursor membrane 267 is fed into the edge slitting device 108, where the both side edges of the membrane 267 are cut off. Since the portions damaged by the clips 85a are cut off, planarity of the wet precursor membrane 267 can be improved. The cut edges are sent to the crusher 108a by the cutter blower (not shown) and shredded into chips therein. When the chips are recycled as polymer material for preparing the dope, the material is efficiently utilized and the production cost is reduced. The slitting process for the membrane side edges may be omitted. However, it is preferable to perform the slitting process between the peeling process and the winding process.

The wet precursor membrane 267 is fed into the liquid bath 314 and immersed into the proton solution 110. Owing to the immersion into the proton solution 110, the polymer which is the precursor contained in the wet precursor membrane 267 is subjected to the proton substitution, and thereby the wet precursor membrane 267 becomes the wet solid electrolyte membrane 275.

Next, the wet solid electrolyte membrane 275 after the sufficient proton substitution is fed into the water bath 315 and immersed into the purified water as the washing liquid 121. Thereby, sulfuric acid aqueous solution as the proton solution 110 excessively attached on the wet solid electrolyte membrane 275 can be removed.

Then, the wet solid electrolyte membrane 275 is fed into the drying chamber 87. In the drying chamber 87, the drying device feeds the dry air and dries the wet solid electrolyte membrane 275. At this time, the wet solid electrolyte membrane 275 is transported while being bridged across the rollers 127. The temperature inside the drying chamber 87 is not particularly limited. However, it is preferable to determine the temperature according to the heat resistance (glass transition point Tg, heat deflection temperature under load, melting point Tm, continuous working temperature and the like) of the solid electrolyte, and the temperature is preferably not less than 50°C and not more than the Tg of the solid electrolyte. In this embodiment, the temperature inside the drying chamber 87 is preferably not less than 50°C and not more than 200°C, and more preferably not less than 120°C and not more than 185°C. The wet solid electrolyte membrane 275 is preferably dried until the remaining solvent amount reaches less than 10 wt.% on a dry basis. The solvent vapor generated by drying the wet solid electrolyte membrane 275 in the drying chamber 87 is adsorbed and recovered by the absorbing device 128. The air from which the solvent is removed is supplied to the drying chamber 87 as the dry air. Owing to the drying in the drying chamber 87, the wet solid electrolyte membrane 275 becomes the solid electrolyte membrane 279.

The drying chamber 87 is preferably divided into plural sections in the transporting direction so as to change the temperature of the dry air in each section. It is also preferable to provide the predrying chamber (not shown) between the edge slitting device 108 and the drying chamber 87 to predry the wet solid electrolyte membrane 275. Thereby, in the drying chamber 87, an abrupt increase of the membrane temperature is prevented so that drastic changes in shape and conditions of the wet solid electrolyte membrane 275 are prevented. Owing to this, the solid electrolyte membrane 279 with few changes in shape is obtained.

In a case where the contact poor solvent 352 and the substitution solvent 334 have the same property, the first liquid contacting process 266b, the peeling process 268, and the second liquid contacting process 270 can be performed while the membrane is immersed in the solvent. In this method, required time for producing the solid electrolyte membrane 279 can be further reduced.

In the above embodiment, although the casting membrane drying process 266a and the first liquid contacting

process 266b are performed in the self-supporting property developing process 266, the casting membrane drying process 266a can be omitted. However, for performing whole the self-supporting property developing process 266 in a short time, it is preferable to perform the casting membrane drying process 266a in order to give the self-supporting property to the casting membrane 261 in a short time.

Although the contact poor solvent 352 is coated on the casting membrane 261 with use of the coating applicator 350 in the first liquid contacting process 266b, the contact poor solvent 352 may be sprayed on the casting membrane 261. In addition, the drying device 328d for drying the casting membrane 261 after the contact with the contact poor solvent 352 can be omitted. The drying of the casting membrane 261 with use of the drying device 328d is effective as long as the good solvent of the polymer in the casting membrane 261 can be further removed. However, in case the contact poor solvent 352 in the casting membrane 261 is vaporized by the drying device 328d, the drying of the casting membrane 261 after the contact with the contact poor solvent 352 is preferably not preformed.

In the washing process 277, the wet solid electrolyte membrane 275 is immersed in the washing liquid 121. However, the washing method is not particularly limited to the above as long as the method is capable of removing the acid by contacting the wet solid electrolyte membrane 275 to the washing liquid 121. For instance, it is also possible to coat or spray the washing liquid 121 onto the wet solid electrolyte membrane 275. Such methods are preferable because they are applicable while the wet solid electrolyte membrane 275 is being transported continuously.

In the above embodiment, instead of the polymer which is the precursor of the solid electrolyte, the dope including the polymer which is the solid electrolyte can be used for forming the casting membrane. The wet solid electrolyte membrane may be obtained by performing the above-described peeling process 268 to this casting membrane. The obtained wet solid electrolyte membrane goes through the second liquid contacting process 270, the liquid removing process 271, the first drying process 272, and the second drying process 278, and becomes the solid electrolyte membrane. In this case, the proton substitution process 276 and the washing process 277 in the solid electrolyte membrane producing process 260 (see Fig. 7) can be omitted.

When the dope including the polymer which is the solid electrolyte is used instead of the dope including the polymer which is the precursor, equivalent effects as described in the above embodiment can be obtained. When using the dope including the polymer which is the solid electrolyte, the proton substitution process 276, the washing process 277, and the second drying process 278 in the solid electrolyte membrane producing process 260 (see Fig. 7) can be omitted. When the dope including the solid electrolyte having protons is used in the solid electrolyte membrane producing process 260, the protons in the solid electrolyte are easily dissociated due to the influences of the temperature and the humidity during the membrane production process. As a result, the solid electrolyte membrane having superior proton conductivity may not be obtained. Therefore, the dope including the polymer which is the precursor of the solid electrolyte is preferably used in the solid electrolyte membrane producing process 260 (see Fig. 7).

Hereinafter, the method for producing the solid electrolyte membrane as a sixth embodiment of the present invention is explained. Fig. 9 shows a membrane producing apparatus 400 used in this embodiment. However, the configuration of the membrane producing apparatus 400 is one example. Note that the components identical to those of the first to fifth embodiments are denoted by the same reference numerals in Fig. 9, and descriptions thereof are omitted.

The membrane producing apparatus 400 is provided with the filtration device 96, a casting chamber 411, a first liquid bath 413, the tenter device 85, a second liquid bath 415, a third liquid bath 416, a drying chamber 424, a moisture controlling chamber 425 and, a winding device 428. The filtration device 96 filtrates the dope 24 before the casting to remove impurities such as coarse particles or foreign matters contained in the dope 24. In the casting chamber 411, the dope 24 after the filtration is cast on a support to form a casting membrane 410. In the first liquid bath 413, a wet precursor membrane 412 obtained by peeling the casting membrane 410 from the support is immersed in the substitution solvent 334. In the tenter device 85, the wet precursor membrane 412 is further dried while the wet precursor membraner 412 is held at its both side edges and being transported. In the second liquid bath 415, the wet precursor membrane 412 is immersed in the proton solution 110 to form a wet solid electrolyte membrane 414. In the third liquid bath 416, the wet solid electrolyte membrane 414 is washed by immersing it in the washing liquid 121. In the drying chamber 424, the wet solid electrolyte membrane 414 is further dried while being held and transported by rollers 420, to be a solid electrolyte membrane 422. In the moisture controlling chamber 425, amount of moisture in the solid electrolyte membrane 422 is controlled. In the winding device 428, the solid electrolyte membrane 422 is wound by a winding roll 427.

The membrane producing apparatus 400 is connected to the dope producing apparatus 10 through the stock tank 32. Appropriate amount of the dope 24 is fed to the membrane producing apparatus 400 by the pump 95 as necessary. In the stock tank 32, the stirrer 302 rotated by the motor 301 is provided. By the continuous rotation of the stirrer 302, precipitation and agglomeration of the solids in the dope 24 contained in the stock tank 32 are prevented.

The casting chamber 411 is provided with the casting die 93 for casting the dope 24, and a belt 431 which is a support being transported. The belt 431 is bridged across the rollers 97 and 98, and is continuously transported by the driving and rotation of at least one of the rollers 97 and 98.

The width of the belt 431 is not particularly limited. However, the width is preferably in the range of 1.1 times to 2.0 times larger than the casting width of the dope 24. Furthermore, the length of the belt 431 is preferably 20 m to

200 m. The thickness of the belt 431 is preferably 0.5 mm to 2.5 mm. Furthermore, the belt 431 is preferably polished such that the surface roughness is 0.05 $\mu$m or less.

Material of the belt 431 is not particularly limited. For example, inorganic material such as stainless material or a plastic film of organic material may be used. The plastic film is preferably nonwoven plastic fabric made of polyethylene terephthalate (PET) film, polybutylene terephthalate (PBT) film, nylon 6 film, nylon 6, 6 film, polypropylene film, polycarbonate film, polyimide film and the like. The belt 431 of a long length is preferable. It is preferable that the belt 431 has chemical stability against the solvent used. It is also preferable that the belt 431 is heat-resistant to endure the temperature of the membrane production. Note that in this embodiment, the PET film is used as the belt 431.

The decompression chamber (not shown) is preferably provided in the upstream area from a casting bead. The casting bead is the ribbon-shaped portion of the dope 24 formed between the casting die 93 and the belt 431. The decompression chamber keeps a pressure at the upstream area from the casting bead lower than a pressure at the downstream area from the casting bead in the moving direction of the belt 431. Owing to this, waves do not occur on a surface of the casting bead, and the formed casting bead is stabilized. Thereby, the casting membrane 410 with excellent planarity can be obtained.

A first air blower 442 and a second air blower 443 as drying devices for evaporating the organic solvent contained in the casting membrane 410 are provided in the proximity of the belt 431. The respective first and second air blowers 442 and 443 have an air outlet. The air outlet feeds dry air whose temperature is adjusted, and thereby the casting membrane 410 is dried. In the present invention, the number and the positions of the first and second air blowers 442 and 443 are not especially limited, but may be selected as desired. An air shielding member is preferably provided near the air outlet of each air blower so that the fed air flow is controlled. For this configuration, waves do not occur on the surface of the casting membrane 410, which is preferable.

A purified water contacting device 445 for spraying purified water onto the casting membrane 410 on the belt 431 is provided near an exit of the casting chamber 411. The purified water contacting device 445 stores the purified water and has a temperature controlling section (not shown). The temperature controlling section keeps the temperature of the purified water in a predetermined range constantly. In addition, the casting chamber 411 is provided with a peel roller 448, a temperature controller 449, and a condenser 450. The peel roller 448 is used for peeling the casting membrane 410 from the belt 431. The temperature controller 449 keeps the temperature inside the casting chamber 411 at a predetermined value. The condenser 450 recovers vapor of the organic solvent generated by drying the casting membrane 410. The condenser 450 is preferably provided with the recovery device which recovers the condensed and liquefied organic solvent.

In the first liquid bath 413, the substitution solvent 334 is stored. A liquid soluble in both the good solvent compound and the poor solvent compound included in the dope 24 is used as the substitution solvent 334. Preferably used is one of a mixture of water and the good solvent of the polymer included in the dope 24, a mixture of water and the poor solvent of the polymer, and a mixture of water and the organic solvent. The organic solvent is not limited to the organic compound used in the dope 24. As the organic solvent, for example, acetone may be used. However, the substitution solvent 334 is not particularly limited as long as it does not dissolve the wet precursor membrane 412. Therefore, the substitution solvent 334 may be a mixture or a single compound of the poor solvent, the good solvent and the organic solvent.

An air shower 446 for removing the substitution solvent 334 attached on a surface of the wet precursor membrane 412 is provided downstream from the first liquid bath 413. In the tenter device 85, the drying device (not shown) for feeding dry air, and the clips 85a are provided. The clips 85a hold both side edges of the wet precursor membrane 412 and move along with the movement of the chain (not shown). In the tenter device 85, pins can be used instead of the clips 85a. The pins penetrate the both side edges of the wet precursor membrane 412 to hold it. In this condition, the wet precursor membrane 412 can be transported.

The edge slitting device 108 for slitting the both side edges of the wet precursor membrane 412 is provided at a position downstream from the tenter device 85. The edge slitting device 108 is provided with the crusher 108a for crushing the side edges cut off from the wet precursor membrane 412 into chips.

In the second liquid bath 415, the proton solution 110 is stored. A solution containing acid is used as the proton solution 110. The acid is preferably a compound having formula weight of anion in the range of 40 to 1000 at the time of the ionization. As the acid contained in the proton solution 110, for example, sulfuric acid, phosphoric acid, nitric acid, organic sulfonic acid and the like may be used. Above all, sulfuric acid is preferably used. In this embodiment, 0.5 mol/liter of sulfuric acid is used, and the solution containing this amount of sulfuric acid is heated and kept at 30°C.

In the third liquid bath 416, the washing liquid 121 is stored. In this embodiment, water is used as the washing liquid 121.

The drying chamber 424 is provided with the rollers 420, the drying device (not shown), and an absorbing device 460 for recovering the evaporated solvent from the wet solid electrolyte membrane 414. The moisture controlling chamber 425 is provided with the rollers 420 same as those of the drying chamber 424, and the temperature controller and the moisture controller (both are not shown). It is also preferable to provide the cooling chamber (not shown) between

the drying chamber 424 and the moisture controlling chamber 425. In the cooling chamber, the solid electrolyte membrane 422 is cooled to approximately room temperature, and thereby preventing the deformation of the solid electrolyte membrane 422 due to the temperature alteration. At a position downstream side from the moisture controlling chamber 425, preferably provided the neutralization device (not shown) such as the neutralization bar, for controlling the charged voltage of the solid electrolyte membrane 422 within a predetermined range (for instance from -3 kV to +3 kV). In addition, it is preferable that the knurling roller pair (not shown) is provided for embossing the both side edges of the solid electrolyte membrane 422. The winding device 428 is provided with the winding roll 427, and a press roller 462 for controlling the tension of the membrane 422 at the time of winding.

Next, a flow of the method for producing the solid electrolyte membrane 422 with use of the membrane producing apparatus 400 is described.

First of all, the dope 24 is fed into the filtration device 96 by the pump 95. In the filtration device 96, impurities whose particle size is larger than the predetermined size and those in gel-form are removed from the dope 24. The filtrated dope 24 is cast from the casting die 93 onto the belt 431 running by the rotation of the rollers 97 and 98. At this time, the relative positions of the rollers 97 and 98, and the rotation speed of at least one of the rollers 97 and 98 are adjusted so as to control the tension of the belt 431 in the range of $10^3$ N/m to $10^6$ N/m. Moreover, a relative speed difference between the belt 431 and the rollers 97 and 98 are adjusted to be 0.01 m/min or less. At the time of casting the dope, the casting amount of the dope 24 is determined in consideration of the concentration of the dope 24 and the required thickness of the membrane as the end product.

Preferably, speed fluctuation of the belt 431 is 0.5% or less, and meandering thereof caused in a width direction while the belt 431 makes one rotation is 1.5 mm or less. In order to control the meandering, it is more preferable to provide the detector (not shown) and the position controller (not shown) to perform feedback control of the position of the belt 431. The detector detects the positions of both sides of the belt 431. The position controller adjusts the position of the belt 431 according to a measurement value of the detector. With respect to a portion of the belt 431 located directly below the casting die 93, it is preferable that vertical positional fluctuation caused in association with the rotation of the rollers 97 and 98 is adjusted to be 200 $\mu$m or less.

It is preferable that the temperature in the casting chamber 411 is adjusted to be not less than -10°C and not more than 57°C by the temperature controller 449. The solvent vapor generated in the casting chamber 411 is collected by the condenser 450 after being condensed and liquefied. The collected solvent is recycled and reused as the solvent for preparing the dope. This configuration is preferable in terms of reducing the production cost.

Between the casting die 93 and the belt 431, the casting bead is formed. In order to stabilize the casting bead, it is preferable that the upstream area from the casting bead in the transporting direction of the belt 431 is decompressed by the decompression chamber to achieve a predetermined pressure value. Preferably, the upstream area from the casting bead is decompressed within the range of -2500 Pa to -10 Pa relative to the downstream area from the casting bead. Moreover, it is preferable that the jacket (not shown) is attached to the decompression chamber to maintain the inside temperature at a predetermined value. Furthermore, it is preferable to attach the suction unit (not shown) to the edge of the casting die 93 and suction both sides of the bead in order to keep a desired shape of the casting bead. A preferable range of air volume aspirated in the edge portion is 1 L/min to 100 L/min.

While the casting membrane 410 is transported along with the running of the belt 431 in the casting chamber 411, the first and second air blowers 442 and 443 feed the dry air to dry the casting membrane 410. At this time, the temperature of the dry air is preferably controlled to be less than 100°C, and more preferably not less than 20°C and not more than 70°C. In this embodiment, the temperature of the dry air fed from the first and second air blowers 442 and 443 is preferably controlled such that the average temperature near the casting membrane 410 becomes approximately 45°C.

If the casting membrane 410 absorbs the moisture in the air, it may cause separation of the layers and rapid gelation of the membrane. As a result, a percentage of voids of the obtained solid electrolyte membrane may increase. It is therefore preferable that the humidity of the dry air for drying the casting membrane 410 on the belt 431 is made low as much as possible. When the casting membrane 410 is kept at low humidity as soon as it is formed, the occurrence of the voice is prevented. In order to control the humidity, commercially available moisture controlling device may be provided in the casting chamber 411. The configuration and the position of the moisture controlling device is preferably that the moisture controlling device controls the humidity at less than 50%RH, and more preferably at less than 20%RH. In this embodiment, the moisture controlling device is provided in the casting chamber 411, and the humidity therein is controlled at 10%RH.

The purified water contacting device 445 sprays the purified water onto the casting membrane 410 in which drying has been progressing on the belt 431. When the purified water having lower boiling point than the good solvent contained in the casting membrane 410 is contacted to the casting membrane 410, especially the good solvent among the mixed solvent in the casting membrane 410 is substituted by the purified water, and thereby the casting membrane 410 in gel-form is obtained. Thus, the casting membrane 410 comes to have the self-supporting property, and can be easily peeled from the belt 431 as the wet precursor membrane' 412. When the wet precursor membrane 412 is dried

in the later process, the good solvent contained in the wet precursor membrane 412 is evaporated with the purified water. Since the proportion of the poor solvent among the mixed solvent in the casting membrane 410 becomes larger than the good solvent, the weight of the component with low boiling point to the whole solvent weight becomes large. Therefore, the drying efficiency and drying effect can be improved in the solid electrolyte membrane producing process even when the drying temperature is at the degree of evaporating the purified water, which is relatively low.

If water is used instead of the purified water, impurities in the water may be mixed in the produced membrane, therefore the water is not preferable. In addition, since the polymer gelation speed of the water is slower than the purified water, the water is not preferable. The purified water in the present invention may be ion-exchanged water which has been deionized, or distillated water obtained by heating and distilling water.

The temperature of the purified water stored in the purified water contacting device 445 is preferably kept at not less than 10°C and not more than 70°C by the temperature controlling section. When the temperature of the purified water is less than 10°C, the gelation of the membrane cannot sufficiently be performed. When the temperature of the purified water is more than 70 °C, the membrane base is possibly deformed by rapid gelation.

Owing to the contact between the casting membrane 410 and the purified water, the good solvent compound contained in the casting membrane 410 is substituted by the purified water, and thereby the good solvent compound content in the casting membrane 410 can be decreased.

The drying of the wet precursor membrane 412 obtained from such casting membrane 410 can be promoted at short times in the later performed drying process. When various solvents exist in the casting membrane 410, DMSO in the casting membrane 410 is regarded as the main solvent, and the contained amount of this DMSO is regarded as the remaining solvent amount. In order to measure the remaining solvent amount, the casting membrane 410 is partially cut out as a sample. The amount of the solvent in this sample is measured by gas chromatography. In this way, the remaining solvent amount can be obtained.

Instead of spraying the purified water onto the casting membrane 410, the purified water may be contacted to the casting membrane 410 in any other methods as long as they are contacted with each other. For example, the purified water may be coated onto the casting membrane 410.

The casting membrane 410 of gel-form is peeled from the belt 431 by the peel roller 448 to be the wet precursor membrane 412. The wet precursor membrane 412 is transported to the first liquid bath 413 storing purified water as the substitution solvent 334. The organic solvent in the wet precursor membrane 412 is substituted by the purified water in the first liquid bath 413. Since the gelation of the wet precursor membrane 412 is further promoted, the drying time in the solid electrolyte membrane producing process can be shortened by efficiently evaporating the solvent in the wet precursor membrane 412 by the tenter device 85, and solvent in the wet solid electrolyte membrane 414 by the drying chamber 424.

The timing of peeling the casting membrane 410 from the belt 431 is not particularly limited. For example, the casting membrane 410 may be transported into the first liquid bath 413 with the belt 431 and peeled in the substitution solvent 334. It is also possible to peel the casting membrane 410 after being transported out of the first liquid bath 413 with the belt 431. The belt 431 from which the casting membrane 410 is peeled off is guided to the casting chamber 411 again, since the belt 431 is moved endlessly by the driving of the rollers 97 and 98.

A contact time T1 which is a sum of the time for contacting the casting membrane 410 on the belt 431 with the purified water and the time for contacting the wet precursor membrane 412 with the substitution solvent 334 is preferably not less than 2 minutes and not more than 10 minutes, and more preferably not less than 2 minutes and not more than 5 minutes. When the contact time T1 is more than 10 minutes, amount of water in the casting membrane 410 and the wet precursor membrane 412 increases, and therefore degree of swelling of the casting membrane 410 and the wet precursor membrane 412 increases. In addition, the drying time of these membranes may become long, which is not preferable. When the contact time T1 is less than 2 minutes, on the other hand, the organic solvent in the casting membrane 410 and the wet precursor membrane 412 is not sufficiently substituted, and therefore the gelation of the casting membrane 410 and the wet precursor membrane 412 is not sufficiently promoted. As a result, the peeling from the support, continuous membrane production or shortening the drying time may not be realized.

If moisture content, the substitution solvent 334, and the like are attached on the surfaces of the wet precursor membrane 412, the drying unevenness may occur on the wet precursor membrane 412 at the time of drying. Eventually, the shape of the produced solid electrolyte membrane 422 may drastically changes. In view of this, in this embodiment, the air shower 446 blows air to the wet precursor membrane 412, so that the moisture content attached on the surfaces of the wet precursor membrane 412 can be removed. The method for removing the moisture content is not limited to the usage of the air shower, but may be of any other methods as long as the method can remove the moisture content and the like from the membrane surfaces.

The air shower 446 removes the moisture content and the like attached on the wet precursor membrane 412 in the same manner as the pair of air showers 103.

The wet precursor membrane 412 from which the moisture content is removed is transported to the tenter device 85. In the tenter device 85, the wet precursor membrane 412 is held at its both side edges by the clips 85a and

being transported. While the wet precursor membrane 412 is being transported, the dry air is fed from the drying device (not shown), and thereby the drying of the wet precursor membrane 412 is promoted. Although the wet precursor membrane 412 in the tenter device 85 has been subjected to the solvent substitution, the solvent still remains in the wet precursor membrane 412. Therefore, the wet precursor membrane 412 may contract as the remaining organic solvent evaporates by the further drying. However, the shape variation of the wet precursor membrane 412 due to the contraction can be prevented when the wet precursor membrane 412 is dried with its both side edges being held.

The temperature inside the tenter device 85 is preferably controlled in accordance with the boiling point of the organic solvent used in the dope 24, and preferably not less than 80°C and not more than 150°C. In this embodiment, the temperature of the dry air fed from the drying device is controlled to be approximately 120°C. It is preferable that inside the tenter device 85 is divided into plural areas, and drying condition in each area is independently controlled. For this configuration, the wet precursor membrane 412 is gradually dried under the different drying temperatures, and thereby the shape variation of the wet precursor membrane 412 can be further prevented. In the tenter device 85, the wet precursor membrane 412 is preferably dried until the remaining solvent amount reaches 10 wt.% or less.

In the tenter device 85, the wet precursor membrane 412 can be stretched in the width direction. By controlling the tension in the transporting direction applied to the wet precursor membrane 412 before fed into the tenter device 85, the wet precursor membrane 412 can also be stretched in the transporting direction. In case that the wet precursor membrane 412 is stretched, the membrane 412 is preferably stretched in at least one of the transporting direction and the width direction by 100.5% to 300% with respect to the size of the wet precursor membrane 412 before the stretching. Owing to this, molecular orientation in the wet precursor membrane 412 can be controlled. The tension in the transporting direction can be adjusted by, for example, increasing a rotation speed of the downstream roller in comparison with that of the upstream roller.

The wet precursor membrane 412 which has been dried until its remaining solvent amount reaches the predetermined value is fed into the edge slitting device 108, and the both side edges of the membrane 412 are cut off. Holding marks of the clips 85a remain at the both side edges of the wet precursor membrane 412. However, since the portions damaged by the clips 85a are cut off, the solid electrolyte membrane 422 with excellent planarity can be produced. The cut edges are sent to the crusher 108a by the cutter blower (not shown) and shredded into chips therein. When the chips are recycled as polymer material for preparing the dope, the material is efficiently utilized and the production cost is reduced. The slitting process for the membrane side edges may be omitted. However, it is preferable to perform the slitting process between the peeling process and the winding process.

The wet precursor membrane 412 whose side edges are cut off is transported to the second liquid bath 415 and immersed in the proton solution 110, and then transported to the third liquid bath 416 and immersed in the washing liquid 121. In this embodiment, the sulfuric acid aqueous solution having 0.5 mol/liter of sulfuric acid concentration (hereinafter, 0.5 mol/liter sulfuric acid aqueous solution) heated and kept at 30°C is used as the proton solution 110. The washing liquid 121 is water kept at 30°C. When the wet precursor membrane 412 is fed into the second liquid bath 415, the cation species in the polymer constituting the wet precursor membrane 412 is substituted by the hydrogen atoms in the proton solution 110, and thereby the wet solid electrolyte membrane 414 is formed. Thereafter, the wet solid electrolyte membrane 414 is immersed in the water in the third liquid bath 416. Thereby, the acid containing solution remaining in the wet solid electrolyte membrane 414 can be removed. Owing to the washing process, the polymer constituting the wet solid electrolyte membrane 414 can be prevented from being contaminated by acid, therefore the washing process is preferably performed successively after the proton substitution process.

The proton substitution rate is represented by the following formula: $(y/x) \times 100$ where x is total number of the cation species in the polymer which is the precursor of the solid electrolyte and y is total number of the hydrogen atoms which have been substituted for the cation species. In this embodiment, the wet precursor membrane 412 is immersed in the solution containing the acid as described above. Owing to this, the proton substitution rate can be increased efficiently and effectively. The proton substitution rate is preferably not less than 80% to the whole cation species in the polymer, and more preferably not less than 90% to the same.

The wet solid electrolyte membrane 414 is transported to the drying chamber 424. In the drying chamber 424, the drying device (not shown) feeds dry air. Owing to this dry air, the wet solid electrolyte membrane 414 being transported while being bridged across the rollers 420 is dried to be the solid electrolyte membrane 422.

In this embodiment, the casting membrane 410 is contacted with the purified water and the wet precursor membrane 412 is immersed in the purified water as the substitution solvent 334, and thereby the solvent substitution for substituting part of the organic solvent contained in the casting membrane 410 and the wet precursor membrane 412 by the purified water is performed. When the wet precursor membrane 412 after the solvent substitution with especially the purified water is dried, the organic solvent in the wet precursor membrane 412 can be evaporated with the evaporation of the purified water. Thus, the organic solvent remained in the wet precursor membrane 412 can be eliminated efficiently and reliably. Accordingly, it is prevented that the electromotive force of the solid electrolyte membrane 422 is reduced due to the inhibition of proton passage by the remaining solvent. In addition, since preprocessing, such as disacidify and proton substitution, for completely removing the organic solvent in the wet precursor membrane 412

can be omitted, the solid electrolyte membrane can be produced efficiently without increasing processes. Moreover, since the membrane is dried efficiently and effectively in the later processes, the total membrane producing time can be shortened. Although the solvent substitution is performed even when the poor solvent is contacted to the casting membrane 410 and the wet precursor membrane 412, the purified water accelerates the solvent substitution more as compared to the poor solvent.

The drying chamber 424 is preferably divided into plural sections so as to change the drying temperature in each section. For this configuration, the drying of the wet solid electrolyte membrane 414 is not proceeded rapidly, and thereby the solid electrolyte membrane 422 with excellent planarity can be obtained. It is preferable to determine the temperature inside the drying chamber 424 according to the heat resistance (glass transition point Tg, heat deflection temperature under load, melting point Tm, continuous working temperature) of the polymer, and the temperature is preferably not less than 50°C and not more than the Tg. In this embodiment, the temperature inside the drying chamber 424 is preferably not less than 50°C and not more than 200°C, and more preferably not less than 120°C and not more than 185°C. The remaining solvent amount of the solid electrolyte membrane 422 obtained from this drying is preferably less than 10 wt.% on a dry basis.

The solvent vapor generated from the wet solid electrolyte membrane 414 in the drying chamber 424 is adsorbed and recovered by the absorbing device 460. The air from which the solvent is removed is supplied to the drying chamber 424 as the dry air.

The solid electrolyte membrane 422 fed out of the drying chamber 424 is transported to the moisture controlling chamber 425. In the moisture controlling chamber 425, the solid electrolyte membrane 422 is transported while being bridged across the rollers 420 which are same as those in the drying chamber 424. At this time, it is preferable to blow air adjusted at predetermined humidity and temperature to the solid electrolyte membrane 422. Temperature and humidity inside the moisture controlling chamber 425 are not particularly limited. However, the temperature is preferably not less than 20°C and not more than 30°C, and the humidity is preferably not less than 40 RH% and not more than 70 RH%. Thereby, curling on the membrane surface and winding defects of the solid electrolyte membrane 422 are prevented.

At a position downstream side from the moisture controlling chamber 425, preferably provided the neutralization device (not shown), for controlling the charged voltage of the solid electrolyte membrane 422 in a predetermined range. The charged voltage of the solid electrolyte membrane 422 after the neutralization is preferably from -3 kV to +3 kV. In addition, it is preferable to perform knurling to the solid electrolyte membrane 422 by the knurling roller pair (not shown). When the knurling is provided to the solid electrolyte membrane 422, the height of each of projections and depressions of the knurling is preferably in the range of 1 $\mu$m to 200 $\mu$m.

Lastly, the solid electrolyte membrane 422 is transported to the winding device 428. In the winding device 428, the winding roll 427 winds up the solid electrolyte membrane 422 while the press roller 462 applying tension to the solid electrolyte membrane 422. For this configuration, the solid electrolyte membrane 422 in a roll form is obtained while preventing the occurrence of the wrinkles and slacks on the solid electrolyte membrane 422. It is preferable to gradually change the tension applied to the solid electrolyte membrane 422 from the start to the end of the winding. Thereby, excessive tightening during the winding is prevented. A width of the solid electrolyte membrane 422 wound is preferably 100 mm or more. The present invention is also applicable to the production of thin membranes with the thickness of not less than 5 $\mu$m and not more than 300 $\mu$m.

In the above-described solid electrolyte membrane producing method of the present invention, various processes such as the drying process and the edge slitting process are performed since the casting membrane is formed on the support until the casting membrane is peeled, dried and wound as the solid electrolyte membrane. The membrane is mostly supported or transported by the rollers during or between each process in the membrane producing apparatus. There are driven rollers and non-driven rollers. The non-driven rollers determine the transportation passage of the membrane and improve the transportation stability during the transportation of the membrane.

The proton substitution may be performed after the membrane is dried by the drying chamber 424. It is also possible to preserve the membrane once after the drying by the drying chamber 424, and the proton substitution is performed to the membrane thereafter. In this embodiment, the on-line method in which the proton substitution process and the washing process are included in the membrane producing process is described. However, the off-line method in which the proton substitution process and the washing process are separated from the membrane producing process is also applicable for obtaining the solid electrolyte membrane with high proton conductivity.

In this embodiment, an example of casting one sort of dope is described. In the present invention, however, two ore more sorts of dopes may be simultaneously or sequentially co-cast to form a layered casting membrane. When a simultaneous co-casting of two or more sorts of dopes is performed, a feed block may be attached to the casting die, or a multi-manifold type casting die may be used. A thickness of at least one surface layer, which is exposed to outside, of a multi-layered membrane is preferably in the range of 0. 5% to 30% to the total thickness of the membrane. Moreover, in the simultaneous co-casting method, it is preferable to preliminary adjust each dope's viscosity such that the lower viscosity dope entirely covers over the higher viscosity dope when the dopes are cast onto the support from the die slit. Furthermore, in the simultaneous co-casting method, it is preferable that an inner dope is covered with dopes whose

poor solvent ratio is larger than that of the inner dope in the casting bead, which is formed between the die and the support.

Instead of the above-described method for forming the membrane including the precursor, it is possible to infiltrate the precursor into micropores of a so-called porous substrate. Unlike the above embodiments, a precursor membrane in which the precursor is dispersed in the porous substrate of material different from the precursor is produced according to this method. As such method of producing the precursor membrane, there are a method in which a sol-gel reaction liquid containing the precursor is applied to the porous substrate so that the sol-gel reaction liquid is infiltrated into the micropores thereof, a method in which such porous substrate is immersed in the sol-gel reaction liquid containing the precursor to thereby fill the micropores with the precursor, and the like. Preferred examples of the porous substrate are porous polypropylene, porous polytetrafluoroethylene, porous cross-linked heat-resistant polyethylene, porous polyimide, and the like. Additionally, it is also possible to process the precursor into a fiber form and fill spaces therein with other polymer compounds, and form this fiber into a membrane to produce the precursor membrane. In this case, for example, those used as the additives in the present invention may be used as the polymer compounds to fill the spaces. By performing the above-described proton substitution to each of these precursor membranes, the solid electrolyte membrane can be produced.

The solid electrolyte membrane of the present invention is suitably used for the fuel cell, in particular, for the proton conductive membrane in a direct methanol full cell. In addition, the solid electrolyte membrane is used as a component of the fuel cell interposed between the two electrodes of the fuel cell. Furthermore, the solid electrolyte membrane of the present invention is used for the electrolyte in various batteries or cells such as a redox flow battery and a lithium battery, a display element, an electrochemical sensor, a signal transmission medium, a capacitor, an electrolyte membrane for electrodialysis and electrolysis, a gel actuator, salt electrolyte membrane and proton exchange membrane.

(Fuel Cell)

Hereinafter, an example of using the solid electrolyte membrane in a membrane electrode assembly (hereinafter referred to as MEA), and an example of using the MEA in the fuel cell are described. The MEA and the fuel cell described here are examples of the present invention, and the present invention is not limited to the following examples. Fig. 10 is a section view illustrating a configuration of the MEA. An MEA 531 is constituted of the solid electrolyte membrane 77, and an anode 532 and a cathode 533 placed opposite to each other. The membrane 77 is interposed between the anode 532 and the cathode 533.

The anode 532 is constituted of a porous conductive sheet 532a and a catalyst layer 532b contacting the solid electrolyte membrane 77. The cathode 533 is constituted of a porous conductive sheet 533a and a catalyst layer 533b contacting the solid electrolyte membrane 77. As the porous conductive sheets 532a and 533a, carbon paper and the like are used. The catalyst layers 532b and 533b are formed of a dispersion in which carbon particles are dispersed into the proton conductive material. The carbon particles support a catalyst metal thereon such as platinum. As the carbon particles, there are ketjen black, acetylene black, and carbon nanotubes. As the proton conductive material, for instance, Nafion (registered trademark) and the like are used.

The following four methods are preferably applied for producing the MEA 531:

(1) Proton conductive material coating method: A catalyst paste (ink) including an active metal-supported carbon, a proton conductive material and a solvent is directly applied on both surfaces of the solid electrolyte membrane 77, and porous conductive sheets 532a and 533a are thermally adhered under pressure thereto to construct a 5-layered MEA 531.

(2) Porous conductive sheet coating method: A liquid containing the material for the catalyst layers 532b and 533b, for instance, the catalyst paste is applied onto the porous conductive sheets 532a and 533a to form catalyst layers 532b and 533b thereon, and the solid electrolyte membrane 77 is adhered thereto under pressure to construct a 5-layered MEA 531.

(3) Decal method: The catalyst paste is applied onto PTFE to form catalyst layers 532b and 533b thereon, and the catalyst layers 532b and 533b alone are transferred to the solid electrolyte membrane 77 to construct a 3-layered structure. The porous conductive sheets 532a and 533a are adhered thereto under pressure to construct a 5-layered MEA 531.

(4)Catalyst post-attachment method: Ink prepared by mixing a carbon material not supporting platinum powder and a proton conductive material is applied or cast onto the solid electrolyte membrane 77, porous conductive sheets 532a and 533a or PTFE to form a membrane. Thereafter, the solid electrolyte membrane 77 is immersed into a liquid containing platinum ion so as to reduce and precipitate the platinum particles in the solid electrolyte membrane 77 to form catalyst layers 532b and 533b. After the catalyst layers 532b and 533b are formed, a MEA 531 is produced by one of the above methods (1)-(3).

The method for producing the MEA is not limited to the above and other known methods are also used. For instance, the following method is used instead of the above methods (1) - (4). A coating liquid containing materials of the catalyst layers 532b and 533b is previously prepared. The coating liquid is applied onto supports and dried. The supports on which catalyst layers 532b and 533b are formed are thermally adhered to both surfaces of the solid electrolyte membrane 77 such that the catalyst layers 532b and 533b contact the solid electrolyte membrane 77. After peeling the supports, the solid electrolyte membrane 77 having the catalyst layers 532b and 533b on both surfaces is interposed by the porous conductive sheets 532a and 533a. Thus, the catalyst layers 532b and 533b are airtightly adhered to the membrane to produce a MEA.

Fig. 11 is an exploded section view illustrating a configuration of the fuel cell. A fuel cell 541 is constituted of the MEA 531, a pair of separators 542 and 543 for holding the MEA 531 therebetween, current collectors 546 which are formed of stainless nets attached to the separators 542 and 543, and gaskets 547. The fuel cell 541 is illustrated in exploded fashion in Fig. 11 for the sake of convenience of explanation, however, each element of the fuel cell 541 are adhered to each other to be used as the fuel cell. The anode-side separator 542 has an anode-side opening 551 formed therethrough; and the cathode-side separator 543 has a cathode-side opening 552 formed therethrough. Vapor fuel such as hydrogen or alcohol (e.g., methanol) or liquid fuel such as aqueous alcohol solution is fed to the cell via the anode-side opening 551; and an oxidizing gas such as oxygen gas or air is fed thereto via the cathode-side opening 552.

For the anode 532 and the cathode 533, for example, a catalyst that supports active metal particles of platinum or the like on a carbon material may be used. The particle size of the active metal particles generally used is in the range of 2 nm to 10 nm. Active metal particles having a smaller particle size may have a large surface area per the unit weight thereof, and are therefore advantageous since their activity is higher. If too small, however, the particles are difficult to disperse with no aggregation, and it is said that the lowermost limit of the particle size is 2 nm or so.

In hydrogen-oxygen fuel cells, the active polarization of cathode (air electrode) is higher than that of anode (hydrogen electrode). This is because the cathode reaction (oxygen reduction) is slow as compared with the anode reaction. For enhancing the oxygen electrode activity, usable are various platinum-based binary alloys such as Pt-Cr, Pt-Ni, Pt-Co, Pt-Cu, Pt-Fe. In a direct methanol fuel cell in which aqueous methanol is used for the anode fuel, the catalyst poisoning with CO that is formed during methanol oxidation must be inhibited. For this purpose, usable are platinum-based binary alloys such as Pt-Ru, Pt-Fe, Pt-Ni, Pt-Co, Pt-Mo, and platinum-based ternary alloys such as Pt-Ru-Mo, Pt-Ru-W, Pt-Ru-Co, Pt-Ru-Fe, Pt-Ru-Ni, Pt-Ru-Cu, Pt-Ru-Sn, Pt-Ru-Au. As the carbon material for supporting the active metal, acetylene black, Vulcan XC-72, ketjen black, carbon nanohorn (CNH), and carbon nanotube (CNT) are preferably used.

The catalyst layers 532b and 533b have the following functions: (1) transporting fuel to active metal, (2) providing the reaction site for oxidation of fuel (anode) or for reduction of fuel (cathode), (3) transmitting the electrons released in the redox reaction to the current collector 546, and (4) transporting the protons generated in the reaction to the solid electrolyte, that is, the solid electrolyte membrane 77. For (1), the catalyst layers 532b and 533b must be porous so that liquid and vapor fuel may penetrate into the depth of the pores. The active metal catalyst supported by the carbon material works for (2); and the carbon material works for (3). For attaining the function of (4), a proton conductive material is mixed into the catalyst layers 532b and 533b. The proton conductive material mixed in the catalyst layers 532b and 533b is not particularly limited as long as it is a solid that has a proton-donating group. Polymer compounds having acid-residue, for instance, perfluorosulfonic acids such as typically Nafion (registered trademark); poly(meth)acrylates having phosphoric acid group in side chains; sulfonated heat-resistant aromatic polymers such as sulfonated polyether ether ketones and sulfonated polybenzimidazoles are preferably used. If the solid electrolyte contained in the solid electrolyte membrane 77 is used for the material of the catalyst layers 532b and 533b, the catalyst layers 532b and 533b, and the solid electrolyte membrane 77 are made of the material of the same type. For that reason, the electrochemical contact between the solid electrolyte membrane and the catalyst layer becomes high, which is more advantageous in view of the proton conduction. The amount of the active metal is preferably from 0.03 mg/cm$^2$ to 10 mg/cm$^2$ in view of cell output and the cost efficiency. The amount of the carbon material that supports the active metal is preferably from 1 to 10 times the weight of the active metal. The amount of the proton conductive material is preferably from 0.1 to 0.7 times the weight of the active metal-supporting carbon.

The anode 532 and the cathode 533 serve to prevent interference in current collection and also act to prevent water from staying therein to worsen vapor permeation. In general, the carbon paper or a carbon cloth may be used for the anode 532 and the cathode 533. If desired, the carbon paper or the carbon cloth may be processed with PTFE so as to be repellent to water.

The MEA has a value of sheet resistivity preferably at 3 $\Omega$cm$^2$ or less, more preferably at 1 $\Omega$cm$^2$ or less, and most preferably at 0.5 $\Omega$cm$^2$ or less according to alternating-current (AC) impedance method in a state that the MEA is incorporated in a cell and the cell is filled with fuel. The sheet resistivity is calculated by a product of the actually measured resistance value and a sample area.

Fuel for the fuel cell is described. For anode fuel, hydrogen, alcohols (e.g., methanol, isopropanol, ethylene glycol), ethers (e.g., dimethyl ether, dimethoxymethane, trimethoxymethane), formic acid, boron hydride complexes,

and ascorbic acid are used. For cathode fuel, oxygen (including oxygen in air), and hydrogen peroxide are used. For cathode fuel, oxygen (including oxygen in air), and hydrogen peroxide are used.

In direct methanol fuel cells, methanol aqueous solution having a methanol concentration of 3 wt.% to 64 wt.% is used as the anode fuel. As in the anode reaction formula ($CH_3OH + H_2O \rightarrow CO_2 + 6H^+ + 6e^-$), 1 mol of methanol requires 1 mol of water, and the methanol concentration in this case corresponds to 64 wt. %. A higher methanol concentration in fuel is more effective for reducing the weight and the volume of the cell including a fuel tank of the same energy capacity. However, the higher methanol concentration tends to reduce the cell output due to the so-called crossover phenomenon in which methanol penetrates through the solid electrolyte membrane and reacts with oxygen at the cathode to reduce the voltage. When the methanol concentration is too high, the crossover phenomenon is remarkable which reduces the cell output. To prevent the above problem, the optimum concentration of methanol is determined depending on the methanol permeability through the solid electrolyte membrane used. The cathode reaction formula in direct methanol fuel cells is $(3/2)\ O_2 + 6H^+ + 6e^- \rightarrow 3H_2O$, and oxygen (generally, oxygen in air) is used as the fuel in the cells. To supply the anode fuel and the cathode fuel to the corresponding catalyst layers 532b, 533b, there are two applicable methods: (1) a method of forcedly circulating the fuel by the use of an auxiliary device such as pump, that is, an active method, and (2) a method not using such auxiliary device, that is, a passive method, in which liquid fuel is supplied through capillarity or by spontaneously dropping it, and vapor fuel is supplied by exposing the catalyst layer to air. It is also possible to combine these methods (1) and (2). In the method (1), high-concentration methanol is usable as fuel, and air supply enables high output from the cells by extracting water formed in the cathode area. These are the advantages of the method (1). However, this method has the disadvantage in that the necessary fuel supply unit will make it difficult to downsize the cells. On the other hand, the advantage of the method (2) is capability of downsizing the cells, but the disadvantage thereof is that the fuel supply rate is readily limited and high output from the cells is often difficult.

Unit cell voltage of fuel cells is generally at most 1 V. It is desirable to stack up the unit cells in series, depending on the necessary voltage for load. For cell stacking, a plane stacking in which unit cells are arranged on a plane, and a bipolar stacking in which unit cells are stacked up via a separator with a fuel passage formed on both sides thereof are employable. In the plane stacking, the cathode (air electrode) is on the surface of the stacked structure and therefore it readily takes air thereinto. In addition, since the stacked structure may be thinned, the plane stacking is more favorable for small-sized fuel cells. Besides the above-described methods, MEMS technology may be employed, in which a silicon wafer is processed to form a micropattern and fuel cells are stacked thereon.

Fuel cells may have many applications for automobiles, electric and electronic appliances for household use, mobile devices, and portable devices. In particular, direct methanol fuel cells can be downsized, the weight thereof can be reduced and do not require charging. Having such many advantages, they are expected to be used for various energy sources for mobile appliances and portable appliances. For example, mobile appliances in which fuel cells are favorably used include mobile phones, mobile notebook-size personal computers, electronic still cameras, PDA, video cameras, mobile game machines, mobile servers, wearable personal computers, mobile displays and the like. Portable appliances in which fuel cells are favorably used include portable generators, outdoor lighting devices, pocket lamps, electrically-powered (or assisted) bicycles and the like. In addition, fuel cells are also favorable for power sources for robots for industrial and household use and for other toys. Moreover, they are further usable as power sources for charging secondary batteries that are mounted on these appliances.

Although the MEA 531 and the fuel cell 541 using the solid electrolyte membrane 77 will be described hereinafter, the present invention is not limited to them. The solid electrolyte membrane made by other producing methods according to other embodiments of the present invention can be used for the MEA and the fuel cell. Such MEA and fuel cell can exert effects equivalent to that of the MEA 531 and the fuel cell 541.

[Example 1]

Next, Examples of the present invention are described.

A compound whose X in the chemical formula 1 was cation species other than a hydrogen atom H was used as the precursor. This precursor is referred to as a material A. In the material A, composition in the chemical formula 1 was as follows: X was Na, Y was $SO_2$, n was 0.33, m was 0. 67, Z was (I) of the chemical formula 2, the number average molecular weight Mn was 61000, and the weight average molecular weight Mw was 159000. The solvent was a mixture of solvent components 1 and 2 shown below. The solvent component 1 was a good solvent of the material A, and the solvent component 2 was a poor solvent of the material A. The material A and the solvent were mixed by the following composition to dissolve the material A in the solvent. Thus, a dope with the material A of 20 wt.% to the total weight thereof was formed. Hereinafter this dope is referred to as a dope A.

| | |
|---|---|
| Material A | 100 pts.wt |

(continued)

| | |
|---|---|
| Solvent component 1: DMSO | 256 pts.wt |
| Solvent component 2: methanol | 171 pts.wt |

[Production of Solid Electrolyte Membrane]

The dope A was cast from the casting die 93 onto the running PET film to form the casting membrane 61. The casting membrane drying devices 81 blew the dry air at the temperature of 45°C and the humidity of 10%RH. Time for applying the dry air to any part of the casting membrane 61 was 30 minutes in a row. The time was determined such that the casting membrane 61 included 240 pts.wt of DMSO and 20 pts.wt of methanol to 100 pts.wt of the material A at a time of starting the liquid contacting process 66. The casting membrane 61 was immersed in the water of 30°C with the PET film that is the belt 94. The casting membrane 61 was peeled from the PET film in the water, and thereby the wet precursor membrane 67 was obtained. Time taken from the start of the immersion until the peeling of the casting membrane 61 was 5 minutes. After being transported in the water, the wet precursor membrane 67 was fed out of the water. The water was removed from the wet precursor membrane 67 by the air showers 103. The wet precursor membrane 67 was then transported to the tenter device 85. In the tenter device 85, the wet precursor membrane 67 was transported while its both side edges were held by the clips 85a. At the same time, the wet precursor membrane 67 was dried for 10 minutes by the dry air at 120°C. Thus, the remaining solvent amount of the wet precursor membrane 67 reached less than 10 wt. % on a dry basis. At the exit of the tenter device 85, the wet precursor membrane 67 was released from the clips 85a. The side edges of the wet precursor membrane 67 were cut off by the edge slitting device 108. The proton solution 110 was coated onto one surface of the wet precursor membrane 67 by the coating applicator 111, thereby the undried solid electrolyte membrane was obtained. The undried solid electrolyte membrane was then washed with the water. The undried solid electrolyte membrane which had not been completely dried was transported to the drying chamber 87. In the drying chamber 87, the undried solid electrolyte membrane was dried in the range of 120°C to 185°C while being transported by the rollers 127. Thereby, the solid electrolyte membrane 77 whose remaining solvent amount was less than 3 wt.% on a dry basis was obtained. This remaining solvent amount included the weight of the water used for washing. The obtained solid electrolyte membrane 77 was evaluated for each item described later.

[Example 2]

The material A in the Example 1 was replaced by a material B, and a dope was produced by the following composition. Time for applying the dry air to any part of the casting membrane 61 by the casting membrane drying devices 81 was 20 minutes in a row. The time was determined such that the casting membrane 61 included 185 pts.wt of DMSO and 10 pts.wt of methanol to 100 pts.wt of the material B at a time of starting the liquid contacting process 66. Other conditions were same as those of the Example 1. In the material B, composition in the chemical formula 1 was as follows: X was Na, Y was $SO_2$, Z was a mixture of (I) and (II) of the chemical formula 2, n was 0.33, m was 0.67, the number average molecular weight Mn was 68000, and the weight average molecular weight Mw was 200000. In the chemical formula 2, (I) was 0.7 mol%, (II) was 0.3 mol%. The solvent was a mixture of solvent components 1 and 2 shown below. The solvent component 1 was a good solvent of the material B, and the solvent component 2 was a poor solvent of the material B. The material B and the solvent were mixed by the following composition to dissolve the material B in the solvent. Thus, the dope with the material B of 20 wt.% to the total weight thereof was formed. Hereinafter this dope is referred to as a dope B.

| | |
|---|---|
| Material B | 100 pts.wt |
| Solvent component 1: DMSO | 200 pts.wt |
| Solvent component 2: methanol | 135 pts.wt |

[Example 3]

Time for applying the dry air to any part of the casting membrane 61 by the casting membrane drying devices 81 was 5 minutes in a row. The time was determined such that the casting membrane 61 included 195 pts.wt of DMSO and 100 pts.wt of methanol to 100 pts.wt of the material B at a time of starting the liquid contacting process 66. Other conditions were same as those of the Example 2.

[Example 4]

The conditions were same as those of the Example 2 except that the temperature of the dry air from the casting membrane drying devices 81 was 110°C.

[Example 5]

The conditions were same as those of the Example 2 except that the humidity of the dry air from the casting membrane drying devices 81 was 75%RH.

[Example 6]

The conditions were same as those of the Example 2 except that the peeling process 68 was performed before the liquid contacting process 66. The wet precursor membrane did not have the self-supporting property, and was deformed by its own weight. As a result, the uniform sold electrolyte membrane could not be continuously produced.

[Example 7]

Time for applying the dry air to any part of the casting membrane by the casting membrane drying devices 81 was 60 minutes in a row. The time was determined such that the casting membrane did not include methanol, but included 150 pts.wt of DMSO to 100 pts.wt of the material B at a time of starting the liquid contacting process 66. Other conditions were same as those of the Example 2.

[Example 8]

The conditions were same as those in the Example 2 except that the dope B was changed to a dope C having the following composition.

| | |
|---|---|
| Material B | 100 pts.wt |
| Solvent component 1: DMSO | 335 pts.wt |

The properties of the obtained solid electrolyte membranes were evaluated for each of the following items. The membranes were evaluated according to same methods and criteria among the Examples 1 to 8. The evaluation results are shown in Table 1. The numerals of the evaluation items in Table 1 correspond to the numerals assigned to the following items.

1. Production Continuity

The solid electrolyte membranes were evaluated as to whether they were produced continuously. Evaluations in Table 1 are based on the criteria as follows:

Good: membrane was continuously produced
Normal: membrane was continuously produced, but the production was sometimes suspended
Poor: membrane could not be produced

2. Average and Variation in Thickness

The membrane thickness was continuously measured at the velocity of 600 mm/min by using the electronic micrometer produced by Anritsu Corporation Ltd. The data obtained by the measurement was recorded on a chart sheet with a 1/20 scale at the velocity of 30 mm/min. The data curves were measured by using a ruler. According to the measured value, average thickness and variation in thickness with respect to the average thickness were obtained. In Table 1, (a) is average thickness (unit: $\mu$m) and (b) is variation in thickness (unit: $\mu$m) with respect to (a).

3. Weight of Residual DMSO in Solid Electrolyte Membrane

A sample with a dimension of 7 mm $\times$ 35 mm was cut out from each of the obtained solid electrolyte membranes. Weight ratio of DMSO was measured by using the gas chromatography (model: GC-18A manufactured by Shimadzu

Corporation). Values in Table 1 are calculated from a formula: (y/x) × 100 where x is the weight of the sample and y is the weight of DMSO.

4. Adhesion Property of Electrodes

MEA was produced according to the following methods (1) and (2). The adhesion property of the electrodes was measured by the method (3).

(1) Formation of catalyst sheet A used as the catalyst layers 532b and 533b
2 g of platinum-supporting carbon was mixed with 15 g of 5% alcohol solution as Nafion solution (registered trademark), and dispersed for 30 minutes by using an ultrasonic disperser. The average particle diameter of the resulting dispersion was about 500 nm. The obtained dispersion was applied onto a polytetrafluoroethylene film containing reinforcement (manufactured by Saint-Gobain K.K.) and dried. Thereafter, a disc-shape portion with a diameter of 9 mm was punched out from the polytetrafluoroethylene film. Thus, a catalyst sheet A was formed. Note that the above platinum-supporting carbon was Vulcan XC72 with 50 wt.% platinum.
(2) Formation of MEA

The catalyst sheet A was attached to both surfaces of each solid electrolyte membrane obtained from the Examples 1 to 8 such that the coated surface of the catalyst sheet A was attached to the solid electrolyte membrane, and heat-pressed at 210°C under 3 MPa for 10 minutes. The membrane with the catalyst sheets A was left to lower the temperature thereof while keeping the pressure applied thereto. By removing the support of the catalyst sheet A, MEA was formed.

(3) Evaluation of adhesion property of electrodes

Adhesion property was evaluated by observing condition of the electrodes after the adhesion of the catalyst sheet A to the solid electrolyte membrane by heat-pressing at 210 °C under 3 MPa for 10 minutes. Evaluations in Table 1 are based on the criteria as follows:

Good: whole surface was adhered uniformly
Normal: partially peeled
Poor: dimension of the peeled portion consisted of 10% or more of the whole dimension

5. Proton Conductivity

The proton conductivity of the membrane was measured by using 4-electrode AC impedance spectroscopy according to the technique described in Journal of the Electrochemical Society vol. 143, No. 4, PP 1254-1259 (1996). Specifically, a sample was cut out to length of 2 cm and width of 1 cm from each of the solid electrolyte membranes obtained from the Examples 1 to 8. The sample was then placed on a PTFE plate to which four platinum wires were fixed at intervals of 5 mm, and another PTFE plate was placed thereon. The PTFE plates interposing the sample therebetween were fixed with screws to be a test cell. Then, the measurement was carried out for this test cell, while using a combination of Model 1480 and Model 1255B manufactured by Solartron Co., Ltd. as an impedance analyzer, by an alternating-current impedance method in water at 80°C.

6. Measurement of Output Density of Fuel Cell

The solid electrolyte membranes obtained from the Examples 1 to 8 were used for producing fuel cells, and output density of each fuel cell was measured. The producing method of the fuel cell and the measurement method of the output density are described below.

(1) Output density of fuel cell

On the MEA obtained in the evaluation item 4, a gas diffusion electrode (manufactured by E-TEK) cut into the same size as the electrode was stacked. The MEA was then set to a standard fuel cell test cell (manufactured by ElectroChem, Inc.). The test cell was connected to a fuel cell testing system (model: As-510 manufactured by NF Corporation). Then, humidified hydrogen gas was flown to the anode side and humidified simulated air was flown to the cathode side. Between the anode electrode and the cathode electrode, a load was applied to record current-voltage characteristics, and thereby the output density (unit: $W/cm^2$) was measured.

[Table 1]

| | Evaluation Item | | | | | | |
|---|---|---|---|---|---|---|---|
| | 1 | 2 (μm) | | 3 (wt.%) | 4 | 5 (S/cm) | 6 (W/cm$^2$) |
| | | (a) | (b) | | | | |
| Example 1 | Good | 63 | ±1.5 | 0.4 | Good | 0.18-0.19 | 0.49-0.50 |
| Example 2 | Good | 64 | ±1.5 | 0.2 | Good | 0.18-0.19 | 0.51-0.52 |
| Example 3 | Normal | 66 | ±4.8 | 1.3 | Poor | 0.08-0.09 | 0.15-0.17 |
| Example 4 | Good | 64 | ±3.5 | 0.3 | Poor | 0.11-0.12 | 0.18-0.19 |
| Example 5 | Normal | 77 | ±4.5 | 0.6 | Normal | 0.10-0.12 | 0.20-0.21 |
| Example 6 | Poor | - | - | - | - | - | - |
| Example 7 | Normal | 62 | ±4.0 | 3.2 | Poor | 0.11-0.12 | 0.22-0.23 |
| Example 8 | Normal | 78 | ±4.2 | 6.3 | Poor | 0.10-0.11 | 0.22-0.23 |

It is recognized that the excellent solid electrolyte membrane can be continuously mass-produced according to the present invention.

[Example 9]

[Production of Solid Electrolyte Membrane]

The dope A was cast from the casting die 93 onto the running belt 431 to form the casting membrane 410. The first air blower 442 and the second air blower 443 applied the dry air at the temperature of 45°C and the humidity of 10%RH to the casting membrane 410 for 30 minutes in a row and dried the casting membrane 410. The belt 431 was made of PET film. The purified water contacting device 445 sprayed the purified water at 30°C to the surface of the casting membrane 410 for 2 minutes. The casting membrane 410 was then peeled from the belt 431 to be the wet precursor membrane 412. Note that the remaining amount of DMSO as the main solvent in the casting membrane 410 right before being peeled from the belt 431 was 65 wt.%.

The wet precursor membrane 412 was transported into the first liquid bath 413. In the first liquid bath 413, the purified water at 30°C as the substitution solvent 334 was stored. The wet precursor membrane 412 was immersed in the substitution solvent 334 for 3 minutes. After being transported out of the first liquid bath 413, the moisture content was removed from the wet precursor membrane 412 by the air shower 446. The wet precursor membrane 412 was then transported to the tenter device 85. In the tenter device 85, the wet precursor membrane 412 was transported while its both side edges were held by the clips 85a. At the same time, the wet precursor membrane 412 was dried by the dry air at 120°C supplied from the drying device (not shown) provided in the tenter device 85. In the tenter device 85, the wet precursor membrane 412 was dried for 10 minutes, until the remaining solvent amount in the wet precursor membrane 412 reached less than 10 wt.%.

At the exit of the tenter device 85, the wet precursor membrane 412 was released from the clips 85a. The side edges of the wet precursor membrane 412 were cut off by the edge slitting device 108. The wet precursor membrane 412 was then transported into the second liquid bath 415 storing the 0.5 mol/liter sulfuric acid aqueous solution as the proton solution 110 kept at 30°C. In the proton solution 110, the proton substitution was performed to the wet precursor membrane 412 to be the wet solid electrolyte membrane 414. The wet solid electrolyte membrane 414 was then transported into the third liquid bath 416 storing the purified water at 30°C as the washing liquid 121. In the washing liquid 121, the wet solid electrolyte membrane 414 was washed. The wet solid electrolyte membrane 414 was then transported to the drying chamber 424 in which the inside temperature was controlled to be in the range of 120°C to 185°C. In the drying chamber 424, the wet solid electrolyte membrane 414 was dried for 30 minutes while being held and transported by the rollers 420, and thereby the solid electrolyte membrane 422 was obtained.

The remaining amount of DMSO in the completed solid electrolyte membrane 422 was 0.4 wt.% according to the measurement. The remaining amount of DMSO was measured by the following method. A sample with a dimension of 7 mm x 35 mm was cut out from the obtained solid electrolyte membrane 422. Weight ratio of DMSO was measured by using the gas chromatography (model: GC-18A manufactured by Shimadzu Corporation). A value in Table 1 is calculated from the formula: $(y/x) \times 100$ where x is the weight of the sample and y is the weight of DMSO. In each of

the following Examples, the remaining amount of DMSO of the completed solid electrolyte membrane was measured by the same method.

[Example 10]

The solid electrolyte membrane 422 was produced from the dope B by the method same as the Example 9. The conditions were also same as those of the Example 9 except that the casting membrane 410 on the belt 431 was dried by supplying the dry air at the temperature of 45°C and the humidity of 10%RH for 20 minutes. As a result, the solid electrolyte membrane 422 in which the remaining amount of DMSO was 0.2 wt.% was obtained.

[Example 11]

After the casting membrane 410 was formed by the same method and under the same conditions as the Example 10, the purified water contacting device 445 sprayed the purified water at 30°C to the surface of the casting membrane 410 for 1 minute. The casting membrane 410 was then peeled from the belt 431 to be the wet precursor membrane. Even though the solid electrolyte membrane was tented to be produced in the same manner as the Example 10, the wet precursor membrane contracted in the first liquid bath 413, and the shape of the wet precursor membrane drastically changed. Accordingly, it was impossible to transport the wet precursor membrane to the following process. As a result, the solid electrolyte membrane could not be produced. Note that the remaining amount of DMSO in the casting membrane 410 after the contact with the purified water by the purified water contacting device 445 was 130 wt.%.

[Example 12]

The solid electrolyte membrane was produced in the same manner as the Example 10 except that the wet precursor membrane 412 obtained by peeling the casting membrane 410 from the belt 431 was not transported to the first liquid bath 413. As a result, the solid electrolyte membrane in which the remaining amount of DMSO was 8.5 wt.% was obtained.

[Example 13]

The solid electrolyte membrane was produced in the same manner as the Example 10 except that methanol in the dope B used in the Example 10 was replaced by dimethylsulfoxide. As a result, the solid electrolyte membrane in which the remaining amount of DMSO was 5.7 wt.% was obtained.

[Example 14]

The solid electrolyte membrane was produced in the same manner as the Example 10 except that the wet precursor membrane 412 obtained by peeling the casting membrane 410 from the belt 431 was immersed into the first liquid bath 413 for 20 minutes. As a result, the solid electrolyte membrane in which the remaining amount of DMSO was 0.1 wt.% was obtained.

[Example 15]

The solid electrolyte membrane was tended to be produced in the same manner as the Example 10 except that the casting membrane 410 was peeled as the wet precursor membrane 412 from the belt 431 without being contacted to the purified water by the purified water contacting device 445. However, the wet precursor membrane 412 right after the formation was deformed by its own weight, and could not be transported. As a result, the solid electrolyte membrane could not be obtained.

The properties of the obtained solid electrolyte membranes were evaluated for each of the following items. The membranes were evaluated according to same methods and criteria among the Examples 9 to 15. The evaluation results are shown in Table 2. The numerals of the evaluation items in Table 2 correspond to the numerals assigned to the following items.

1. Production Continuity

The solid electrolyte membranes were evaluated as to whether they were produced continuously. The evaluation criteria were same as described above.

2. Average and Variation in Thickness

In Table 2, (a) is average thickness (unit: $\mu$m) and (b) is variation in thickness (unit: $\mu$m) with respect to (a). The measurement method was same as described above.

3. Weight of Residual DMSO in Solid Electrolyte Membrane

Weight of residual DMSO in each solid electrolyte membrane was measured. The measurement method was same as described above.

4. Adhesion Property of Electrodes

MEA was produced, and the adhesion property of the electrodes was evaluated. The evaluation method was same as described above.

5. Proton Conductivity

The proton conductivity of the membrane was measured. The measurement method was same as described above.

6. Measurement of Output Density of Fuel Cell

The completed solid electrolyte membranes were used for producing fuel cells, and output density of each fuel cell was measured. The producing method of the fuel cell and the measurement method of the output density were same as described above.

In Table 2, evaluation results of the Examples 9 to 15 are shown.

[Table 2]

| | Evaluation Item | | | | | | |
|---|---|---|---|---|---|---|---|
| | 1 | 2 ($\mu$m) | | 3 (wt.%) | 4 | 5 (S/cm) | 6 (W/cm$^2$) |
| | | (a) | (b) | | | | |
| Example 9 | Good | 63 | ±1.5 | 0.4 | Good | 0.18-0.19 | 0.49-0.50 |
| Example 10 | Good | 64 | ±1.5 | 0.2 | Good | 0.18-0.19 | 0.51-0.52 |
| Example 11 | Poor | - | - | - | - | - | - |
| Example 12 | Normal | 70 | ±3.6 | 8.5 | Poor | 0.10-0.11 | 0.18-0.19 |
| Example 13 | Normal | 71 | ±3.4 | 5.7 | Poor | 0.10-0.12 | 0.20-0.22 |
| Example 14 | Normal | 69 | ±2.4 | 0.1 | Poor | 0.17-0.19 | 0.46-0.47 |
| Example 15 | Poor | - | - | - | - | - | - |

In the Examples 9 and 10 of the present invention, the drying time of the membrane through the whole membrane producing process is approximately 65 min to 75 min. In the method described in Japanese Patent Laid-Open Publication No. 2005-232240, the drying time is more than 14 hours, and in the method described in Japanese Patent Laid-Open Publication No. 2005-235466, the drying time is more than 5 hours. It is therefore recognized that the drying time can be significantly shortened according to the present invention. By spraying the purified water with satisfying predetermined conditions, the gelation of the casting membrane can be promoted. At the same time, the proportion of the poor solvent compound contained in the casting membrane becomes larger than the good solvent compound, therefore the drying speed and the drying efficiency can be improved in evaporating the solvent from the membrane with the evaporation of the purified water during the later drying processes. According to the present invention, it is therefore possible to continuously mass-produce the solid electrolyte membrane with a high proton conductivity without being influenced from temperature and humidity during the membrane production. When the obtained solid electrolyte membrane is used for the solid electrolyte layer of the fuel cell, the fuel cell exerts excellent output density.

[Example 16]

[Production of Solid Electrolyte Membrane]

The dope A was cast from the casting die 93 onto the running PET film that is the belt 323. The drying device blew the dry air at the temperature of 45°C and the humidity of 10%RH to the casting membrane 261 for 30 minutes, and the casting membrane 261 was dried until the remaining solvent amount reached 180 wt. % on a dry basis. 50 ml/$m^2$ of the purified water as the contact poor solvent 352 kept at approximately 30°C was coated by the slot die onto the casting membrane 261 on the PET film. The coated surface of the casting membrane 261 was prevented from contacting with other members, the dry air, and the like. While keeping this condition for 5 minutes, the casting membrane 261 was transported. Then, the casting membrane 261 was peeled from the PET film as the wet precursor membrane 267. The self-supporting property developing process 266, which was performed after the casting membrane forming process 263 and before the peeling process 268, was conducted under the optimal conditions found from the preliminary performed experiment. The elastic modulus of the wet precursor membrane 267 in the peeling process 268 was $5.5\times10^6$ Pa. The wet precursor membrane 267 was immersed in the purified water as the substitution solvent 334 kept at 30°C for 5 minutes, and thereby the solvent substitution was performed to the wet precursor membrane 267. After the wet precursor membrane 267 was transported out of the purified water by the guide rollers 335a, the moisture content attached on the surfaces of the wet precursor membrane 267 was removed by the air showers 103. The wet precursor membrane 267 was then transported to the tenter device 85. The wet precursor membrane 267 was held by the clips 85a at its both side edges. Along with the movement of the clips 85a, the wet precursor membrane 267 was transported inside the tenter device 85. In the tenter device 85, the wet precursor membrane 267 was dried by the dry air at 120°C for 10 minutes. In this way, the wet precursor membrane 267 whose remaining solvent amount was 10 wt. % on a dry basis was obtained. At the exit of the tenter device 85, the wet precursor membrane 267 was released from the clips 85a. The side edges of the wet precursor membrane 267 were cut off by the edge slitting device 108. The wet precursor membrane 267 was guided by the guide rollers 314b to the 0.5 mol/liter sulfuric acid aqueous solution as the proton solution 110 kept at 80°C, and the proton substitution was performed to the wet precursor membrane 267 therein. Owing to this proton substitution, the wet solid electrolyte membrane 275 was obtained from the wet precursor membrane 267. The wet solid electrolyte membrane 275 fed out of the sulfuric acid aqueous solution was washed with the water as the washing liquid 121. After the washing, the water content attached on the surfaces of the wet solid electrolyte membrane 275 was removed by the air shower. The wet solid electrolyte membrane 275 from which the attached water content was removed was transported to the drying chamber 87. In the drying chamber 87, the wet solid electrolyte membrane 275 was dried in the range of 120°C to 185°C while being transported by the rollers 127. Thereby, the solid electrolyte membrane 279 whose remaining solvent amount was less than 5 wt.% on a dry basis was obtained.

[Example 17]

The solid electrolyte membrane 279 was produced from the dope B. The solid electrolyte membrane 279 was produced in the same manner as the Example 16 except that the dry air at the temperature of 45°C and the humidity of 10%RH was applied to the casting membrane 261 for 20 minutes in the casting membrane drying process 266a. The elastic modulus of the wet precursor membrane 267 in the peeling process 268 was $6.6\times10^6$ Pa.

[Example 18]

The solid electrolyte membrane 279 was produced from the dope B in the same manner as the Example 17 except that an aqueous 20 wt.% DMSO solution kept at approximately 30°C was used as the contact poor solvent 352 in the first liquid contacting process 266b. The elastic modulus of the wet precursor membrane 267 in the peeling process 268 was $2.3\times10^6$ Pa.

[Example 19]

The solid electrolyte membrane producing process 260 was performed with use of the dope B, in the same manner as the Example 17 except that the casting membrane 261 was peeled as the wet precursor membrane from the PET film right after the casting membrane drying process 266a in which the dry air at the temperature of 45°C and the humidity of 10%RH was applied to the casting membrane 261 for 20 minutes. This wet precursor membrane was deformed by its own weight and could not be transported in the membrane producing apparatus 300.

[Example 20]

The solid electrolyte membrane was produced from the dope B in the same manner as the Example 17 except that the casting membrane 261 was transported while keeping the condition of preventing the coated surface of the casting membrane 261 from contacting with other members, the dry air, and the like for 1 minute. The elastic modulus of the wet precursor membrane in the peeling process 268 was $8.9 \times 10^4$ Pa. When the wet precursor membrane was guided into the purified water kept approximately at 30°C, the membrane base contracted, and the wet precursor membrane was deformed and could not be transported in the membrane producing apparatus 300.

[Example 21]

The solid electrolyte membrane was produced from the dope B in the same manner as the Example 17 except that the wet precursor membrane peeled from the PET film was transported to the tenter device 85 without contacting with the purified water. The elastic modulus of the wet precursor membrane in the peeling process 268 was $6.6 \times 10^6$ Pa.

[Example 22]

The solid electrolyte membrane was produced from the dope B in the same manner as the Example 17 except that methanol in the material B was replaced by dimethylsulfoxide. The elastic modulus of the wet precursor membrane in the peeling process 268 was $1.8 \times 10^3$ Pa.

[Example 23]

The solid electrolyte membrane was produced from the dope B in the same manner as the Example 17 except that the wet precursor membrane 267 was immersed in the purified water kept at 30°C for 20 minutes in the first liquid contacting process 266a. The elastic modulus of the wet precursor membrane 267 in the peeling process 268 was $6.6 \times 10^6$ Pa.

The properties of the solid electrolyte membranes obtained from the Examples 16 to 23 were evaluated for each of the following items. The membranes were evaluated according to same methods and criteria among the Examples 16 to 23. The evaluation results are shown in Table 3. The numerals of the evaluation items in Table 3 correspond to the numerals assigned to the following items.

1. Production Continuity

The solid electrolyte membranes were evaluated as to whether they were produced continuously. The evaluation criteria were same as described above.

2. Average and Variation in Thickness

In Table 3, (a) is average thickness (unit: $\mu$m) and (b) is variation in thickness (unit: $\mu$m) with respect to (a). The measurement method was same as described above.

3. Weight of Residual DMSO in Solid Electrolyte Membrane

Weight of residual DMSO in each solid electrolyte membrane was measured. The measurement method was same as described above.

4. Adhesion Property of Electrodes

MEA was produced, and the adhesion property of the electrodes was evaluated. The evaluation method was same as described above.

5. Proton Conductivity

The proton conductivity of the membrane was measured. The measurement method was same as described above.

6. Measurement of Output Density of Fuel Cell

The completed solid electrolyte membranes were used for producing fuel cells, and output density of each fuel cell was measured. The producing method of the fuel cell and the measurement method of the output density were same as described above.

In Table 3, evaluation results of the Examples 16 to 23 are shown.

[Table 3]

| | Evaluation Item | | | | | | |
|---|---|---|---|---|---|---|---|
| | 1 | 2 (μm) | | 3 (wt.%) | 4 | 5 (S/cm) | 6 (W/cm$^2$) |
| | | (a) | (b) | | | | |
| Example 16 | Good | 63 | ±1.5 | 0.4 | Good | 0.18-0.19 | 0.49-0.50 |
| Example 17 | Good | 64 | ±1.5 | 0.2 | Good | 0.18-0.19 | 0.51-0.52 |
| Example 18 | Good | 62 | ±1.5 | 0.5 | Good | 0.19-0.20 | 0.52-0.53 |
| Example 19 | Poor | - | - | - | - | - | - |
| Example 20 | Poor | - | - | - | - | - | - |
| Example 21 | Normal | 71 | ±3.5 | 10.5 | Poor | 0.08-0.09 | 0.15-0.16 |
| Example 22 | Normal | 69 | ±3.4 | 6.7 | Poor | 0.10-0.11 | 0.18-0.19 |
| Example 23 | Normal | 72 | ±2.4 | 0.2 | Poor | 0.18-0.19 | 0.47-0.49 |

As shown in Table 3, the solid electrolyte membranes with small variation in thickness were produced in the Examples 16 to 18 of the present invention. The solid electrolyte membranes 279 produced in the Examples 16 to 18 had excellent proton conductivity. In addition, the output densities of the fuel cells 541 including the solid electrolyte membranes 279 were not less than 0.49, which is excellent power output for the fuel cell. In the Examples 19 and 20, the wet precursor membranes obtained in the peeling process 268 could not possess enough self-supporting property due to the insufficient performance of the first liquid contacting process 266a. In the Examples 21 and 22, even though the solid electrolyte membranes were produced, the produced solid electrolyte membranes were inferior to the solid electrolyte membranes 279 produced in the Examples 16 to 18 in terms of the thickness variation, the proton conductivity and the output density when they were used in the fuel cells. Such inferiorities resulted from the insufficient adhesion between the solid electrolyte membrane and the electrodes during the MEA formation. Reduction in adhesion property of the solid electrolyte membrane was presumably caused because the casting membrane with insufficient elastic modulus was peeled in the peeling process 268 and the solid electrolyte membrane whose surfaces were not smooth was produced from such casting membrane. Accordingly, it is understood that the following conditions need to be satisfied in order to produce the solid electrolyte membrane having excellent quality and properties: (1) the dope 24 includes the polymer, and the good solvent and the poor solvent of the polymer, and (2) both the first liquid contacting process 266b and the second liquid contacting process 270 are performed. According to the result of the Example 23, it is also understood that the performance of the second liquid contacting process 270 for a long time increases thickness variation of the membrane after the drying, due to the swelling of the moisture contained in the membrane. Moreover, it is understood that the membrane production, that is, the solid electrolyte membrane producing process 260 can be performed within 2 hours according to the solid electrolyte membrane producing method of the present invention.

According to the present invention, it is possible to continuously mass-produce the solid electrolyte membrane with a high proton conductivity while the proton substitution process is performed on-line. When the obtained solid electrolyte membrane is used for the solid electrolyte layer of the fuel cell, the fuel cell exerts excellent output density.

[Example 24]

[Production of Solid Electrolyte Membrane]

The dope A was cast from the casting die 93 onto the running PET film that is the belt 94 to form the casting membrane 61. The casting membrane drying devices 81 blew the dry air at the temperature of 45°C and the humidity of 10%RH for 30 minutes. The casting membrane 61 was dried until the remaining solvent amount reached 200 wt.% on a dry basis. The casting membrane 61 was immersed in the water of 30°C with the PET film. The casting membrane

61 was peeled from the PET film in the water, and thereby the wet precursor membrane 67 was obtained. The wet precursor membrane 67 was kept in the water, and the solvent substitution was performed thereto. Time taken from the peeling of the casting membrane 61 from the PET film until the solvent substitution was 5 minutes. In this way, the wet precursor membrane 67 with the self-supporting property whose remaining solvent amount was 150 wt.% on a dry basis was obtained. After going through the air showers 103, the wet precursor membrane 67 was transported to the tenter device 85. In the tenter device 85, the wet precursor membrane 67 was transported while its both side edges were held by the clips 85a. In the tenter device 85, the wet precursor membrane 67 was dried for 10 minutes by the dry air at 120°C. Thus, the wet precursor membrane 67 whose remaining solvent amount reached 10 wt.% on a dry basis was obtained. At the exit of the tenter device 85, the wet precursor membrane 67 was released from the clips 85a. The side edges of the wet precursor membrane 67, which had been held by the clips 85a, were cut off by the edge slitting device 108 provided downstream from the tenter device 85. 50 ml/$m^2$ of the proton solution 110 was coated on one surface of the wet precursor membrane 67 by the coating applicator 151, and the coating was formed on the surface of the wet precursor membrane 67. As the proton solution 110, the sulfuric acid aqueous solution whose sulfuric acid concentration was approximately 2.0 mol/liter and the temperature of approximately 70°C was used. The wet precursor membrane 67 was heated by the heater 158 such that the temperature of the transported wet precursor membrane 67 was made to be not less than 80°C and not more than 100°C. Owing to the heating by the heater 158, the wet precursor membrane 67 became the undried solid electrolyte membrane. The undried solid electrolyte membrane was immersed in the purified water at approximately 70°C stored in the first liquid bath 152 and washed therein. After going through the pair of air knives 160, the undried solid electrolyte membrane was immersed in the purified water at approximately 70°C stored in the second liquid bath 153 and washed therein. The moisture content attached on the undried solid electrolyte membrane was removed by the pair of air knives 161. The undried solid electrolyte membrane from which the attached moisture content was removed was transported to the drying chamber 87. In the drying chamber 87, the undried solid electrolyte membrane was dried in the range of 60°C to 120°C while being transported by the rollers 127. In this way, the solid electrolyte membrane 165 whose remaining solvent amount was less than 5 wt.% on a dry basis was obtained. Evaluation result of the obtained solid electrolyte membrane 165 is shown in Table 4.

[Example 25]

In the solid electrolyte membrane producing method 60, the first drying process 72 was performed to the wet precursor membrane 67. The wet precursor membrane fragment 189 which was cut out into a predetermined dimension from the wet precursor membrane 67 was subjected to the proton substitution process 73 by using the proton substitution device 190. The 1.0 mol/liter sulfuric acid aqueous solution was used as the proton solution 110 and the ion-exchanged water was used as the proton solution 210. While the proton solution 110 was contacted to one surface of the wet precursor membrane fragment 189, and the proton solution 210 was contacted to the other surface of the same, both the proton solutions 110 and 210 were boiled for 2 hours. In this way, the proton substitution was performed. After the proton substitution, ion-exchanged water was pored to the wet precursor membrane fragment 189 to wash it. After twice of washing, the wet precursor membrane fragment 189 was immersed in distillated water, and the distillated water was boiled for 2 hours. In this way, the solid electrolyte membrane was obtained. Evaluation result of the obtained solid electrolyte membrane is shown in Table 4.

[Example 26]

The solid electrolyte membrane 165 was produced from the dope B. The solid electrolyte membrane 165 was produced according to the same producing method as the Example 24. Evaluation result of the obtained solid electrolyte membrane 165 is shown in Table 4.

[Example 27]

The solid electrolyte membrane was produced from the dope B in the same manner as the Example 25 except that the sulfuric acid aqueous solution having 2.0 mol/liter of proton concentration was used as the proton solution 110. Evaluation result of the obtained solid electrolyte membrane is shown in Table 4.

[Example 28]

The solid electrolyte membrane was produced in the same manner as the Example 27 except that the sulfuric acid aqueous solution having 1.0 mol/liter of proton concentration was used as the proton solution 110 and the sulfuric acid aqueous solution having 0.5 mol/liter of proton concentration was used as the proton solution 210 in the proton substitution process 73. Evaluation result of the obtained solid electrolyte membrane is shown in Table 4.

[Example 29]

The solid electrolyte membrane was produced from the dope A in the same manner as the Example 24 except that the wet precursor membrane 67 was immersed in the sulfuric acid aqueous solution having 1.0 mol/liter of proton concentration at approximately 70°C in the proton substitution process 73. The undried solid electrolyte membrane obtained in this way was then immersed in the purified water at 70°C and washed therein. Moreover, the undried solid electrolyte membrane was immersed in another purified water and washed therein. After that, the moisture content was removed from the undried solid electrolyte membrane by the air knives. The undried solid electrolyte membrane was sent to the drying chamber 87 and dried in the range of 60°C to 120°C while being transported by the rollers 127. Evaluation result of the obtained solid electrolyte membrane is shown in Table 4.

[Example 30]

The solid electrolyte membrane was produced from the dope A in the same manner as the Example 25 except that the wet precursor membrane fragment 189 was immersed in the sulfuric acid aqueous solution having 1.0 mol/liter of proton concentration and the sulfuric acid aqueous solution was boiled for 2 hours in the proton substitution process 73. Evaluation result of the obtained solid electrolyte membrane is shown in Table 4.

[Example 31]

The solid electrolyte membrane was produced from the dope B in the same manner as the Example 29. Evaluation result of the obtained solid electrolyte membrane is shown in Table 4.

[Example 32]

The solid electrolyte membrane was produced from the dope B in the same manner as the Example 30. Evaluation result of the obtained solid electrolyte membrane is shown in Table 4.

[Example 33]

The solid electrolyte membrane was produced in the same manner as the Example 28 except that the sulfuric acid aqueous solution having 0.95 mol/liter of proton concentration was used as the proton solution 210 in the proton substitution process 73. Evaluation result of the obtained solid electrolyte membrane is shown in Table 4.

The properties of the solid electrolyte membranes obtained from the Examples 24 to 33 were evaluated for each of the following items. The membranes were evaluated according to same methods and criteria among the Examples 24 to 33. The evaluation results are shown in Table 4. The numerals of the evaluation items in Table 4 correspond to the numerals assigned to the following items.

1. Proton Substitution Rate

Weight of a sample obtained from each solid electrolyte membrane was measured, and the sample was immersed in a 0.2 mol/liter aqueous NaOH solution for 2 hours to perform alkali treatment thereto. During the immersion of the sample, the aqueous NaOH solution was stirred. The sample to which the alkali treatment was performed was taken out of the solution, and back-titration using aqueous hydrochloric acid solution was performed to the sample to obtain Ion Exchange Capacity (IEC) thereof. IEC was compared with a theoretical value calculated from a sulfonic acid group introduction amount (n=0.33), and thereby the amount of the sulfonic acid group substituted by proton was calculated. The obtained value was evaluated as the proton substitution rate.

2. Proton Conductivity

The proton conductivity of the membrane was measured. The measurement method was same as described above.

3. Measurement of Output Density of Fuel Cell

The solid electrolyte membranes obtained from the Examples 24 to 33 were used for producing fuel cells, and output density of each fuel cell was measured. The producing method of the fuel cell and the measurement method of the output density were same as described above.

[Table 4]

| | Evaluation Item | | |
|---|---|---|---|
| | 1 (mol%) | 2 (S/cm) | 3 (W/cm$^2$) |
| Example 24 | 94 | 0.20-0.21 | 0.54-0.55 |
| Example 25 | 95 | 0.19-0.21 | 0.54-0.56 |
| Example 26 | 97 | 0.21-0.22 | 0.55-0.56 |
| Example 27 | 96 | 0.20-0.21 | 0.55-0.57 |
| Example 28 | 95 | 0.20-0.21 | 0.55-0.56 |
| Example 29 | 96 | 0.16-0.18 | 0.48-0.49 |
| Example 30 | 94 | 0.16-0.17 | 0.47-0.49 |
| Example 31 | 97 | 0.17-0.18 | 0.47-0.48 |
| Example 32 | 95 | 0.16-0.18 | 0.47-0.49 |
| Example 33 | 94 | 0.16-0.17 | 0.47-0.49 |

As shown in Table 4, the solid electrolyte membranes produced in the Examples 24 to 28 had better proton conductivity as compared to the solid electrolyte membranes produced in the Examples 29 to 33. The output densities of the fuel cells including the solid electrolyte membranes of the Examples 24 to 28 were higher as compared to the output densities of the fuel cells including the solid electrolyte membranes of the Examples 29 to 33. As to the proton substitution rate, however, a considerable disparity was not found between the results of the Examples 24 to 28 and the results of the Examples 29 to 33. Accordingly, it is recognized that the improvement of the proton conductivity of the solid electrolyte membrane is not attributed only to the proton substitution rate. That is, the solid electrolyte membrane producing method of the present invention led factors for improving the proton conductivity of the solid electrolyte membrane. The factors for the improvement of the proton conductivity are as follows: (1) the proton substitution is performed only to the first surface 67a of the wet solid electrolyte membrane 67, or (2) difference of the proton concentration between the proton solution 110 contacted to the first surface 67a of the wet precursor membrane 67 and the proton solution 210 contacted to the second surface 67b of the same is more than the certain value in the proton substitution process.

According to the present invention, high proton substitution rate can be maintained while the proton substitution process is performed on-line. At the same time, it is possible to continuously mass-produce the solid electrolyte membrane with a high proton conductivity. When the obtained solid electrolyte membrane is used for the solid electrolyte layer of the fuel cell, the fuel cell exerts excellent output density.

Industrial applicability

The solid electrolyte membrane, the method and the apparatus for producing the same, the membrane electrode assembly and the fuel cell using the solid electrolyte membrane of the present invention are applicable to the power sources for various mobile appliances and various portable appliances.

**Claims**

**1.** A method for producing a solid electrolyte membrane, **characterized in that** the method comprises the steps of:

forming a casting membrane by casting a dope containing a solid electrolyte and a solvent,
selected from an aromatic hydrocarbon, halogenated hydrocarbon, alcohol, ketone, ester,
ether and compounds containing nitrogen, onto a support, wherein said solid electrolyte includes a precursor of said solid electrolyte which is a proton acceptor;
peeling said casting membrane from said support as a wet membrane;
contacting at least one of said casting membrane and said wet membrane with a contact liquid, selected from purified water or an aqueous solution of the solvent;
drying said wet membrane to evaporate said contact liquid from said wet membrane;

contacting one surface of said wet membrane including said precursor with a proton solution which is a proton donor, having a proton concentration of not less than 0.05 mol/liter; and
washing and drying said wet membrane after the contact with said proton solution.

2. A method according to claim 1, wherein said solvent is a mixture of a good solvent compound which is a good solvent of said solid electrolyte and a poor solvent compound which is a poor solvent of said solid electrolyte, and said contact liquid is soluble to said good solvent compound and said poor solvent compound, wherein the good solvent is selected from DMF, DMAc, DMSO and NMP and the poor solvent is selected from lower alcohol having 1 to 5 carbons, methyl acetate and acetone.

3. A method according to claim 2, further comprising the step of evaporating part of said solvent from said casting membrane before said liquid contacting step, wherein said casting membrane at a time of starting said liquid contacting step contains said good solvent compound and said poor solvent compound.

4. A method according to claim 3, wherein weight ratio of said poor solvent compound to said solid electrolyte in said casting membrane at the time of starting said liquid contacting step is not less than 2% and less than 100%.

5. A method according to claim 2, wherein said contact liquid is either aqueous solution containing a compound having a lower boiling point than said good solvent compound or water.

6. A method according to claim 3, wherein said casting membrane forming step, said evaporating step, said liquid contacting step, said peeling step and said drying step are performed as a continuous process.

7. A method according to claim 1, wherein said contact liquid contains a poor solvent compound which is a poor solvent of said solid electrolyte.

8. A method according to claim 1, wherein said contact liquid is either an aqueous solution containing a good solvent compound which is a good solvent of said solid electrolyte or water.

9. A method according to claim 7, wherein said wet membrane is contacted with a liquid soluble to said solvent.

10. A method according to claim 9, wherein said liquid is either an aqueous solution containing said solvent or water.

11. A method according to claim 9, wherein time for contacting said wet membrane with said liquid is not more than 10 minutes.

12. A method according to claim 10, wherein part of said solvent is evaporated from said casting membrane before said liquid contacting step.

13. A method according to claim 1, wherein said solvent is a mixture of a good solvent compound which is a good solvent of said solid electrolyte and a poor solvent compound which is a poor solvent of said solid electrolyte, and said contact liquid is purified water.

14. A method according to claim 13, wherein said casting membrane after the contact with said purified water contains less of the good solvent compound as compared to before the contact.

15. A method according to claim 13, wherein said purified water is contacted with said casting membrane at least by spraying said purified water or by coating said purified water onto said casting membrane.

16. A method according to claim 13, wherein at least one of said casting membrane after the contact with said purified water and said wet membrane is contacted with a liquid which is soluble to both of said good solvent compound and said poor solvent compound.

17. A method according to claim 16, wherein said liquid is either a mixture of water and said good solvent compound or a mixture of water and said poor solvent compound.

18. A method according to claim 17, wherein a sum of time for contacting said casting membrane with said purified water and time for contacting at least one of said casting membrane and said wet membrane with said liquid is not

more than 10 minutes

**19.** A method according to claim 1, wherein the other surface of said wet membrane is contacted with a low-concentration proton solution having a proton concentration lower than said proton solution having a proton concentration of not less than 0.05 mol/liter.

**20.** A method according to claim 1, wherein the formula weight of the anion contained in said proton solution is not less than 40 and not more than 1000.

**21.** A method according to claim 19, wherein said low-concentration proton solution is a liquid containing an anion having a formula weight of not less than 40 and not more than 1000 or water.

**22.** A method according to claim 1, wherein a temperature of said wet membrane at a time of the contact with said proton solution or said low-concentration proton solution is not less than 30°C and not more than glass-transition temperature of said precursor.

**23.** A method according to claim 1, wherein a temperature of at least one of said proton solution and said low-concentration proton solution is not less than 30°C and not more than glass-transition temperature of said precursor.

**24.** A method according to claim 1, wherein said proton substitution step and said washing and drying step are performed successively.

**25.** A method according to claim 1, wherein said good solvent compound contains dimethylsulfoxide, and said poor solvent compound contains alcohol having one to five carbons.

**26.** A method according to claim 1, wherein said solid electrolyte is a hydrocarbon polymer.

**27.** A method according to claim 26, wherein said hydrocarbon polymer is an aromatic polymer having a sulfonic acid group.

**28.** A method according to claim 27, wherein said aromatic polymer is a copolymer formed of structural units represented by general formulae (I), (II) and (III) shown in chemical formula 1.

[Chemical formula 1]

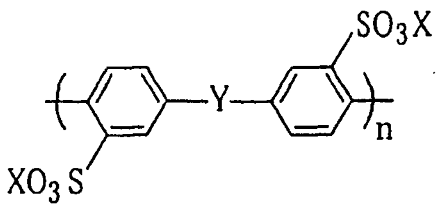

··· ( I )

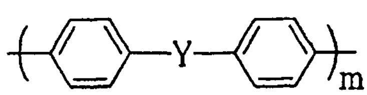

··· ( II )

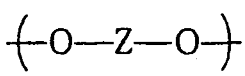

··· ( III )

(X is cation species, Y is $SO_2$, Z has a structure represented in (I) or (II) in a chemical formula 2, n and m satisfy $0.1 < n/(m+n) < 0.5$)

[Chemical formula 2]

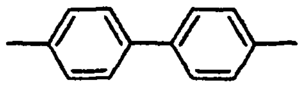

··· ( I )

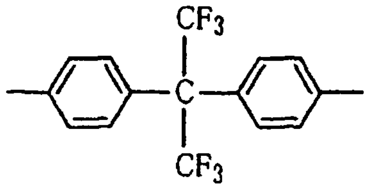

··· ( II )

**29.** An apparatus for producing a solid electrolyte membrane, **characterized in that** the apparatus comprises:

a casting device for casting a dope containing a solid electrolyte and a solvent onto a support to form a casting membrane, wherein the solvent is selected from an aromatic hydrocarbon, halogenated hydrocarbon, alcohol, ketone, ester, ether and compounds containing nitrogen;
a peeling device for peeling said casting membrane from said support as a wet membrane;
a contact liquid contacting device for contacting at least one of said casting membrane and
said wet membrane with a contact liquid, said contact liquid containing a liquid soluble to said solvent or a liquid which is a poor solvent of said solid electrolyte;
a drying device for drying said wet membrane;
a proton solution contacting device for contacting one surface of said wet membrane including a polymer which is a precursor of said solid electrolyte with a proton solution containing acid which is a proton donor, said proton solution having a proton concentration of not less than 0.05 mol/liter;
a washing device for washing said wet membrane after the contact with said proton solution; and
an after-wash drying device for drying said wet membrane after the washing;
further comprising a temperature control device for controlling the temperature of said proton solution or the temperature of one surface of said wet membrane.

**30.** An apparatus according to claim 29, wherein said proton solution contacting device includes a low-concentration proton solution contacting device for contacting the other surface of said wet membrane with a low-concentration proton solution having a proton concentration lower than said proton solution having a proton concentration of not less than 0.05 mol/liter, and said temperature control device includes another temperature control device for controlling temperature of said low-concentration proton solution or temperature of said the other surface of said wet membrane.

## Patentansprüche

**1.** Verfahren zur Herstellung einer Festelektrolytmembran, **dadurch gekennzeichnet, dass** das Verfahren die Schritte umfasst:

Bilden einer Gussmembran durch Gießen einer Formulierung (dope), enthaltend einen Festelektrolyten und ein Lösungsmittel, das ausgewählt ist aus einem aromatischen Kohlenwasserstoff, halogenierten Kohlenwasserstoff, Alkohol, Keton, Ester, Ether und Stickstoff enthaltenden Verbindungen, auf einen Träger, worin der Festelektrolyt einen Vorläufer des Festelektrolyten enthält, welcher ein Protonenakzeptor ist;
Abziehen der Gussmembran vom Träger als eine nasse Membran;
Inkontaktbringen mindestens einer von der Gussmembran und der nassen Membran mit einer Kontaktflüssigkeit, ausgewählt aus gereinigtem Wasser oder einer wässrigen Lösung des Lösungsmittels;
Trocknen der nassen Membran, um die Kontaktflüssigkeit aus der nassen Membran zu verdampfen;
Inkontaktbringen einer Oberfläche der nassen Membran, beinhaltend den Vorläufer, mit einer Protonenlösung, welche ein Protonendonator ist mit einer Protonenkonzentration von nicht weniger als 0,05 mol/l; und
Waschen und Trocknen der nassen Membran nach dem Kontakt mit der Protonenlösung.

2. Das Verfahren gemäß Anspruch 1, worin das Lösungsmittel eine Mischung ist aus einer guten Lösungsmittelverbindung, welche ein gutes Lösungsmittel des Festelektrolyten ist, und einer schlechten Lösungsmittelverbindung, welche ein schlechtes Lösungsmittel des Festelektrolyten ist, und diese Kontaktflüssigkeit ist löslich in der guten Lösungsmittelverbindung und der schlechten Lösungsmittelverbindung, worin das gute Lösungsmittel ausgewählt ist aus DMF, DMAc, DMSO und NMP, und das schlechte Lösungsmittel ausgewählt ist aus niedrigem Alkohol mit 1 bis 5 Kohlenstoffatomen, Methylacetat und Aceton.

3. Das Verfahren gemäß Anspruch 2, weiterhin umfassend den Schritt des Verdampfens eines Teils des Lösungsmittels aus der Gussmembran vor dem Flüssigkeitskontaktierungsschritt, worin die Gussmembran zu dem Zeitpunkt, bei welchem der Schritt des
Inkontaktbringens der Flüssigkeit beginnt, die gute Lösungsmittelverbindung und die schlechte Lösungsmittelverbindung enthält.

4. Das Verfahren gemäß Anspruch 3, worin das Gewichtsverhältnis der guten Lösungsmittelverbindung zum Festelektrolyten in der Gussmembran zum Zeitpunkt des Beginns des Schrittes zum Inkontaktbringen der Flüssigkeit nicht weniger als 2 % und weniger als 100 % beträgt.

5. Das Verfahren gemäß Anspruch 2, worin die Kontaktflüssigkeit entweder eine wässrige Lösung, welche eine Verbindung mit einem niedrigeren Siedepunkt als die gute Lösungsmittelverbindung enthält, oder Wasser ist.

6. Das Verfahren gemäß Anspruch 3, worin der Schritt zum Bilden der Gussmembran, der Verdampfungsschritt, der Schritt zum Inkontaktbringen der Flüssigkeit, der Abziehschritt und der Trocknungsschritt als ein kontinuierliches Verfahren durchgeführt werden.

7. Das Verfahren gemäß Anspruch 1, worin die Kontaktflüssigkeit eine schlechte Lösungsmittelverbindung enthält, welche ein schlechtes Lösungsmittel für den Festelektrolyten ist.

8. Das Verfahren gemäß Anspruch 1, worin die Kontaktflüssigkeit entweder eine wässrige Lösung, enthaltend eine gute Lösungsmittelverbindung, welches ein gutes Lösungsmittel des Festelektrolyten ist, oder Wasser ist.

9. Das Verfahren gemäß Anspruch 7, worin die nasse Membran mit einer Flüssigkeit in Kontakt gebracht wird, welche zu dem genannten Lösungsmittel löslich ist.

10. Das Verfahren gemäß Anspruch 9, worin die Flüssigkeit entweder eine wässrige Lösung, welche das Lösungsmittel enthält, oder Wasser ist.

11. Das Verfahren gemäß Anspruch 9, worin der Zeitraum zum Inkontaktbringen der nassen Membran mit der Flüssigkeit nicht mehr 10 Minuten beträgt.

12. Das Verfahren gemäß Anspruch 10, worin ein Teil des Lösungsmittels von der Gussmembran vor dem Schritt des Inkontaktbringens mit der Flüssigkeit verdampft wird.

13. Das Verfahren gemäß Anspruch 1, worin das Lösungsmittel eine Mischung ist aus einer guten Lösungsmittelverbindung, welche ein gutes Lösungsmittel des Festelektrolyten ist, und einer schlechten Lösungsmittelverbindung, welche ein schlechtes Lösungsmittel für den Festelektrolyten ist, und die Kontaktflüssigkeit aufgereinigtes Wasser ist.

14. Das Verfahren gemäß Anspruch 13, worin die Gussmembran nach dem Kontakt mit dem aufgereinigten Wasser weniger von der guten Lösungsmittelverbindung enthält im Vergleich zu vor dem Kontakt.

15. Das Verfahren gemäß Anspruch 13, worin das aufgereinigte Wasser in Kontakt mit der Gussmembran gebracht wird zumindest durch Versprühen des aufgereinigten Wassers oder durch Auftragen des aufgereinigten Wassers auf die Gussmembran.

16. Das Verfahren gemäß Anspruch 13, worin mindestens eine von der Gussmembran nach dem Kontakt mit dem aufgereinigten Wasser und der nassen Membran mit einer Flüssigkeit in Kontakt gebracht wird, welche sowohl für die gute Lösungsmittelverbindung als auch für die schlechte Lösungsmittelverbindung löslich ist.

17. Das Verfahren gemäß Anspruch 16, worin diese Flüssigkeit entweder eine Mischung aus Wasser und der guten

Lösungsmittelverbindung oder eine Mischung aus Wasser und der schlechten Lösungsmittelverbindung ist.

**18.** Das Verfahren gemäß Anspruch 17, worin die Summe der Zeit für das Inkontaktbringen der Gussmembran mit dem aufgereinigten Wasser und der Zeit für das Inkontaktbringen mindestens einer von der Gussmembran und der nassen Membran mit dieser Flüssigkeit nicht mehr als 10 Minuten beträgt.

**19.** Das Verfahren gemäß Anspruch 1, worin die andere Oberfläche der nassen Membran mit einer niedrig konzentrierten Protonenlösung in Kontakt gebracht wird, die eine Protonenkonzentration aufweist, die niedriger ist als die der Protonenlösung mit einer Protonenkonzentration von nicht weniger als 0,05 mol/l.

**20.** Das Verfahren gemäß Anspruch 1, worin das Formelgewicht des Anions, welches in der Protonenlösung enthalten ist, nicht weniger als 40 und nicht mehr als 1000 beträgt.

**21.** Das Verfahren gemäß Anspruch 19, worin die niedrig konzentrierte Protonenlösung eine Flüssigkeit, welche ein Anion mit einem Formelgewicht von nicht weniger als 40 und nicht mehr als 1000 enthält, oder Wasser ist.

**22.** Das Verfahren gemäß Anspruch 1, worin die Temperatur der nassen Membran zu einem Zeitpunkt des Inkontaktbringens mit der Protonenlösung oder der niedrig konzentrierten Protonenlösung nicht weniger als 30 °C und nicht mehr als die Glasübergangstemperatur des Vorläufers beträgt.

**23.** Das Verfahren gemäß Anspruch 1, worin die Temperatur von mindestens einem aus der Protonenlösung und der niedrig konzentrierten Protonenlösung nicht weniger als 30 °C und nicht mehr als die Glasübergangstemperatur des Vorläufers beträgt.

**24.** Das Verfahren gemäß Anspruch 1, worin der Protonenersetzungsschritt und der Wasch- und Trocknungsschritt nacheinander durchgeführt werden.

**25.** Das Verfahren gemäß Anspruch 1, worin die gute Lösungsmittelverbindung Dimethylsulfoxid enthält und die schlechte Lösungsmittelverbindung Alkohol mit 1 bis 5 Kohlenstoffatomen enthält.

**26.** Das Verfahren gemäß Anspruch 1, worin der Festelektrolyt ein Kohlenwasserstoffpolymer ist.

**27.** Das Verfahren gemäß Anspruch 26, worin das Kohlenwasserstoffpolymer ein aromatisches Polymer mit einer Sulfonsäuregruppe ist.

**28.** Das Verfahren gemäß Anspruch 27, worin das aromatische Polymer ein Copolymer ist, gebildet aus Struktureinheiten, dargestellt durch die allgemeinen Formeln (I), (II) und (III), die in der chemischen Formel 1 gezeigt werden

[Chemische Formel 1]

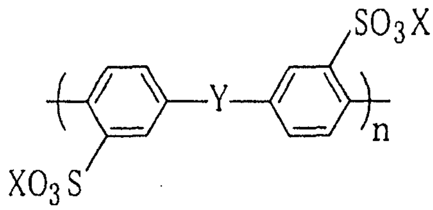

··· ( I )

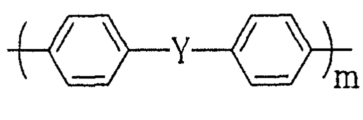

··· ( II )

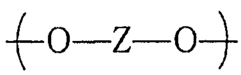

··· ( III )

(X ist eine kationische Spezies, Y ist $SO_2$, Z hat eine Struktur, die in (I) oder (II) in der chemischen Formel 2 dargestellt wird, n und m erfüllen $0,1 < n/(m+n) < 0,5$)

[Chemische Formel 2]

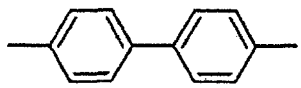

··· ( I )

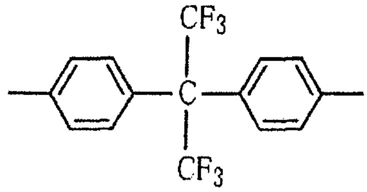

··· ( II )

**29.** Ein Gerät zur Herstellung einer Festelektrolytmembran, **dadurch gekennzeichnet, dass** das Gerät umfasst:
eine Gießvorrichtung zum Gießen einer Formulierung (dope), enthaltend einen Festelektrolyten und ein Lösungsmittel, auf einen Träger, um eine Gussmembran zu bilden, worin das Lösungsmittel ausgewählt ist aus einem aromatischen Kohlenwasserstoff, halogenierten Kohlenwasserstoff, Alkohol, Keton, Ester, Ether und Stickstoff enthaltenden Verbindungen;
eine Abziehvorrichtung zum Abziehen der Gussmembran vom Träger als eine nasse Membran;
eine Vorrichtung zum Inkontaktbringen der Kontaktflüssigkeit, um wenigstens eine von der Gussmembran und der nassen Membran mit einer Kontaktflüssigkeit in Kontakt zu bringen, wobei die Kontaktflüssigkeit eine Flüssigkeit, die zum Lösungsmittel löslich ist, oder eine Flüssigkeit, welche ein schlechtes Lösungsmittel des Festelektrolyten ist, enthält;
eine Trocknungsvorrichtung zum Trocknen der nassen Membran;
eine Vorrichtung zum Inkontaktbringen einer Protonenlösung, um eine Oberfläche der nassen Membran, beinhaltend ein Polymer, welches ein Vorläufer des Festelektrolyten ist, mit einer Protonenlösung in Kontakt zu bringen, welche eine Säure enthält, die ein Protonendonator ist, wobei die Protonenlösung eine Protonenkonzentration von nicht weniger als 0,05 mol/l aufweist;
eine Waschvorrichtung zum Waschen der nassen Membran nach dem Kontakt mit der Protonenlösung; und
eine Trocknungsvorrichtung nach dem Waschen, um die nasse Membran nach dem Waschen zu trocknen;
weiterhin umfassend eine Temperaturkontrollvorrichtung zum Kontrollieren der Temperatur der Protonenlösung oder der Temperatur von einer der Oberflächen der nassen Membran.

**30.** Ein Gerät gemäß Anspruch 29, worin die Vorrichtung zum Inkontaktbringen der Protonenlösung eine Vorrichtung zum Inkontaktbringen einer niedrig konzentrierten Protonenlösung beinhaltet, um die andere Oberfläche der nassen Membran mit einer niedrig konzentrierten Protonenlösung, die eine Protonenkonzentration aufweist, die geringer ist als diejenige der Protonenlösung mit einer Protonenkonzentration von nicht weniger als 0,05 mol/l, in Kontakt zu bringen, und die Vorrichtung zur Temperaturkontrolle eine weitere Vorrichtung zur Temperaturkontrolle beinhaltet, um die Temperatur der niedrig konzentrierten Protonenlösung oder die Temperatur der anderen Oberfläche der nassen Membran zu kontrollieren.

## Revendications

**1.** Procédé de production d'une membrane d'électrolyte solide, **caractérisé en ce que** le procédé comprend les étapes suivantes :

formation d'une membrane de moulage en coulant un produit dopant contenant un électrolyte solide ainsi qu'un solvant sélectionné parmi un hydrocarbure aromatique, un hydrocarbure halogéné, un alcool, une cétone, un ester, un éther et des composés azotés, sur un support, dans lequel ledit électrolyte solide comprend un précurseur dudit électrolyte solide qui est un accepteur de proton ;
pelage de ladite membrane de moulage dudit support sous forme d'une membrane humide ;

mise en contact d'au moins ladite membrane de moulage ou ladite membrane humide avec un liquide de contact, sélectionné parmi de l'eau purifiée et une solution aqueuse du solvant ;
séchage de ladite membrane humide pour évaporer ledit liquide de contact de ladite membrane humide ;
mise en contact d'une surface de ladite membrane humide comprenant ledit précurseur avec une solution protonique qui constitue un donneur de proton, présentant une concentration en protons supérieure ou égale à 0,05 mole par litre ; et
lavage et séchage de ladite membrane humide après la mise en contact avec ladite solution protonique.

**2.** Procédé selon la revendication 1, dans lequel ledit solvant est un mélange d'un composé bon solvant qui est un bon solvant pour ledit électrolyte solide et d'un composé mauvais solvant qui est un mauvais solvant pour ledit électrolyte solide, et ledit liquide de contact est soluble dans ledit composé bon solvant et dans ledit composé mauvais solvant, dans lequel le bon solvant est sélectionné parmi le DMF, le DMAc, le DMSO et le NMP, et le mauvais solvant est sélectionné parmi un alcool inférieur comportant de 1 à 5 atomes de carbone, de l'acétate de méthyle et de l'acétone.

**3.** Procédé selon la revendication 2, comprenant en outre l'étape d'évaporation d'une partie dudit solvant de ladite membrane de moulage avant ladite étape de mise en contact du liquide, dans lequel ladite membrane de moulage contient ledit composé bon solvant et ledit composé mauvais solvant au moment du démarrage de ladite étape de mise en contact du liquide.

**4.** Procédé selon la revendication 3, dans lequel le rapport pondéral dudit composé mauvais solvant sur ledit électrolyte solide dans ladite membrane de moulage au moment du démarrage de ladite étape de mise en contact du liquide est supérieur ou égal à 2 % et inférieur à 100 %.

**5.** Procédé selon la revendication 2, dans lequel ledit liquide de contact est soit une solution aqueuse contenant un composé ayant un point d'ébullition inférieur à celui dudit composé bon solvant, soit de l'eau.

**6.** Procédé selon la revendication 3, dans lequel ladite étape de formation de la membrane de moulage, ladite étape d'évaporation, ladite étape de mise en contact du liquide, ladite étape de pelage et ladite étape de séchage sont mises en oeuvre sous forme d'un processus continu.

**7.** Procédé selon la revendication 1, dans lequel ledit liquide de contact contient un composé mauvais solvant qui est un mauvais solvant pour ledit électrolyte solide.

**8.** Procédé selon la revendication 1, dans lequel ledit liquide de contact est soit une solution aqueuse contenant un composé bon solvant qui est un bon solvant pour ledit électrolyte solide, soit de l'eau.

**9.** Procédé selon la revendication 7, dans lequel ladite membrane humide est mise en contact avec un liquide soluble dans ledit solvant.

**10.** Procédé selon la revendication 9, dans lequel ledit liquide est soit une solution aqueuse contenant ledit solvant, soit de l'eau.

**11.** Procédé selon la revendication 9, dans lequel le temps de mise en contact de ladite membrane humide avec ledit liquide est inférieur ou égal à 10 minutes.

**12.** Procédé selon la revendication 10, dans lequel une partie dudit solvant est évaporée de ladite membrane de moulage avant ladite étape de mise en contact du liquide.

**13.** Procédé selon la revendication 1, dans lequel ledit solvant est un mélange d'un composé bon solvant qui est un bon solvant pour ledit électrolyte solide et d'un composé mauvais solvant qui est un mauvais solvant pour ledit électrolyte solide, et ledit liquide de contact est de l'eau purifiée.

**14.** Procédé selon la revendication 13, dans lequel ladite membrane de moulage contient moins de composé bon solvant après le contact avec ladite eau purifiée qu'avant ledit contact.

**15.** Procédé selon la revendication 13, dans lequel ladite eau purifiée est mise en contact avec ladite membrane de moulage au moins par aspersion de ladite eau purifiée ou par recouvrement de ladite eau purifiée sur ladite membrane

de moulage.

16. Procédé selon la revendication 13, dans lequel au moins ladite membrane de moulage après contact avec ladite eau purifiée ou ladite membrane humide est mise en contact avec un liquide qui est soluble dans ledit composé bon solvant ainsi que dans ledit composé mauvais solvant.

17. Procédé selon la revendication 16, dans lequel ledit liquide est soit un mélange d'eau et dudit composé bon solvant, soit un mélange d'eau et dudit composé mauvais solvant.

18. Procédé selon la revendication 17, dans lequel la somme du temps de mise en contact de ladite membrane de moulage avec ladite eau purifiée et du temps de mise en contact d'au moins ladite membrane de moulage ou ladite membrane humide avec ledit liquide est inférieure ou égale à 10 minutes.

19. Procédé selon la revendication 1, dans lequel l'autre surface de ladite membrane humide est mise en contact avec une solution protonique à faible concentration présentant une concentration en protons inférieure à celle de ladite solution protonique, qui présente une concentration en protons supérieure ou égale à 0,05 mole par litre.

20. Procédé selon la revendication 1, dans lequel la masse formulaire de l'anion contenu dans ladite solution protonique est supérieure ou égale à 40 et inférieure ou égale à 1000.

21. Procédé selon la revendication 19, dans lequel ladite solution protonique à faible concentration est soit un liquide contenant un anion ayant une masse formulaire supérieure ou égale à 40 et inférieure ou égale à 1000, soit de l'eau.

22. Procédé selon la revendication 1, dans lequel la température de ladite membrane humide au moment du contact avec ladite solution protonique ou avec ladite solution protonique à faible concentration est supérieure ou égale à 30 °C et inférieure ou égale à la température de transition vitreuse dudit précurseur.

23. Procédé selon la revendication 1, dans lequel la température d'au moins ladite solution protonique ou de ladite solution protonique à faible concentration est supérieure ou égale à 30 °C et inférieure ou égale à la température de transition vitreuse dudit précurseur.

24. Procédé selon la revendication 1, dans lequel ladite étape de substitution protonique et ladite étape de lavage et séchage sont mises en oeuvre successivement.

25. Procédé selon la revendication 1, dans lequel ledit composé bon solvant contient du diméthylsulfoxyde, et ledit composé mauvais solvant contient un alcool comportant de un à cinq atomes de carbone.

26. Procédé selon la revendication 1, dans lequel ledit électrolyte solide est un hydrocarbure polymère.

27. Procédé selon la revendication 26, dans lequel ledit hydrocarbure polymère est un polymère aromatique comportant un groupe acide sulfonique.

28. Procédé selon la revendication 27, dans lequel ledit polymère aromatique est un copolymère formé d'unités structurelles représentées par les formules générales (I), (II) et (III) de la formule chimique 1.

[Formule chimique 1]

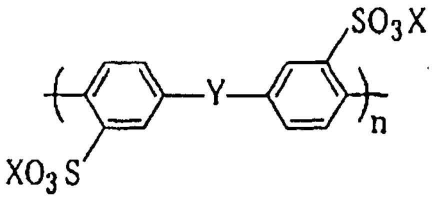

··· ( I )

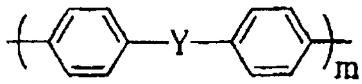

··· ( II )

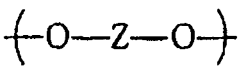

··· ( III )

(X est une espèce cationique, Y est $SO_2$, Z présente une structure représentée par (I) ou (II) dans la formule chimique 2, et n et m répondent à l'expression $0,1 < n/(m+n) < 0,5$)

[Formule chimique 2]

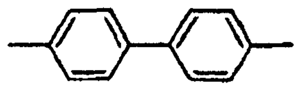

··· ( I )

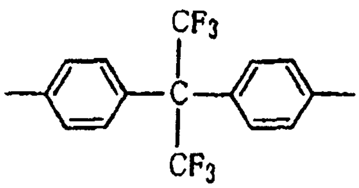

··· ( II )

**29.** Appareil de production d'une membrane d'électrolyte solide, **caractérisé en ce que** l'appareil comprend :

un dispositif de moulage pour couler un produit dopant contenant un électrolyte solide et un solvant sur un support afin de former une membrane de moulage, dans lequel le solvant est sélectionné parmi un hydrocarbure aromatique, un hydrocarbure halogéné, un alcool, une cétone, un ester, un éther et des composés azotés ;
un dispositif de pelage pour peler ladite membrane de moulage dudit support sous forme d'une membrane humide ;
un dispositif de mise en contact d'un liquide de contact pour mettre en contact au moins ladite membrane de moulage ou ladite membrane humide avec un liquide de contact, ledit liquide de contact contenant un liquide soluble dans ledit solvant ou un liquide qui est un mauvais solvant pour ledit électrolyte solide ;
un dispositif de séchage pour sécher ladite membrane humide ;
un dispositif de mise en contact d'une solution protonique pour mettre en contact une surface de ladite membrane humide comprenant un polymère qui est un précurseur dudit électrolyte solide avec une solution protonique contenant un acide qui est un donneur de proton, ladite solution protonique présentant une concentration en protons supérieure ou égale à 0,05 mole par litre ;
un dispositif de lavage pour laver ladite membrane humide après la mise en contact avec ladite solution protonique ; et
un dispositif de séchage après lavage pour sécher ladite membrane humide après le lavage ;
comprenant en outre un dispositif de contrôle de température pour contrôler la température de ladite solution protonique ou la température d'une surface de ladite membrane humide.

**30.** Appareil selon la revendication 29, dans lequel ledit dispositif de mise en contact de la solution protonique comprend

un dispositif de mise en contact de la solution protonique à faible concentration pour mettre en contact l'autre surface de ladite membrane humide avec une solution protonique à faible concentration présentant une concentration en protons inférieure à celle de ladite solution protonique, qui présente une concentration en protons supérieure ou égale à 0,05 mole par litre, et ledit dispositif de contrôle de température comprend un autre dispositif de contrôle de température pour contrôler la température de ladite solution protonique à faible concentration ou la température de ladite autre surface de ladite membrane humide.

FIG.1

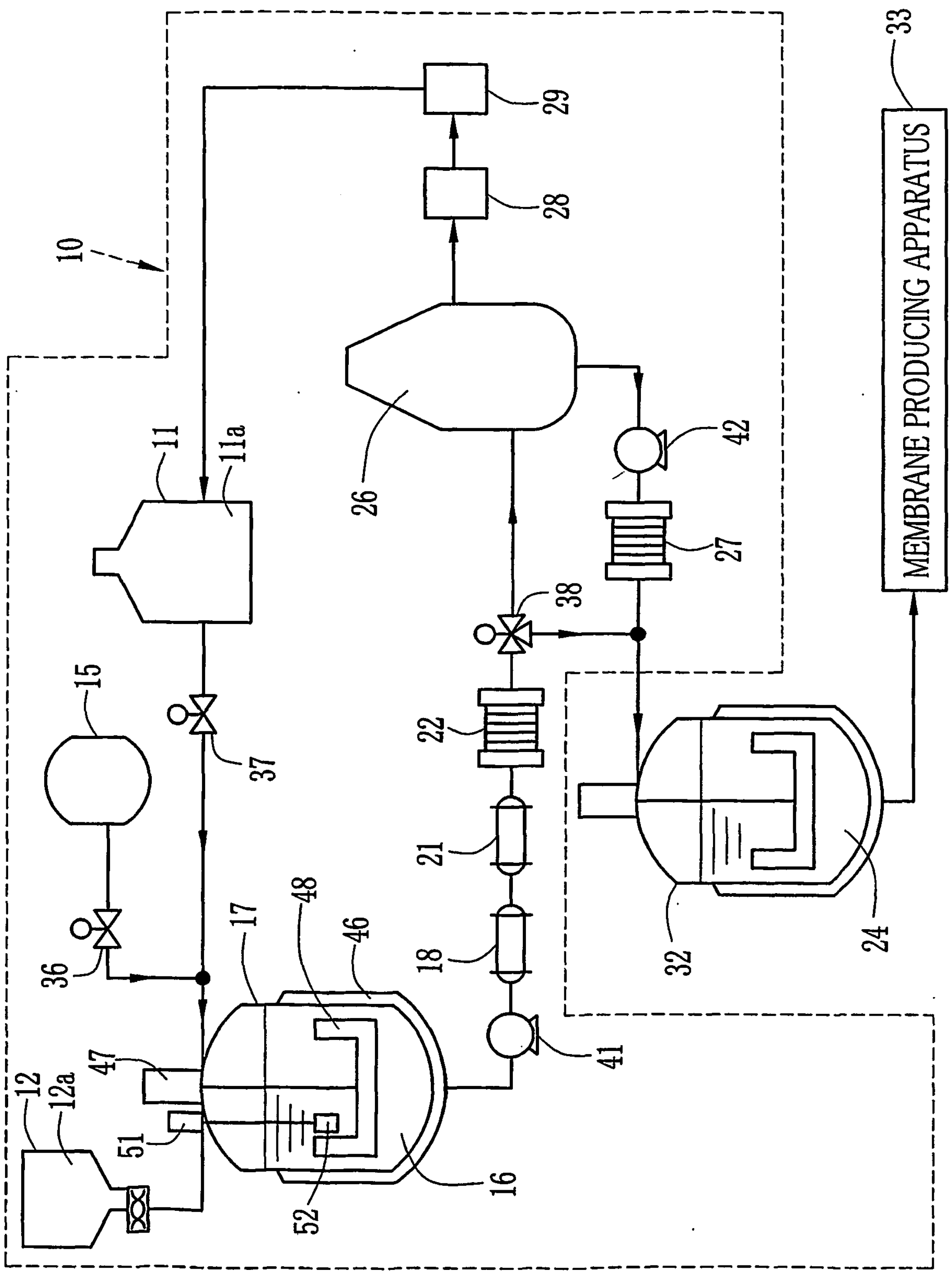

10
11
11a
12
12a
15
16
17
18
21
22
24
26
27
28
29
32
33
36
37
38
41
42
46
47
48
51
52
MEMBRANE PRODUCING APPARATUS

FIG.2

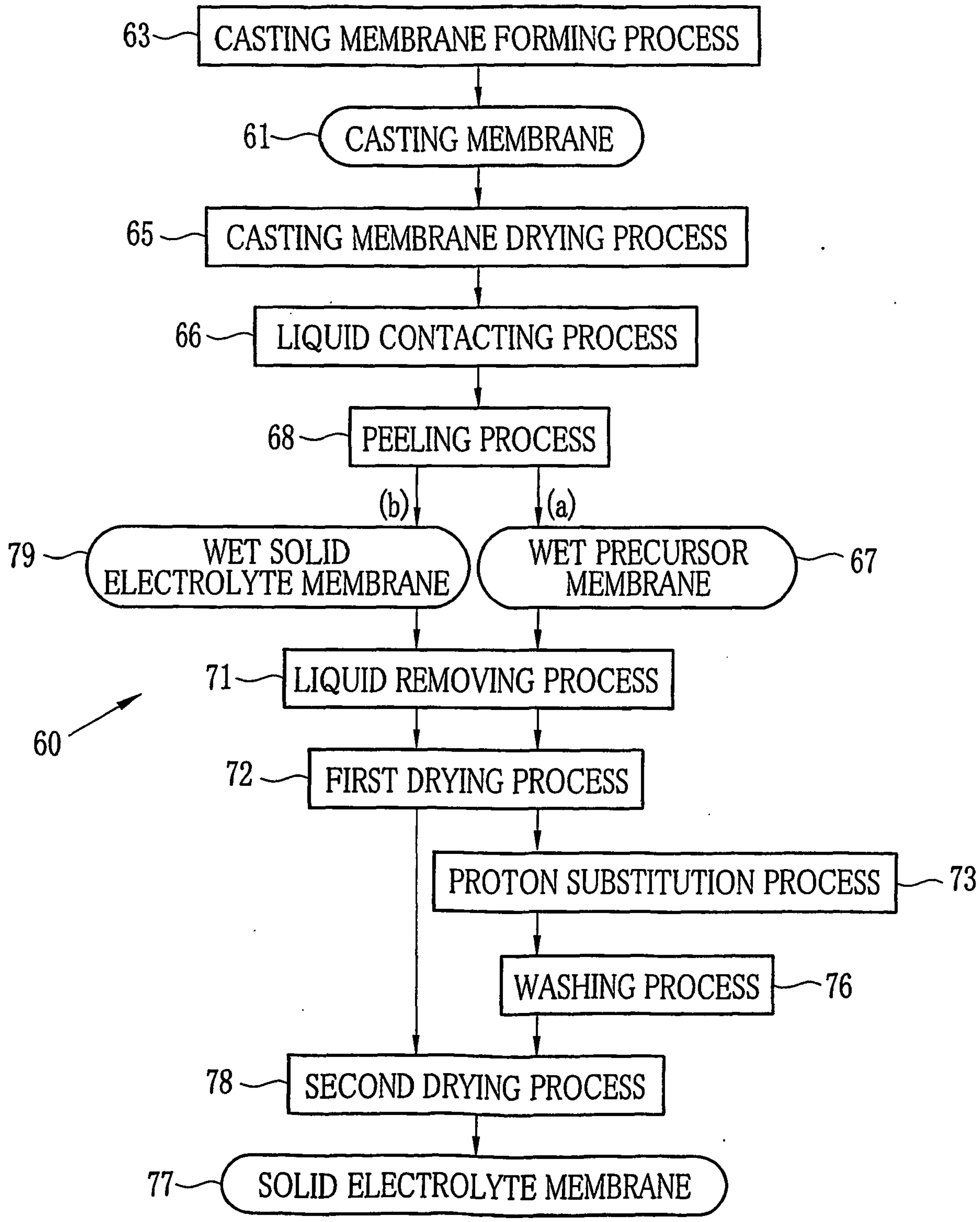

63 CASTING MEMBRANE FORMING PROCESS
61 CASTING MEMBRANE
65 CASTING MEMBRANE DRYING PROCESS
66 LIQUID CONTACTING PROCESS
68 PEELING PROCESS
(b)
(a)
79 WET SOLID ELECTROLYTE MEMBRANE
WET PRECURSOR MEMBRANE 67
71 LIQUID REMOVING PROCESS
60
72 FIRST DRYING PROCESS
PROTON SUBSTITUTION PROCESS 73
WASHING PROCESS 76
78 SECOND DRYING PROCESS
77 SOLID ELECTROLYTE MEMBRANE

FIG.3

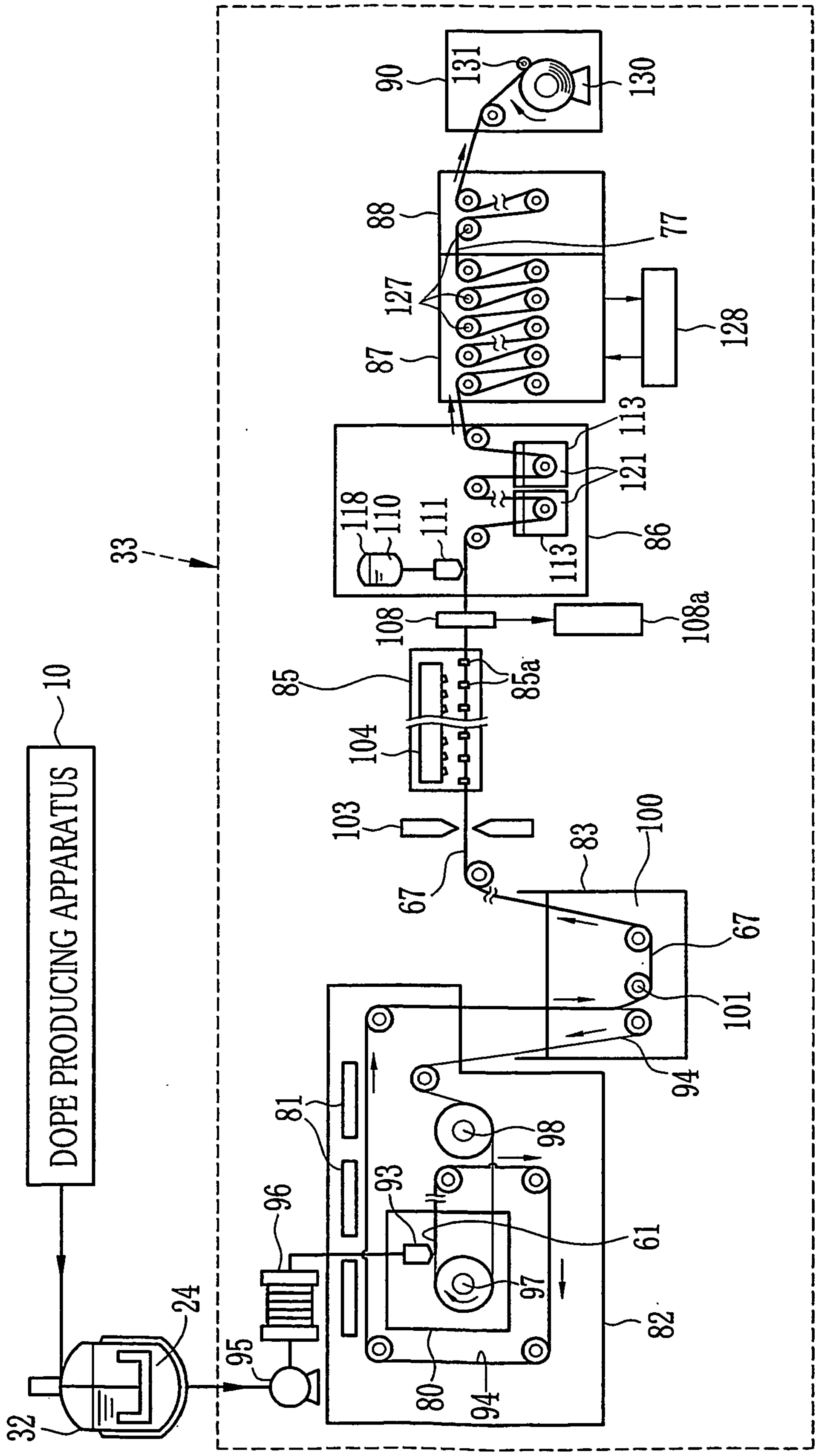
DOPE PRODUCING APPARATUS
10
24
32
33
61
67
77
80
81
82
83
85
85a
86
87
88
90
93
94
95
96
97
98
100
101
103
104
108
108a
110
111
113
118
121
127
128
130
131

FIG.4

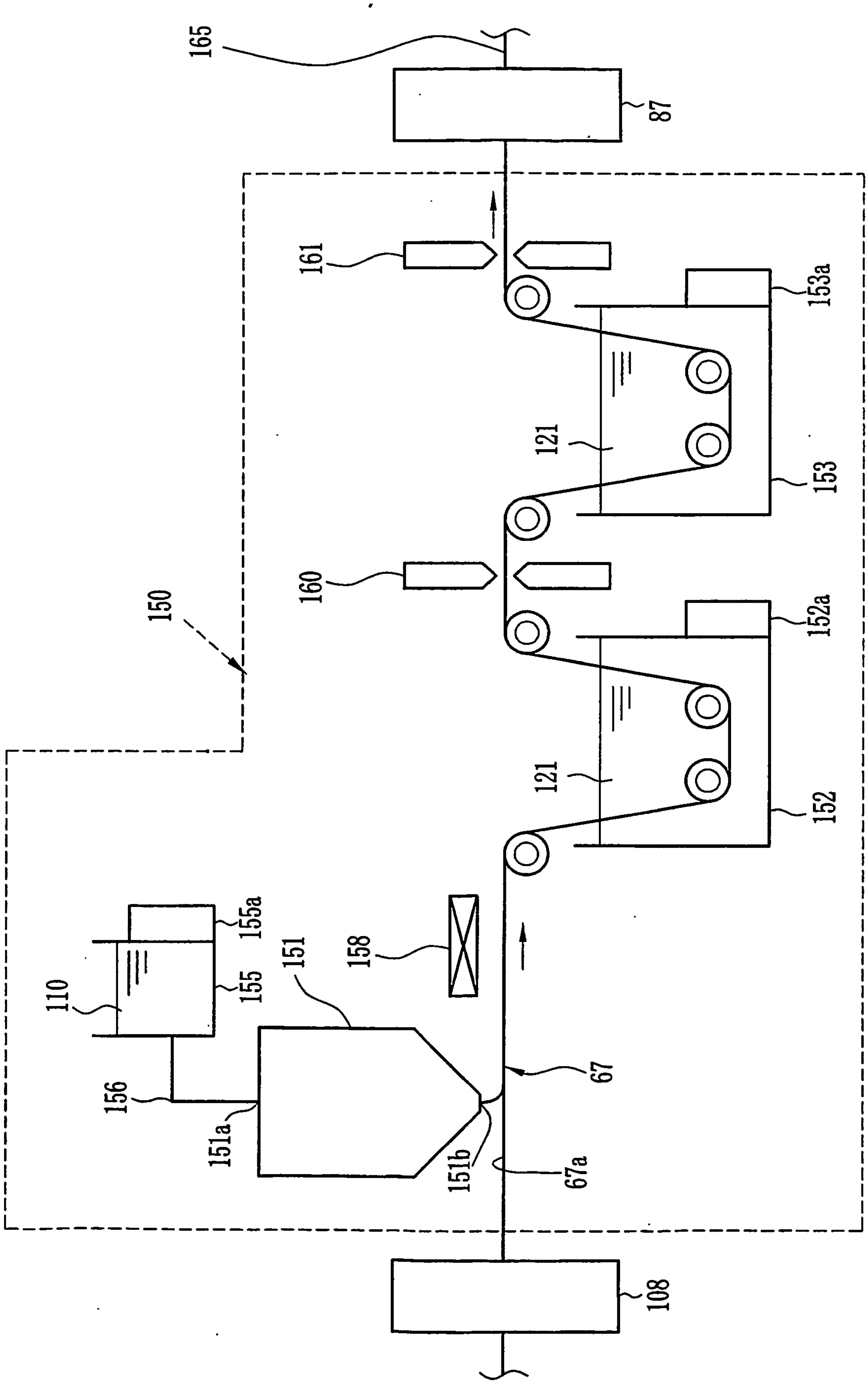
165
87
161
153a
121
153
160
150
152a
121
152
155a
151
158
110
155
156
151a
151b
67
67a
108

FIG.5

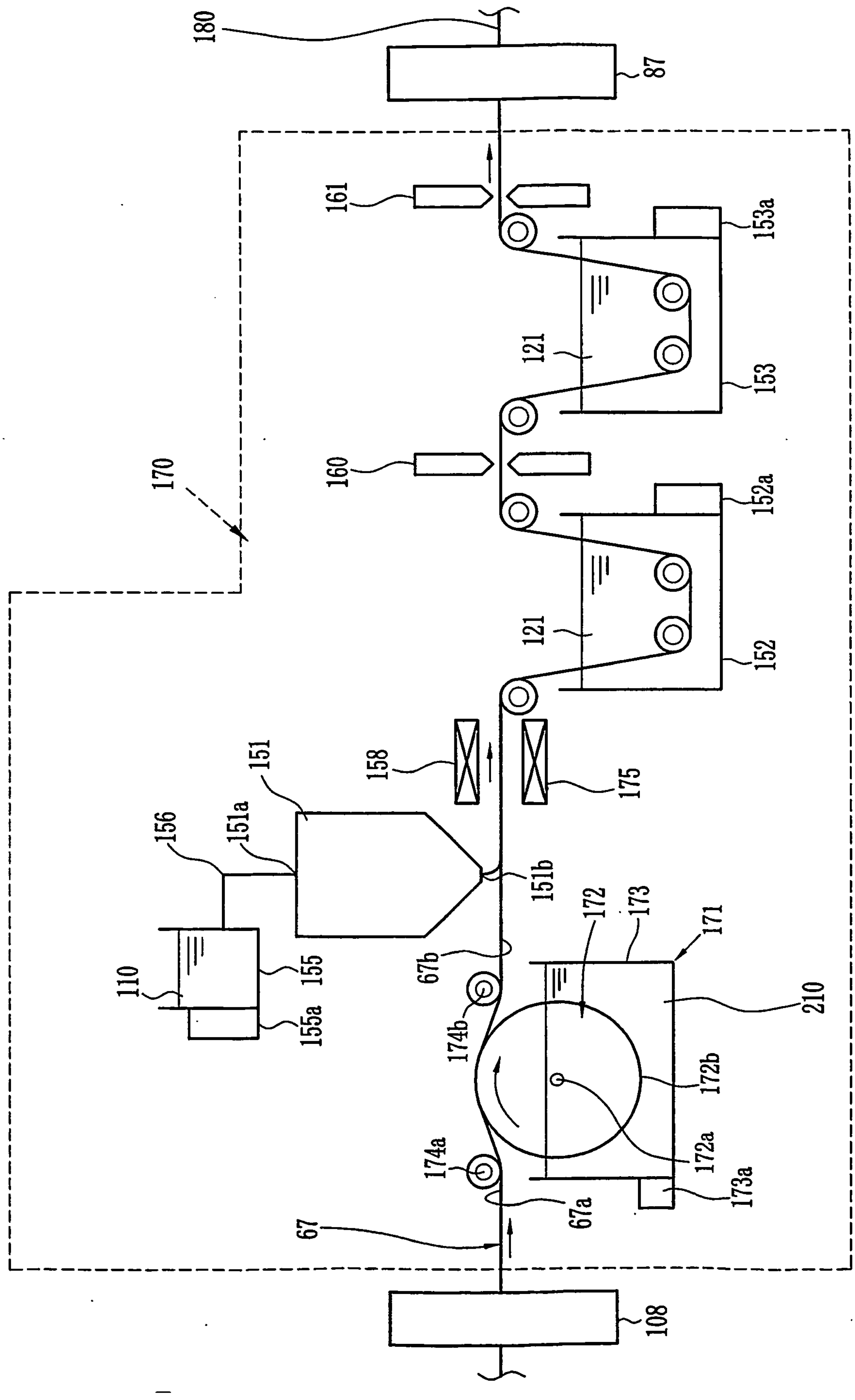
180
87
170
161
153a
121
153
160
152a
121
152
158
175
151
156
151a
151b
172
173
171
110
155
155a
67b
210
174b
172b
172a
174a
173a
67
67a
108

FIG.6

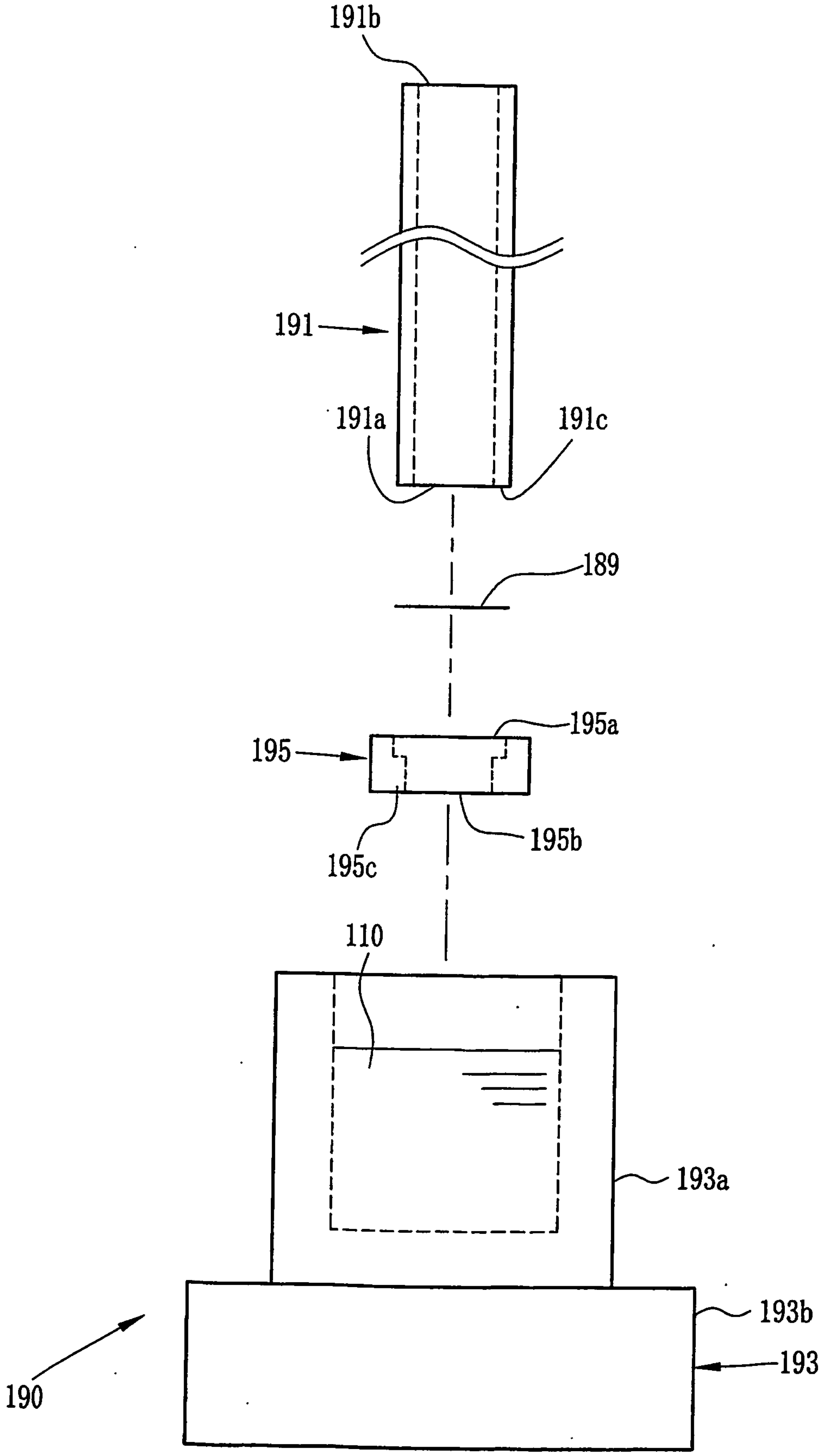
191b
191
191a
191c
189
195
195a
195c
195b
110
193a
193b
193
190

FIG.7

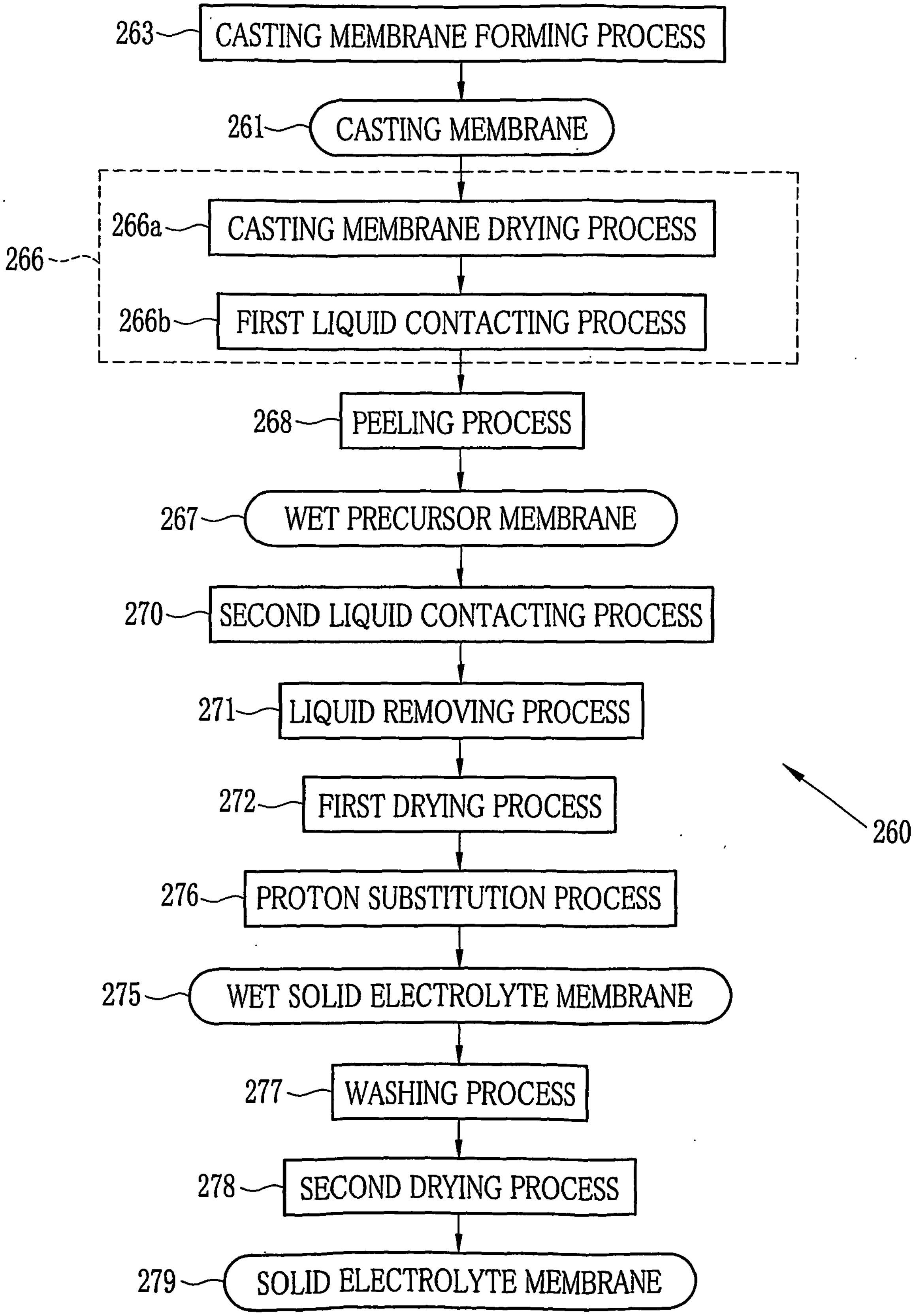
263 CASTING MEMBRANE FORMING PROCESS
261 CASTING MEMBRANE
266
266a CASTING MEMBRANE DRYING PROCESS
266b FIRST LIQUID CONTACTING PROCESS
268 PEELING PROCESS
267 WET PRECURSOR MEMBRANE
270 SECOND LIQUID CONTACTING PROCESS
271 LIQUID REMOVING PROCESS
272 FIRST DRYING PROCESS
276 PROTON SUBSTITUTION PROCESS
275 WET SOLID ELECTROLYTE MEMBRANE
277 WASHING PROCESS
278 SECOND DRYING PROCESS
279 SOLID ELECTROLYTE MEMBRANE
260

FIG.8

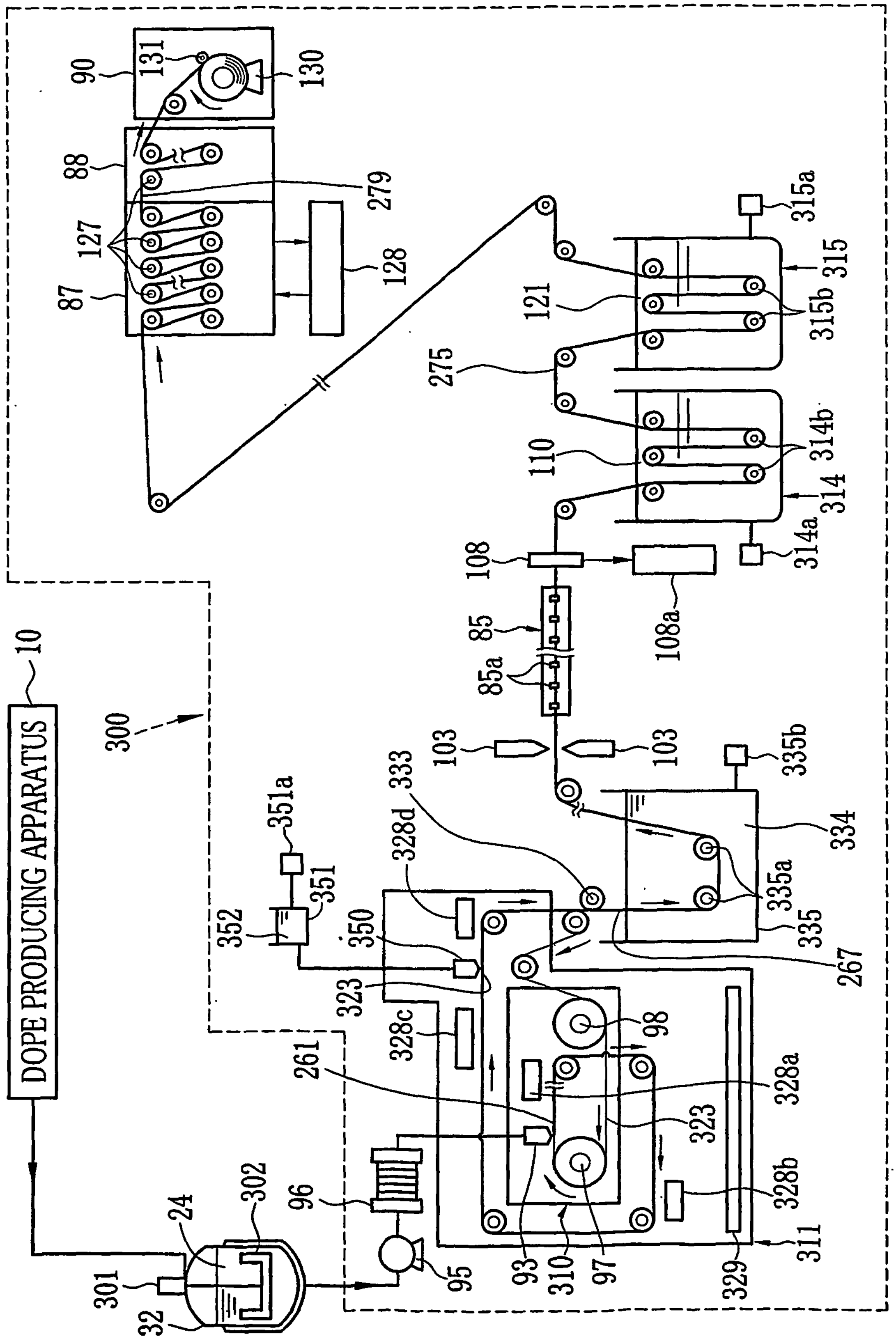
DOPE PRODUCING APPARATUS
10
300
301
24
302
32
95
96
93
310
97
98
261
323
328a
328b
328c
328d
329
311
350
351
351a
352
333
267
334
335
335a
335b
103
85
85a
108
108a
314
314a
314b
110
275
121
315
315a
315b
87
88
90
127
128
130
131
279

FIG.9

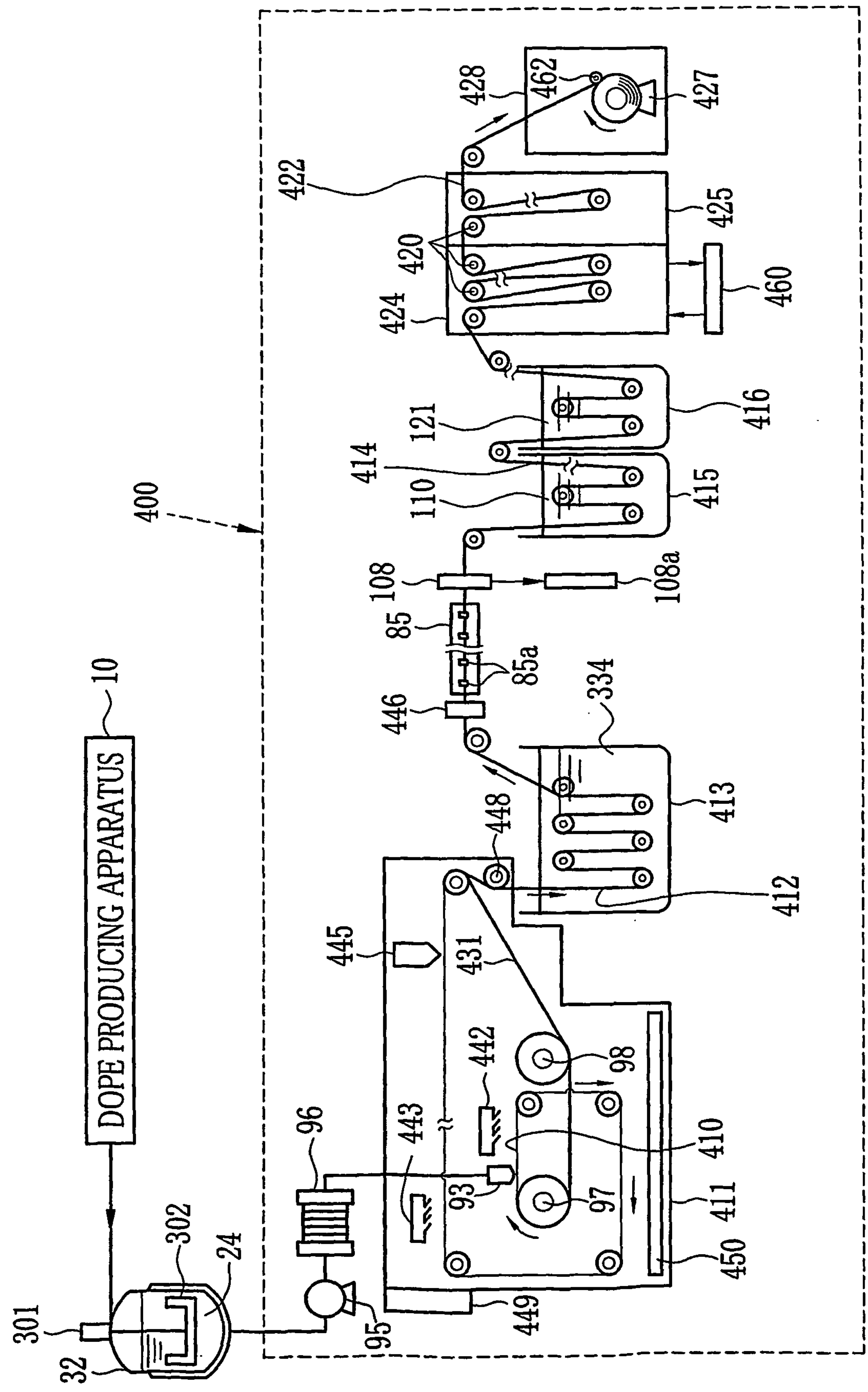
DOPE PRODUCING APPARATUS
10
400
301
302
24
32
95
96
93
97
98
443
442
445
431
448
449
450
411
410
412
413
334
446
85
85a
108
108a
110
414
121
415
416
424
420
422
425
460
428
462
427

FIG.10

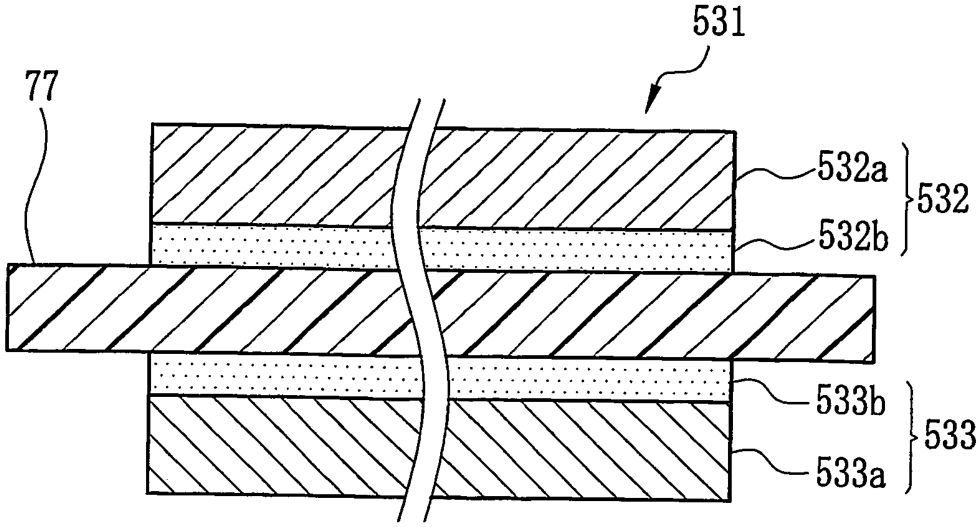

531
77
532a
532
532b
533b
533
533a


FIG.11

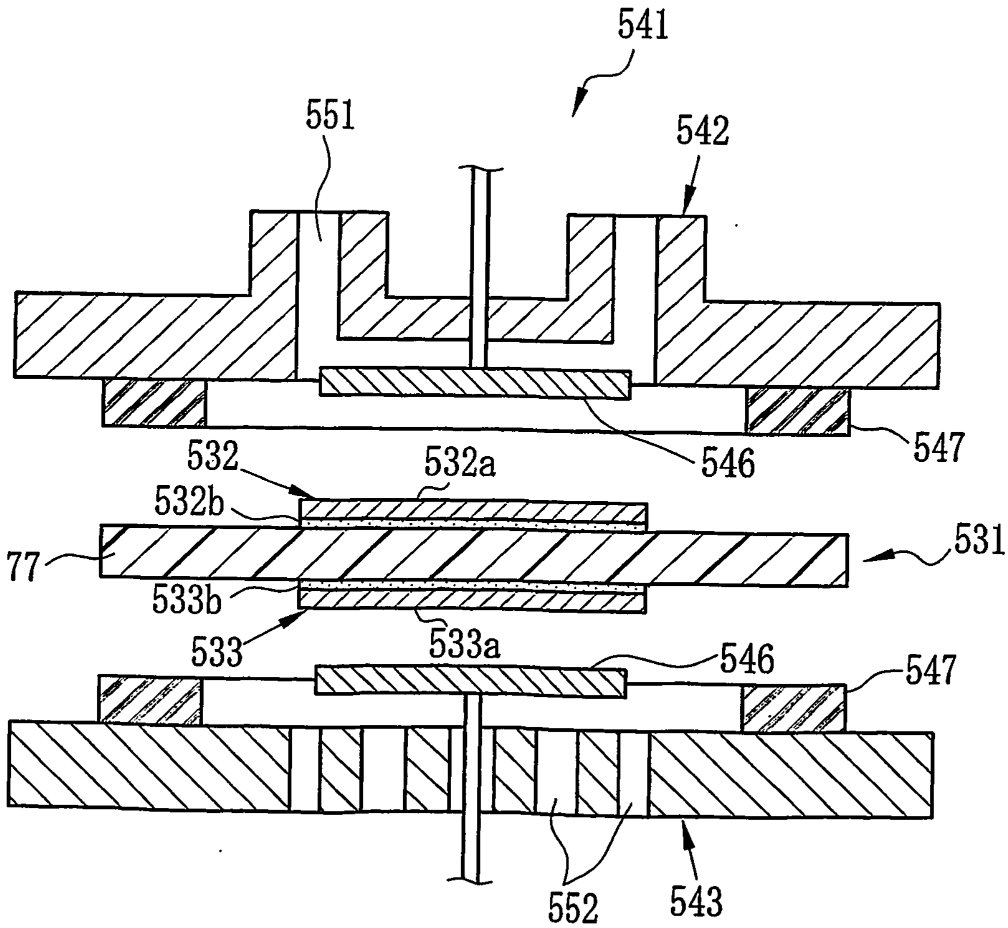

541
551
542
546
547
532
532a
532b
77
531
533b
533
533a
546
547
552
543

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005232240 A
- JP 2005235466 A
- JP 2005248128 A
- JP 2005310643 A
- JP 2004079378 A
- JP 2005146018 A
- JP 2005239833 A
- JP 2005268144 A
- JP 2005268145 A
- JP 2005041956 A
- WO 2007007824 A
- JP 4366137 A
- JP 6231779 A
- JP 6342665 A
- JP 5174856 A
- JP 6111834 A
- JP 6049302 A
- JP 2004010677 A
- JP 2004345997 A
- JP 2005015541 A
- JP 2002110174 A
- JP 2003100317 A
- JP 2003055457 A
- JP 9245818 A
- JP 2003257451 A
- JP 2002105200 A
- WO 9742253 A
- JP 2000510511 A
- JP 2005104148 A
- JP 8053614 A
- JP 10101873 A
- JP 11114430 A
- JP 2003151346 A
- JP 10312815 A
- JP 2000231938 A
- JP 2001307545 A
- JP 2003317748 A
- JP 2004063430 A
- JP 2004107461 A
- JP 2003178777 A
- JP 2004217931 A
- JP 7135003 A
- JP 8020716 A
- JP 9251857 A
- JP 2003288916 A
- JP 2003317539 A


### Non-patent literature cited in the description


- *Journal of Applied Polymer Science,* 1988, vol. 36, 1753-1767
- All about coating. Kako Gijutsu Kenkyukai, 1999
- Modern Coating and Drying Technology. VCH Publishers, Inc, 1992
- Shinpan Yozai Pokettobukku. Ohmsha, 1994
- *Journal of the Electrochemical Society,* 1996, vol. 143 (4), 1254-1259